# EUROPÄISCHE PATENTANMELDUNG

(11) **EP 4 711 594 A2**
(43) Veröffentlichungstag der Anmeldung: **18.03.2026**
(21) Anmeldenummer: 26154516.4
(22) Anmeldetag: 13.07.2017
(51) Int. Cl.: F01P 3/10

(54) **WÄRMEMANAGEMENTSYSTEM UND WÄRMEMANAGEMENTVERFAHREN EINES VERBRENNUNGSMOTORS**

(30) Priorität: 20.07.2016 DE 102016113394
(62) Teilanmeldung aus: 17739966.4
(71) Anmelder: Ino8 Pty Ltd, Newtown 3220 (AU)
(72) Erfinder: WILL, Frank, Jan Juc Victoria, 3228 (AU)
(74) Vertreter: Molnia Ho PartG mbB

(57) **Zusammenfassung**

Die vorliegende Erfindung betrifft ein Wärmemanagementverfahren zum Betrieb eines Wärmemanagementsystems 100, 102, 104 eines Verbrennungsmotors 10 umfassend zumindest eine zumindest teilweise in einem Zylinderblock 90 und zumindest eine zumindest teilweise in einem Zylinderkopf 74 des Verbrennungsmotors 10 angeordnete Fluidkammer 12 mit zumindest einer Einlassleitung 14 und zumindest einer Auslassleitung 16, wobei die Fluidkammer 12 mit zumindest einer Kühlmittelfördereinrichtung 20 zur Förderung eines flüssigen Kühlmittels und mit zumindest einer Wärmesenke verbunden ist, wobei ein durch die Fluidkammer 12 und durch die Wärmesenke geförderte Kühlmittelvolumenstrom unabhängig von einer Motordrehzahl durch eine Drosseleinrichtung veränderbar ist, wobei die Drosseleinrichtung aus zumindest einem ersten Ventil 18 besteht, wobei das erste Ventil 18 mit einer Laststelleinheit 26 zur Einstellung der Motorlast angesprochen wird, wobei ein Fluidkammertemperatursensor 58 umfasst ist, wobei der Kühlmittelvolumenstrom durch die Fluidkammer 12 und durch die Wärmesenke in Abhängigkeit der Motordrehzahl, einer Fluidkammertemperatur und einer Motorlast durch Betätigung zumindest des ersten Ventils 18 zur Steuerung des Kühlmittelvolumenstroms durch die Fluidkammer 12 und durch die Wärmesenke, steuerbar ist, wobei bei steigender Temperatur der Fluidkammer 12, insbesondere nach einer Aufwärmphase bei gleichbleibender oder sinkender Motordrehzahl, der Kühlmittelvolumenstrom durch die Fluidkammer 12 und durch die Wärmesenke zumindest zeitweise erhöht wird, dadurch gekennzeichnet, dass bei gleichbleibender oder um maximal 100 Umdrehungen pro Minute steigender Motordrehzahl und bei Reduzierung der Motorlast, der Kühlmittelvolumenstrom durch die Fluidkammer 12 und durch die Wärmesenke im Zylinderbereich innerhalb einer Minute zumindest gleich hoch wie eine Minute zuvor, bevor die Last reduziert wurde, und insbesondere innerhalb eines Temperaturbereichs der Fluidkammer 12 von 60° C bis 100° C, bleibt, wobei die Fluidkammer 12 in einen oberen Fluidkammerbereich 12a und einen unteren Fluidkammerbereich 12b aufgeteilt ist, wobei die Fluidkammerbereiche baulich getrennt selektiv oder gemeinsam von dem Kühlmittel durchströmt werden können

## Beschreibung

Die Erfindung betrifft ein Wärmemanagementsystem und ein Wärmemanagementverfahren eines Verbrennungsmotors, insbesondere zum Antrieb eines Kraftfahrzeuges, nach den unabhängigen Ansprüchen.

### STAND DER TECHNIK

Aus dem Stand der Technik ist eine zyklische Erwärmung und Kühlung von Verbrennungsmotoren insbesondere im Bereich von Kraftfahrzeugen, bevorzugt von PKWs bekannt. Das Kühlsystem herkömmlicher Verbrennungsmotoren ist über ein Thermostat geregelt, so dass die Kühlleistung bei Überschreitung einer Grenztemperatur erhöht wird, um eine mögliche Bauteilüberhitzung bzw. ein Verdampfen des Kühlmittels zu vermeiden und Stickstoffoxidemissionen (NOx) zu minimieren und bei Unterschreiten einer weiteren niedrigeren Grenztemperatur reduziert wird, um Reibung, Kraftstoffverbrauch und Verschleiß zu minimieren. Das hat den Nachteil, dass bei niedrigen Motorlasten Teile des Motors zu stark gekühlt werden und bei hohen Motorlasten andere Teile des Motors zu wenig gekühlt werden.

Eine Motorlast ist das Verhältnis von aktuellem Drehmoment zu max. Drehmoment bei derselben Drehzahl, wobei die jeweiligen Drehmomente jedoch von anderen Faktoren beeinflusst werden können. Analog kann das Drehmoment, oder eben der Unterdruck im Ansaugrohr (bei Benziner), bzw. die Druckdifferenz zwischen dem Unterdruck im Ansaugrohr und dem Umgebungsdruck betrachtet werden.

In jüngster Zeit häufen sich Berichte bei denen Stickstoffoxid Emissionen (NOx) im realen Fahrbetrieb deutlich höher sind als in genormten Zertifizierungstesten. Laut Bericht des Bundesministeriums für Verkehr und digitale Infrastruktur, in dem Testergebnisse von 52 Diesel-Pkw veröffentlicht wurden, liegt das daran, dass viele Fahrzeughersteller die Wirksamkeit ihres Emissionskontrollsystems an Fahr- und Umweltbedingungen anpassen, was einer Abschalteinrichtung entsprechen kann. Die Hersteller begründen die Zulässigkeit hauptsächlich mit Maßnahmen zum Motorschutz oder zum sicheren Betrieb des Fahrzeugs. Das Interessante an dem Bericht ist, dass die NOx-Emissionen im Durchschnitt aller Fahrzeuge das 2,6-fache der Zertifizierungsergebnisse betrugen, wenn der gleiche Zertifizierungstestzyklus mit betriebswarmen Motor gestartet wurde anstatt mit kaltem Motor. Selbst in der Gruppe der Fahrzeuge mit unauffälligem Abgasverhalten beträgt dieser Unterschied im Schnitt das 2,2 fache. Da im Kaltstart die Einrichtungen zur Reduzierung der Abgasemissionen erst noch auf die optimale Betriebstemperatur gebracht werden müssen, würde man eigentlich das Gegenteil erwarten, wie bei Benzinmotoren üblich. Dieses erwartete Verhalten, dass die NOx Emissionen im Test mit Warmstart niedriger waren als mit Kaltstart, war allerdings nur bei 4 der 27 Fahrzeuge dieser Gruppe zu beobachten und bei nur 5 Fahrzeugen der gesamten Gruppe der 52 getesteten Fahrzeuge. Einer der wesentlichen Gründe für die höheren NOx Emissionen im Warmstart sind die deutlich höhere Motortemperaturen, die in den Prüfzyklen insbesondere durch Kühlmittelthermostate absichtlich hoch geregelt werden.

Untersuchungen von Kleinschmidt, W., Hebel, D.: "Instationäre Wärmeübertragung in Verbrennungsmotoren - Theorie, Simulation und Vergleich mit Testergebnissen", Abschussbericht KI600/1-2, Deutsche Forschungsgemeinschaft, 1995, haben gezeigt, dass bei niedrigen Motorlasten bis ca. 50% der Volllast eine Erhöhung der Brennraumtemperatur, z.B. durch Isolation des Kolbens, der Kraftstoffverbrauch um ca. 5% reduziert werden kann, wobei dieselbe Isolationsmaßnahme bei höheren Motorlasten zu deutlich höherem Kraftstoffverbrauch und reduzierter Leistung führen würde. Daher sind Maßnahmen sinnvoll, die die Kühlleistung abhängig von der Motorlast regeln und nicht temperaturabhängig durch ein Thermostat regeln.

NOx-Emissionen entstehen im Wesentlichen bei den höchsten Temperaturen im Brennraum, üblicherweise bis spätestens 20 Grad Kurbelwinkel noch dem oberen Totpunkt des Kolbens im Zylinder. In diesem Zeitfenster kurz nach dem oberen Totpunkt wird die Oberfläche des Brennraums zum größten Teil von Zylinderkopf und Kolben gebildet, der Einfluss der Zylinderoberfläche ist während diesem Zeitfenster vernachlässigbar gering. Eine Erhöhung der maximalen Temperatur des Zylinderkopfes führt bekanntlich zu erhöhten NOx Emissionen. Kühlmittelthermostate, insbesondere elektronische geregelte, reduzieren den Volumenstrom des Kühlmittels durch den Kühler, wenn die Kühlmitteltemperatur unterhalb eines Grenzwertes, typischerweise zwischen 80 und 110°C liegt. Das dient dazu den Motor nach einem Kaltstart schneller aufzuwärmen um den Kraftstoffverbrauch zu reduzieren, den Innenraum schneller aufheizen zu können, sowie die Kondensation von Wasser im Kurbelgehäuse zu minimieren um den Verschleiß zu reduzieren. Dadurch wird allerdings auch die Temperatur des Zylinderkopfes erhöht, was in der Regel zur Erhöhung der NOx Emissionen führt, insbesondere bei betriebswarmen Motor im Stop-and-Go Stadtverkehr mit häufigen kurzen Beschleunigungsphasen, bei einem Warmstart, z.B. nach Abschalten des Motors vor einer Ampel oder bei modernen Fahrzeugen mit Start-Stopp Systemen, sowie bei längerem Autobahnbetrieb, alles normale Fahrbetriebe, die in dem gesetzlichen Prüfverfahren nicht vorkommen.

In der gattungsbildenden DE 10 2013 205 124 A1 ist ein Wärmemanagementverfahren zum Betrieb eines Wärmemanagementsystems eines Verbrennungsmotors in einer Kaltstartphase beschrieben, bei dem zumindest eine im Zylinderkopf des Verbrennungsmotors angeordnete Fluidkammer mit einer Ein- und einer Auslassleitung vorgesehen ist. Durch eine Kühlmittelfördereinrichtung, die eine Wasserpumpe ist, ist die Fluidkammer mit einem Kühler als Wärmesenke verbunden. Es ist ein Bypass-Kühlmittelkreislauf vorgesehen, so dass bei Motorkaltlauf zur Beschleunigung einer Motorerwärmung ein reduzierter Kühlmittelstrom bereitgestellt wird. Folglich wird dort ein Wärmemanagementverfahren zum Betrieb eines Wärmemanagementsystems eines Verbrennungsmotors in einer Kaltstartphase dargestellt, wobei eine übliches Kühlsystem, einen Motorblock ganzheitlich temperiert. Dabei ist ein Bypasssystem vorgesehen, um eine kleine Menge Kühlmittel im Motorblock im Kaltstart zu belassen, um so ein Aufheizen zu beschleunigen. Weiterhin wird gelehrt, dass bei höherer Motordrehzahl ein Pumpendruck erhöht wird, der allerdings zu einer gleichmäßigen Erhöhung des Kühlstroms im gesamten Kühlsystem, d.h. im Motorblock und in den Zylinderköpfen führt. An keiner Stelle wird von einer separaten Kühlung von Zylinderköpfen gesprochen, auch wird keine eigenständige durchströmbare Fluidkammer im Zylinderkopf oder unterhalb eines Zylinderkolbens vorgeschlagen, deren Kühlmittelstrom dynamisch und unabhängig eines sonstigen Kühlsystems im Motorblock in Abhängigkeit der Motordrehzahl und der Motorlast erhöht oder reduziert wird,

Die DE 100 45 613 A1 betrifft ein Wärmemanagementverfahren einer Motorkühlung, wobei eine Kühlmitteltemperatur in Abhängigkeit einer Last und/oder einer Drehzahl geregelt wird.

Durch die DE 10 2014 015 638 A1 wird ein Verfahren zur Steuerung einer Kühlmittelpumpe oder eines Stellventils eines Kühlsystems eines Verbrennungsmotors eines Kraftfahrzeuges gelehrt, die von einer Motorlast oder einer Temperaturdifferenz eines Wärmetauschers des Kühlsystems abhängt.

Daneben betrifft die DE 10 2013 016 961 A1 ein Kühlmittel-Steuerverfahren für einen Verbrennungsmotor, bei dem eine Zuführung von Kühlflüssigkeit in einen Kühlmittelraum nach einem Motorstart solange unterbleibt, bis einem Motorbetriebspunkt oder eine Motortemperatur erreicht wird.

Ein gattungsgemäßes Kühlverfahren ist daneben in der DE 101 55 339 A1 genannt.

Ausgehend vom Stand der Technik wird angestrebt, die Abgasemissionen, insbesondere NOx-Emissionen, und gleichzeitig den Kraftstoffverbrauch nachhaltig bei Alltagsnutzung von Verbrennungsmotoren zu reduzieren, ohne unerlaubte Abschalteinrichtungen zu verwenden.

Die Verbesserung des Abgasverhaltens einer Verbrennungskraftmaschine wird durch ein Wärmemanagementverfahren und eine Wärmemanagementvorrichtung nach den unabhängigen Ansprüchen erreicht. Vorteilhafte Ausbildungen der Erfindung sind Gegenstand der Unteransprüche.

### OFFENBARUNG DER ERFINDUNG

Erfindungsgemäß wird ein Wärmemanagementverfahren zum Betrieb eines Wärmemanagementsystems eines Verbrennungsmotors umfassend zumindest eine zumindest teilweise in oder um einen Zylinderkopf, oder unterhalb eines Zylinderkolbens eines Zylinders des Verbrennungsmotors angeordnete Fluidkammer mit zumindest einer Einlassleitung und zumindest einer Auslassleitung, wobei die Fluidkammer mit zumindest einer Kühlmittelfördereinrichtung zur Förderung eines Kühlmittels und mit zumindest einer Wärmesenke verbunden ist, wobei die Wärmesenke insbesondere Umgebungsluft oder ein Kühler ist.

Es wird vorgeschlagen, dass bei steigender Temperatur der Fluidkammer, insbesondere nach einer Aufwärmphase bei gleichbleibender oder sinkender Motordrehzahl, der Volumenstrom des Kühlmittels durch die Wärmesenke zumindest zeitweise erhöht wird, und bei gleichbleibender oder um maximal 100 Umdrehungen pro Minute steigender Motordrehzahl und bei Reduzierung der Motorlast um insbesondere zumindest 30% der Volumenstrom des Kühlmittels durch die Wärmesenke nicht reduziert wird, insbesondere nach zumindest einer Minute nach der Laständerung nicht reduziert wird, und insbesondere innerhalb eines absoluten Temperaturbereichs der Fluidkammer von 60°C bis 100°C nicht reduziert wird.

Durch die vorgeschlagene dynamische Kühlleistungsregelung in Abhängigkeit der Motorlast, Motordrehzahl und einer aktuellen Fluidkammertemperatur kann effektiv die Bildung schädlicher Abgase verringert werden. Durch gezielte Kühlleistungsänderungen und kontrollierte und selektive Temperaturregelung, teilweise in Abhängigkeit des Motorzustandes wie Kaltstart, Warmphase, in Abhängigkeit des Kurbelwinkels kann eine deutliche Reduzierung des Schadstoffausstoßes erreicht werden. Temperaturspitzen können vermieden werden, insbesondere in den kritischen Bereichen des Brennraums, in denen schädliche NOx-Verbindungen entstehen.

Es wird somit vorgeschlagen, dass die sich um den Zylinderkopf oder Zylinderkolben angeordnete Fluidkammer getrennt bzw. unabhängig von einem sonstigen Kühlsystem einer Verbrennungskraftmaschine regelbar von einem Kühlmittelstrom durchströmen lässt, wobei
- bei steigender Temperatur der Fluidkammer, nach einer Aufwärmphase bei gleichbleibender oder sinkender Motordrehzahl, der Volumenstrom des Kühlmittels durch die Wärmesenke zumindest zeitweise erhöht wird, und
- bei gleichbleibender oder um maximal 100 Umdrehungen pro Minute steigender Motordrehzahl und bei Reduzierung der Motorlast der Volumenstrom des Kühlmittels durch die Wärmesenke nach zumindest einer Minute nach der Laständerung und innerhalb eines Temperaturbereichs der Fluidkammer von 60°C bis 100°C nicht reduziert wird.

Durch die vorgeschlagene dynamische Kühlleistungsregelung des Zylinderbereichs in Abhängigkeit der Motorlast und Motordrehzahl und einer aktuellen Fluidkammertemperatur kann effektiv die Bildung schädlicher Abgase verringert werden. Durch gezielte Kühlleistungsänderungen und kontrollierte und selektive Temperaturregelung der Fluidkammer im Temperaturbereich zwischen 60° C bis 100° C, teilweise in Abhängigkeit des Motorzustandes wie Kaltstart, Warmphase, in Abhängigkeit des Kurbelwinkels kann eine deutliche Reduzierung des Schadstoffausstoßes erreicht werden. Temperaturspitzen können vermieden werden, insbesondere in den kritischen Bereichen des Brennraums, in denen schädliche NOx-Verbindungen entstehen.

Erfindungsgemäß wird die Kühlung des Zylinderkopfes nach dem Warmlauf nicht reduziert, wobei der Volumenstrom des Kühlmittels, welches durch den Kühler und den Zylinderkopf strömt, nicht abgesenkt wird, zumindest nicht bei konstanter Drehzahl. Im Fall, wenn die Motorlast reduziert wird, bleibt der Kühlmittelvolumenstrom durch die Fluidkammer im Zylinderbereich innerhalb einer Minute zumindest gleich hoch wie 1 Minute zuvor, bevor die Last reduziert wurde. Dies hat den Vorteil, dass das Abgasnachbehandlungssystem nach einem Kaltstart nach wie vor schnell aufgeheizt wird und nach einem ersten Öffnen eines Thermostatventils zum Kühler der Zylinderkopf maximal gekühlt wird. Bei Lastwechsel wird somit eine konstante Temperierung der Zylinderkammer bei Vermeidung von Temperaturspitzen erreicht, wodurch die NOx Emissionen verringert werden können.

Somit wird ein hochdynamisches Kühlverfahren des Zylinderkopfbereichs vorgeschlagen, um Temperaturspitzen zu verringern und die Bildung von NOx zu reduzieren, wodurch insbesondere innerstädtische Abgas- und Stickoxidprobleme gelöst oder gelindert werden können.

Weiterhin ist denkbar, dass ein weitestgehend normales Thermostat zum Einsatz kommt bei dem die Hysterese beim Schließvorgang deutlich stärker ausgeprägt ist als die üblichen 4 bis 6°C. Das heißt, dass das Thermostat nach Erreichen der Öffnungstemperatur ganz normal öffnet und den Volumenstrom reduziert, die Reduzierung des Volumenstromes wird aber in der vorgeschlagenen Ausführungsform erst eingeleitet, wenn die Kühlmitteltemperatur wieder um mehr als 10, 20 oder gar 40°C niedriger ist als die erste Öffnungstemperatur des Thermostats. Vorstellbar ist auch eine zeitlich beeinflusste Hysterese, z.B. dass das Thermostat erst nach mindestens 10 oder 20 Minuten wieder anfängt zu schließen, anstatt nach wenigen Sekunden. Erreicht werden kann so ein Regelverhalten z.B. durch gezielte Erhöhung der Reibung der bewegten Thermostatkomponenten. Das kann recht leicht durch die geschickte Auswahl von Toleranzen und Materialpaarungen gewählt werden. Beim Aufwärmen erwärmt sich das Gehäuse des Thermostatwachselementes schneller auf als der innen liegende Druckstift, insbesondere wenn das Gehäuse aus einem Material mit einem größeren Wärmeausdehnungskoeffizient besteht. Das resultiert in einem großen Lastspiel und das Thermostat öffnet leicht. Beim Abkühlen verhält es sich umgedreht, das Gehäuse kühlt schneller ab und zieht sich zusammen, so dass der Druckstift festklemmt und erst nach einem gewissen Temperaturausgleich wieder freigegeben wird.

Des Weiteren kann das Gehäuse mit dem Thermostatelement, insbesondere einem Wachs-Thermostatelement, in einen Bypass gelegt werden, der während eines Kaltstarts geöffnet ist, jedoch nach Öffnen des Volumenstromes durch den Kühler geschlossen wird, so dass eine Temperaturreduzierung des anströmenden Kühlmittels durch eine thermische Isolation den (mit Wachs gefüllten) Thermostatkörper erst deutlich später erwärmen wird.

Es ist auch denkbar anstelle eines Thermostats ein druckabhängiges Ventil einzusetzen, durch welches der Volumenstrom erst erhöht, wenn es z.B. lokal zur Dampfblasenbildung kommt, und dass das Ventil danach geöffnet bleibt. Die Dampfblasenbildung kann durch Erfassung der Temperatur nicht erkannt werden, da beim Phasenwechsel von flüssig nach gasförmig die Temperatur konstant bleibt. Durch die Öffnung des Ventils erst bei Dampfblasenbildung, die vorwiegend bei höheren Motorlasten zu erwarten ist, wird der Warmstart verkürzt, was den Verbrauch reduziert, durch das Andauernde Öffnen nach einem ersten Öffnen werden die NOx Emissionen im realen Fahrbetrieb minimiert. Das Ventil sollte dann erst wieder geschlossen werden, wenn der Motor ausreichend abgekühlt, z.B. auf Umgebungstemperatur oder eine vergleichbare Temperatur, z.B. unterhalb 40°C. Da das Verfahren nur angewandt wird, solange das Kühlmittel im Kühler noch kalt ist, wird bei Öffnen des Ventils die Motortemperatur schnell reduziert, so dass eine lokale Überhitzung bei Dampfblasenbildung vermieden werden kann.

Es ist denkbar, in bestehenden Kraftfahrzeug-Motoren evtl. durch einen geringfügigen Umbau des Thermostats ein erfindungsgemäßes Verfahren bereitzustellen.

Vorstellbar ist auch, dass bei getrennten Kühlkreisläufen für Zylinderkopf und Zylinderblock im Zylinderkopfkreislauf auf ein Thermostat komplett verzichtet werden kann. Dadurch ließe sich sogar die Motorleistung während des Warmlaufes erhöhen, da sich der Liefergrad erhöht. Der Liefergrad bezeichnet das Verhältnis der nach Abschluss des Ladungswechsels tatsächlich im Zylinder befindlichen Ladungsmasse im Vergleich zur theoretisch möglichen Ladungsmasse. Dies erhöht die Fahrsicherheit, da viele aufgeladene Motoren im Warmlauf beim Anfahren wegen erhöhter Reibung von Kurbelwelle, Kolben und Turbolader ansonsten leicht abgewürgt werden (stehen bleiben) können. Um eine schnelle Aufheizung des Fahrgastraumes im Winter zu erreichen, kann im Warmlauf der Kühlmittelvolumenstrom durch den Kühler unterbrochen werden und statt dessen durch den Heizungswärmetauscher geleitet werden, bis der Innenraum warm genug ist und/oder eine höhere Kühlleistung für den Zylinderkopf erforderlich ist.

Eine weitere Variante ist, dass der Kühlmittelvolumenstrom von Zylinderkopf zum Kühler erhöht wird nachdem die Betriebstemperatur des Abgasnachbehandlungssystems erreicht ist, oder nach Ablauf einer gewissen Zeit nach dem Start des Motors. Dies kann sogar unabhängig von anderen Parametern wie der aktuellen der Zylinderkopftemperatur, der Kühlmitteltemperatur im Zylinderkopf, der Motorlast, und oder der Motordrehzahl geschehen.

Bei einem flüssigkeitsgekühlten Motor ist die Fluidkammer in der Regel in einem Zylinderkopf, bei Luftkühlung ist die Fluidkammer um den Zylinderkopf angeordnet.

Dieses Prinzip ist vorteilhaft auch bei der Kolbenspritzkühlung anwendbar, bei der Motoröl an die Unterseite des Kolbens gespritzt wird. Die meisten PKW Motoren haben mehrere Zylinder, die in einem Motorblock angeordnet sind. Der Zylinderkopf ist nicht Teil des Zylinders sondern der Deckel (oder Kopf), der den Zylinder nach oben verschließt, und zusammen mit Kolben und Zylinder den Brennraum bildet. Somit ist die Fluidkammer um zumindest eine der Stirnflächen des Brennraums herum angeordnet, insbesondere in einem Zylinderkopf und/oder unter einem Kolben angeordnet. Bei sinkender Drehzahl kann der Volumenstrom nur durch einen Regeleingriff erhöht werden, z.B. Öffnen eines Thermostatventils oder durch eine regelbare Pumpe/Gebläse. Bei der Kolbenkühlung wird die Fluidkammer also aus dem Gasraum des Kurbelgehäuses, welches in Verbindung mit der Unterseite des Kolbenbodens steht, gebildet, der zumindest auch teilweise mit Öl gefüllt ist.

Zur Temperaturregelung sind etliche Systeme bekannt wie z.B. Kennfeldgeregelte elektrische Thermostate, elektrisch regelbare Kombinationsventile, variable elektrische Wasserpumpen, etc. Alle diese System sind sehr aufwändig und sehr teuer, sie erfordern elektrische Aktuatoren, die an das elektrische Bordnetz angeschlossen sind, zum Betrieb benötigen sie Energie, die den Kraftstoffverbrauch erhöht, sie benötigen eine Regeleinrichtung mit Softwarealgorithmen. Da die Systeme wichtig sind für einen sicheren Betrieb sowie zur Einhaltung der Abgasgrenzwerte, müssen sie auch noch aufwändig diagnostiziert werden entsprechend der Anforderung der On-Board Diagnose (OBD). Ein weiterer Nachteil dieser Systeme ist, dass die Erfassung der Kühlmitteltemperatur oder die Erfassung einer anderen ähnlichen Bauteiltemperatur eine Grundvoraussetzung für deren Funktion ist. Eine weitere wichtige Voraussetzung dieser Systeme ist der Einsatz eines Kühlmittels, das zu einem großen Anteil aus Wasser besteht, so dass moderate Durchflussquerschnitte möglich sind und der Energieaufwand zum Verstellen von Ventilen überschaubar bleibt. Für den Einsatz in kostengünstigen Fahrzeugen wie z.B. Motorroller, Mopeds etc., die sogar luftgekühlten Motoren verwenden sind diese Systeme viel zu teuer und daher nicht geeignet.

In einer vorteilhaften Weiterentwicklung des Verfahrens wird vorgeschlagen, dass bei steigender Motorlast der Volumenstrom des Kühlmittels durch einen zweiten, zumindest teilweise in oder um zumindest einen Zylinder angeordneten, untere, Fluidkammerbereich erhöht wird, und bei abfallender Motorlast der Volumenstrom des Kühlmittels durch den unteren Fluidkammerbereich reduziert wird, wobei insbesondere die Temperatur im unteren Fluidkammerbereich des Zylinders zumindest 30°C höher ist als die Temperatur in der Fluidkammer des Zylinderkopf. Diese vorgeschlagene Weiterentwicklung kann auch unabhängig von den vorgenannten erfindungsgemäßen Merkmalen in einer Fluidkammer eines Zylinders umgesetzt werden, um eine vorteilhafte Wirkung zu erzielen.

Die Trennung der Fluidkammer in einen oberen Fluidkammerbereich, der eine Kühlung des Zylinderkopfs bewirkt, und einen unteren Fluidkammerbereich, der die Zylinderwandung kühlt, ermöglicht die Einstellung verschiedener Temperaturbereiche in diesen beiden Motorbereichen. Die Temperaturregelung der beiden Teilbereiche kann verschiedene Funktionen erfüllen. Eine erhöhte Kühlleistung im oberen Fluidkammerbereich und eine reduzierte Kühlleistung im unteren Fluidkammerbereich wirkt sich günstig auf die Verringerung der NOx-Werte aus, für die eine niedrigere Temperatur des Zylinderkopfes ausschlaggebend ist, insbesondere in dem Bereich der Auslassventile, welche besonders hohe Temperaturen aufweisen. Eine demgegenüber erhöhte Temperatur in der Zylinderwandung senkt die Reibung des Kolbens und reduziert den Wandwärmeverlust und reduziert demzufolge den Kraftstoffverbrauch. Des Weiteren kann die Bildung von Partikel, Kohlenwasserstoffe (HC), und Kohlenmonoxid (CO) Emissionen durch eine bessere Nachverbrennung reduziert werden. Die Temperaturverteilung im Brennraum kann günstig hinsichtlich einer Kompensation von Temperaturspitzen gesteuert werden. Eine Temperaturverlaufskurve während eines Arbeitstakts kann abgeflacht werden, und Spitzentemperaturen abgesenkt werden. Die thermische Variation und resultierende Materialspannungen werden hierdurch verringert und die Langlebigkeit des Motors hierdurch erhöht.

Hier geht es also um die Kühlung des Zylinders, insbesondere des Zylindermantels zur Optimierung von Leistung, NOx Emissionen und Kraftstoffverbrauch bei hohen Motorlasten und zur Reduzierung von Kraftstoffverbrauch und Emissionen von Partikel, Kohlenmonoxid (CO) und Kohlenwasserstoffen, insbesondere im Teillastbetrieb.

Wird jedoch der Volumenstrom des Kühlmediums nur durch die Lasteinstellung beeinfluss, so ist auch insbesondere der Einsatz bei einfachen luftgekühlten Motoren ohne komplexe Motorsteuerung möglich, z.B. kann das Ventil zur Variation des Kühlmittelvolumenstroms recht einfach durch Koppelung per Bowdenzug an eine Drosselklappe, Gasschieber, Gasgriff oder Gaspedal betätigt werden. Ein weiterer Vorteil dieser Einfachen Beeinflussung des Kühlsystems ist, dass eine Nachrüstung sehr leicht möglich ist, z.B. durch einen zusätzlichen Bowdenzug, der an Gaspedal, Gasgriff oder Drosseleinheit gekoppelt ist. Das erste Ventil kann hierbei z.B. vor dem mechanischen Thermostat eingebaut werden, so dass der Kühler nur bei bestimmten Motorlasten geöffnet wird. Dies ist insbesondere in Kombination mit der Umrüstung auf ein Hochtemperaturkühlmittel sinnvoll, bei dem bei niedrigen Motorlasten sehr viel höhere Kühlmitteltemperaturen deutlich von Vorteil sind. In Kombination mit einem Hochtemperaturkühlmittel lässt sich also der Temperaturunterschied zwischen dem unteren Fluidkammerbereich des Zylinders und dem oberen Fluidkammerbereich des Zylinderkopfes von üblicherweise maximal 20°C auf über 30°C und bis zu 100°C erhöhen. Bei bisherigen Motoren ist die Temperaturspreizung zwischen Zylinderkopf und Zylinderblock üblicherweise auf ca.20°C begrenzt, zum einen weil eine weitere Erhöhung der Kühlmitteltemperatur im Zylinderblock wegen der Gefahr von Filmsieden und der erforderlichen Sicherheitsabstände z.B. für Betrieb im Gebirge mit niedrigerem Umgebungsdruck oder für Betrieb bei hohen Außentemperaturen zu riskant wäre, zum anderen, weil eine weitere Absenkung der Kühlmitteltemperatur im Zylinderkopf das Aufheizen der Abgasnachbehandlungssysteme verlangsamen würde.

Ein weiterer Vorteil dieses erhöhten Temperaturunterschiedes ist, dass dadurch die Motorleistung erhöht werden kann. Durch Erhöhung der Temperatur im unteren Fluidkammerbereich des Zylinders reduziert sich die für den Zylinder erforderliche Kühlleistung. Diese freigewordene Kühlleistung kann zusätzlich zur weiteren Abkühlung des Zylinderkopfes benutzt werden. Da die mit der Ansaugluft in Kontakt stehenden Flächen des Zylinderkopfes inklusive Einlasskanäle grösser sind als die Fläche des Zylinders der den Brennraum bildet, lässt sich der Liefergrad und damit die Motorleistung erhöhen.

Abhängigkeit von Gaspedalbeschleunigung: Bei hochdynamischen Vorgängen insbesondere schnellen Beschleunigungsvorgängen, könnten in manchen Bauteilen wie z.B. Zylinderkopf oder Zylinderblock kurzzeitig Temperaturspitzen auftreten. Um diese zu vermeiden, kann die Gaspedalbeschleunigung als Indikator herangezogen werden, da sie auf den Wunsch des Fahrers nach schneller und starker Beschleunigung des Fahrzeuges hinweist. Durch Einbindung dieses Signals kann frühzeitig eine stärkere Kühlung eingeleitet werden und damit Temperaturspitzen in hochbelasteten Bauteilen vermieden werden. In einer vorteilhaften Weiterentwicklung wird der Volumenstrom des Kühlmittels durch eine Fluidkammer auf mehr als 90% des bei der jeweiligen Drehzahl möglichen Volumenstroms erhöht werden, sobald die Gaspedalbeschleunigung einen vorbestimmten Grenzwert überschreitet. Diese vorgeschlagene Weiterentwicklung kann auch unabhängig von den vorgenannten erfindungsgemäßen Merkmalen in einer Fluidkammer eines Zylinders umgesetzt werden, um eine vorteilhafte Wirkung zu erzielen.

Zyklische Variation des Volumenstroms: Ähnlich wie eine Brennraumisolation einen unterschiedlichen Einflusses auf den Kraftstoffverbrauch je nach verschiedenen Motorbetriebspunkten hat, so hat eine solche Brennraumisolation auch einen unterschiedlichen Einfluss auf den Wandwärmeverlust, die Effizienz des Brennverfahrens und die NOx Emissionen während unterschiedlicher Phasen eines Arbeitsspiels. Daher ist es sinnvoll den Wandwärmeübergang während Phasen hoher örtlicher und zeitlicher thermischer Belastung möglichst zu maximieren um die NOx Emissionen zu reduzieren und den Verbrennungsablauf möglichst effizient zu gestallten. Ein weiterer Vorteil einer solchen maximalen Kühlung insbesondere während des Verbrennungsschwerpunkts bzw. im Bereich des oberen Totpunktes ist, dass die lokalen Materialbelastungen minimiert werden. Sobald die Verbrennung während dem Arbeitstakt weitgehend abgeschlossen ist, oder zumindest nach Überschreitung des Verbrennungsschwerpunktes, ist es wiederum sinnvoll den Wandwärmeübergang zu reduzieren um den Wandwärmeverlust zu reduzieren. Dadurch wird auch die Kolbenreibung minimiert und die Bildung von Partikel wird reduziert, da diese durch höhere Temperaturen in der Expansionsphase vollständiger verbrannt werden. Im Volllastbetrieb ist während des Ansaugtakts wiederum ein möglichst hoher Wandwärmeverlust sinnvoll, so dass der Luftaufwand maximiert werden kann und damit eine maximale Motorleistung erzielt wird. Ebenso ist während der Verdichtung, zumindest bis zu Beginn der Verbrennung, ein niedriger Wandwärmeverlust sinnvoll, um am Start der Verbrennung im Brennraum einen hohen Druck und eine hohe Temperatur zu erreichen, was normalerweise durch ein hohes Verdichtungsverhältnis erreicht wird. Diese Anforderungen werden durch Erhöhung und Reduzierung zumindest eines Fluidvolumenstromes um den Brennraum während eines Arbeitsspiels Erfindungsgemäß gelöst.

In einer vorteilhaften Weiterentwicklung des Verfahrens wird vorgeschlagen, dass der Volumenstrom des Kühlmittels durch die Fluidkammer, insbesondere durch einen unteren Fluidkammerbereich im Zylinderblock, während eines Arbeitsspiels, bevorzugt während des Arbeitstaktes des Zylinders erhöht und reduziert wird, insbesondere durch wechselhaftes Durchströmen der Fluidkammer mit heißem Abgas und kälterem flüssigen Kühlmittel erhöht und reduziert wird, wobei bevorzugt der Volumenstrom des kälteren flüssigen Kühlmittels beim Verbrennungsbeginn erhöht wird, und nach zumindest 40° Kurbelwinkel nach dem Verbrennungsbeginn reduziert wird. Diese vorgeschlagene Weiterentwicklung kann auch unabhängig von den vorgenannten erfindungsgemäßen Merkmalen in einer Fluidkammer eines Zylinders umgesetzt werden, um eine vorteilhafte Wirkung zu erzielen.

Eine dynamische Kühlleistungsvariation im Arbeitstakt ermöglicht eine Anpassung der thermischen Verhältnisse an den aktuellen Verbrennungsverlauf und kann hierdurch eine Homogenisierung der thermischen Verhältnisse erreichen. Dies verringert thermisch bedingten mechanischen Stress und erhöht die Langlebigkeit des Motors. Des Weiteren sind die Abgasemissionen besser kontrollierbar.

Es kann z.B. auch möglich sein die Massenkräfte im Kurbeltrieb zu nutzen, z.B. sind sie in oberen Totpunkt (OT) im Kolben am höchsten und können ein Ventil betätigen zum Öffnen der Ölkühlung. Oder der Druck im Brennraum kann ein entsprechendes Ventil öffnen. Hier geht es nicht nur um den Zylinder, sondern den gesamten Brennraum, insbesondere die Kolbenfläche, die von unten leicht gekühlt werden kann.

In einer vorteilhaften Weiterentwicklung des Verfahrens wird vorgeschlagen, dass zum Aufwärmen ein erstes Ventil zur Steuerung des Volumenstroms des Kühlmittels durch zumindest einen Teilbereich der Fluidkammer, insbesondere durch einen oberen oder einen unteren Fluidkammerbereich durch zumindest teilweise Öffnen das Kühlmittel in die Fluidkammer einführt, sobald eine Motorlast sinkt, insbesondere ein betriebspunktabhängige Motorlast, unterschritten wird und die Temperatur des einströmenden Kühlmittels höher als eine der Fluidkammertemperaturen ist, und/oder dass das erste Ventil zumindest teilweise geschlossen wird, sobald die Temperatur des einströmenden Kühlmittels niedriger als eine der Fluidkammertemperaturen ist, und dass zum Kühlen das erste Ventil zumindest teilweise geöffnet wird, sobald eine Motorlast, steigt, insbesondere oberhalb einer betriebspunktabhängigen Motorlast, und die Temperatur des einströmenden Kühlmittels niedriger ist als eine der Fluidkammertemperaturen und/oder dass das erste Ventil zumindest teilweise geschlossen wird, sobald die Temperatur des einströmenden Kühlmittels höher als die Fluidkammertemperatur ist. Diese vorgeschlagene Weiterentwicklung kann auch unabhängig von den vorgenannten erfindungsgemäßen Merkmalen in einer Fluidkammer eines Zylinders umgesetzt werden, um eine vorteilhafte Wirkung zu erzielen.

Eine Ventilsteuerung zur Realisierung einer adaptiven Kühlleistungssteuerung in verschiedenen Fluidkammerbereichen ist technisch einfach umsetzbar. Hierdurch kann der Zylindermantel schneller als der Zylinderkopf erwärmt werden, um Reibung zu verringern und NOx-Werte abzusenken.

Durch eine solche erfindungsgemäße Anwendung können Teile des Brennraums, z.B. der Zylinderkopf, Zylinder oder auch Kolben je nach Bedarf erwärmt oder gekühlt werden.

Des Weiteren ist vorstellbar das erste Ventil auch parallel zum Thermostat anzuordnen, wenn gleichzeitig das Thermostat gegen eines mit höherer Öffnungstemperatur und ohne Leckagestrom ausgetauscht wird.

Damit ein Thermostat im Motorkühlsystem vernünftig funktioniert, ist meist zumindest ein geringer Leckagevolumenstrom erforderlich. Selbst solch ein geringer Leckagevolumenstrom des Kühlmittels ist für das Aufwärmen nachteilig, da dann der Wärmeübergang im Kühlmantel von freier Konvektion zu erzwungener Konvektion übergeht so dass folgende Nachteile auftreten:
- Höherer Wärmeübergangskoeffizient vom Zylinderrohr zu Wassermantel
- Höherer Wärmeübergangskoeffizient vom Wassermantel zu äußerem Teil das Zylinders und damit auch zur Umgebungsluft
- Wärmeabfuhr durch Leckagevolumenstrom

Dabei ist auch denkbar, dass in einem Kühlkreislaufbypass, z.B. der Bypass für den Heizungswärmetauscher mittels eines Ventils und einer Leitung mit dem Kühlereingang verbunden ist und dass dieses Ventil bei Überschreitung einer bestimmten Gaspedalstellung geöffnet wird, so dass zumindest ein Teil des Kühlmittelvolumenstroms durch den Kühler fließt, schon ohne dass das Thermostat geöffnet sein muss. Besonders vorteilhaft zur Minimierung der NOx Emissionen ist es, wenn dieses Ventil als 3/2 Wegeventil ausgeführt ist so dass ab einer hohen Motorlast der gesamte Kühlmittelvolumenstrom durch den Kühler fließt.

Bei starken Beschleunigungen insbesondere bei hohen Motortemperaturen kommt es oft zu einem starken Ansteigen der NOx Emissionen, zum einen da das Ventil zur Regelung der Abgasrückführungsrate (AGR) deutlich langsamer reagiert als das Einspritzventil, welches unmittelbar die Motorlast erhöht, und zum anderen da eine erhöhte Abgasmenge zuerst vom Abgasregelventil bis zum Zylinder strömen muss und da bei einem folgenden Lastsprung wegen der Abgasgendruck erst langsam ansteigt wobei sich die AGR Rate sogar kurzzeitig verringern kann. Durch Erkennen der Gaspedalbeschleunigung kann man die folgende Motorlast im Voraus abschätzen und das AGR Ventil frühzeitig entsprechend der berechneten oder in Prüfstandsversuchen ermittelten Totzeiten weiter öffnen als im stationären Betrieb mit gleicher Motorlast. Bei kaltem Motor mit Turbolader ist das Turboloch - ein verzögerter Motorlastanstieg bei einer Gaspedalbeschleunigung - wegen der erhöhten Lagerreibung sehr viel grösser als bei warmen Motor. Daher baut sich bei kaltem Motor der Abgasgenedruck vor dem Turbolader schneller auf als der Ansaugdruck nach dem Lader. Das hat zur Folge dass sich die AGR Rate bei einem solchen Lastsprung auch viel schneller aufbaut als bei einem warmen Motor. Dadurch sind die NOx Emissionen bei Lastsprüngen mit warmem Motor höher als mit kaltem Motor. Bei schneller Lastabnahme steigt in der Regel die Anforderung an die AGR-Rate. Bei niedrigen Motorlasten im Stationärbetrieb ist die Abgastemperatur niedriger als bei höheren Motorlasten. Bei schneller Lastabnahme dauert es eine gewisse Zeit bis das kältere Abgas in den Motor zurückgeführt wird. Daher kommt es auch bei diesen dynamischen Bedingungen zu erhöhter NOx Bildung.

In einer vorteilhaften Weiterentwicklung des Verfahrens wird vorgeschlagen, dass zumindest ein Abgasventil zur Rückführung von Abgas in den Brennraum bei Erhöhung oder Verringerung einer Motorlast um einen vorbestimmbaren Differenzbetrag weiter als in einem stationären Betriebspunkt, bei dem die Motorlast der jeweiligen momentanen Motorlast während der Laständerung entspricht, geöffnet bzw. geschlossen wird, wobei bevorzugt sich der Differenzbetrag proportional mit der Geschwindigkeit oder Beschleunigung der Laständerung und/oder mit der Öltemperatur und/oder mit der Kühlmitteltemperatur und/oder mit der Abgastemperatur verändert, und dass bevorzugt eine Wärmeabgabe eines Abgasrückführungskühlers vom Abgas an das Kühlmittel erhöht wird. Dadurch werden NOx Emissionen bei realer dynamischer Fahrweise ohne zusätzliche Bauteile bzw. Kosten reduziert. Diese vorgeschlagene Weiterentwicklung kann auch unabhängig von den vorgenannten erfindungsgemäßen Merkmalen umgesetzt werden, um eine vorteilhafte Wirkung zu erzielen.

In dieser Weiterentwicklung wird eine dynamische Wärmeabgabe durch einen Abgasrückführungskühler an das Kühlmittel vorgeschlagen, die über ein Abgasventil steuerbar ist. Somit kann vorteilhafterweise gezielt zur Einstellung der Kühlmitteltemperatur Abgaswärme genutzt werden, was die Energieeffizienz der dynamischen Kühlregelung verbessert.

In einer vorteilhaften Weiterentwicklung des Verfahrens wird vorgeschlagen, bei einer Strömung von Abgas durch zumindest ein regelbares Abgasventil des Verbrennungsmotors in Richtung des Brennraums des Zylinders bei gleichbleibender Stellung der Motorlaststelleinheit und einer Drehzahl von 50% der Nenndrehzahl des maximaler Öffnungsquerschnitts des Abgasventils innerhalb einer Toleranz von maximal 20% des maximalen Öffnungsquerschnittes während eines jeweiligen Arbeitsspiels beträgt und bei steigender Drehzahl oberhalb einer Motordrehzahl von zumindest 50% der Nenndrehzahl beibehalten wird und insbesondere einem maximal möglichen Öffnungsquerschnitt des Abgasventils entspricht und/oder bei gleichbleibender Drehzahl und steigender Motorlast innerhalb eines Lastbereichs von insbesondere zwischen 50% bis 75% der maximalen Motorlast der jeweiligen Drehzahl innerhalb einer Toleranz von maximal 20% des maximalen Öffnungsquerschnittes beibehalten wird, und insbesondere dem maximal möglichen Öffnungsquerschnitt des Abgasventils entspricht. Das regelbare Abgasventil Ventil kann beispielsweise auch ein Auslassventil sein, über welches in einer Ventilüberschneidung auch Abgas zurück in den Brennraum strömt, was als sogenanntes internes AGR bezeichnet wird. Diese vorgeschlagene Weiterentwicklung kann auch unabhängig von den vorgenannten erfindungsgemäßen Merkmalen umgesetzt werden, um eine vorteilhafte Wirkung zu erzielen.

Der Hintergrund ist die gesetzliche Lage, dass Abschalteinrichtungen in den meisten Fällen bis auf wenige Ausnahmen verboten sein können. Durch Veröffentlichung von AGR Kennfeldern ist bekannt dass selbst bei einigen der modernsten PKW -Motoren die Abgasrückführungsrate bei steigenden Drehzahlen und/oder steigenden Motorlasten reduziert wird. Erreicht wird dieses Verhalten durch Regelung des z.B. des Öffnungsquerschnitts von AGR Ventilen und/oder die Reduzierung des Abgasgegendruckes durch Öffnen von Drosselklappen in im Abgas- und/oder Ansaugsystem. Solche Betriebsstrategien sind umstritten und könnten gegebenenfalls als unzulässig interpretiert werden. Bei LKW Motoren sieht das anders aus, da steigen die AGR Raten meist mit steigender Drehzahl, da der Prüfzyklus für LKW insbesondere hohe Motorlasten und hohe Drehzahlen aufweist, was bei PKW bislang nicht der Fall ist. Es ist somit vorteilhaft für PKWs die Stellung des oder der AGR Ventile sowie im Falle von Dieselmotoren von Drosselklappen im Abgas- und/oder Ansaugsystem konstant zu halten, sobald die Drehzahlen und/oder Motorlasten die während der Zertifizierungsteste erreichten Drehzahlen und/oder Motorlasten überschreiten.

Es ist auch vorstellbar diese Verfahren bei einer internen Abgasrückführung anzuwenden. Dies bezeichnet ein Rückström von Abgas durch Pulsation in den Brennraum, z.B. während der Ventilüberschneidungsphase, wenn Ein- und Auslassventil(e) gleichzeitig geöffnet sind, wodurch der Restgasanteil im Brennraum erhöht wird. Dieser Restgasanteil bzw. das in den Brennraum zurückgeführte Abgas kann auch durch Verstellen der Steuerzeiten von Auslass- und/oder Einlassventilen bei den meisten modernen Motoren mit variabler Ventilsteuerung von der Motorregelung variiert werden. Das Hauptziel solcher variabler Ventilregelungen ist die gleichzeitige Erhöhung von maximaler Leistung und Drehmoment, ohne den üblichen Zielkonflikt zwischen diesen beiden Merkmalen. Ähnlich wie bei der externen AGR sollte auch bei der internen AGR die Ventilüberschneidung zwischen Einlass- und Auslassventilen konstant gehalten werden, bzw. insbesondere nicht reduziert werden, sobald die Drehzahlen und/oder Motorlasten die während eines Zertifizierungstests erreichten Drehzahlen und/oder Motorlasten überschreiten.

Bei flüssigkeitsgekühlten Motoren kann es vorkommen, dass das falsche Kühlmittel eingefüllt wird, insbesondere ein Kühlmittel mit einem zu hohen Wasseranteil oder sogar Wasser ohne Frostschutzmittel. Dadurch kann das Kühlmittel im Winter bei niedrigen Umgebungstemperaturen gefrieren was in den meisten Fällen zu einem kapitalen Motorschaden führt, z.B. durch Rissbildung in Zylinderkopf und/oder Zylinderblock. Ebenso wird die Siedetemperatur des Kühlmittels durch zu hohen Anteil von Wasser gesenkt, wodurch es insbesondere im Sommer bei Anhängerbetrieb bei steilen Bergauffahrten mit langsamer Geschwindigkeit zum Verdampfen des Kühlmittels kommt. Dadurch steigt der Druck im Kühlsystem schlagartig, wodurch Kühlwasserschläuche platzen können oder Dichtungen bleibend beschädigt werden können. Im günstigsten Fall kommt es nur zu Verlust von Kühlwasser durch ein Überdruckventil. Dies wiederum birgt eine hohe Verletzungsgefahr, wenn man den Kühlerdeckel öffnet, da der dabei entweichende Wasserdampf zu Verbrennungen führen kann. Außerdem führt ein zu hoher Wasseranteil zu erhöhter Korrosion und reduziert die Schmiereigenschaften des Kühlmittels, wodurch insbesondere die Lebensdauer der Wasserpumpe erheblich reduziert wird.

In einer vorteilhaften Weiterentwicklung des Verfahrens wird vorgeschlagen, dass die Eigenschaften des Kühlmittels diagnostiziert werden, insbesondere die Dissipationskonstante diagnostiziert wird, und dass eine Motordiagnoseanzeige aktiviert wird, sobald die gemessene Eigenschaft des Kühlmittels um einen Mindestbetrag von einem vorgegebenen Sollwert abweicht, wobei der Sollwert in Abhängigkeit von der Kühlmitteltemperatur variiert, und dass bevorzugt geringfügige Veränderungen der gemessenen Eigenschaften gespeichert werden und der Sollwert an die Veränderung adaptiert wird, und dass insbesondere der Sollwert nicht adaptiert wird, wenn die Änderung der gemessenen Eigenschaft zwischen Abschalten und Starten des Motors erfolgt, insbesondere wenn die Zeit zwischen Abschalten und Starten des Motors länger als 30 Sekunden beträgt.

Die Dissipationskonstante (Zerstreuungskonstante) gibt die Leistung an, die erforderlich ist, um einen Heißleiter ( NTC, Thermistor) um 1 Grad gegenüber seiner Umgebungstemperatur zu erwärmen, daher ist sie leicht mit einem Heißleiter wie einem Thermistor mit negativen Temperaturkoeffizienten zu messen. Da die Dissipationskonstante von dem Wärmeübergangskoeffizienten, der Wärmeleitfähigkeit und der spezifischen Wärmekapazität des Kühlmittels abhängt, ist es besonders sinnvoll die Dissipationskonstante bei abgeschaltetem Motor zu diagnostizieren, insbesondere auch, da der Motor zum Auffüllen des Kühlmittels abgestellt werden sollte.

Die Dissipationskonstante von Wasser unterscheidet sich deutlich von der von üblichen Frostschutzmitteln wie Ethylenglykol, Propylenglykol und Glycerin, so dass ein übermäßiger Anteil von Wasser die Dissipationskonstante des Kühlmittels verändern würde. Wenn dadurch die Motodiagnoseanzeige aktiviert wird, wird der Fahrer darauf aufmerksam gemacht, dass er die Werkstatt aufsuchen muss. Es ist natürlich auch denkbar, eine gesonderte Anzeige der gemessenen Wasserkonzentration im Cockpit anzuzeigen bzw. die errechnete Frostschutz-sichere Temperatur. Bei Einsatz eines Hochtemperaturkühlmittels, welches mit deutlich höheren Temperaturen betrieben wird als übliche 50/50 Wasser/Glykolgemische, sollte bei unzulässig hohem Wassergehalt natürlich auch die maximale Temperatur des Kühlmittels begrenzt werden, z.B. durch bekannte Maßnahmen wie die Erhöhung des Kühlmittelvolumenstroms durch den Kühler, Einschalten von Kühlerlüftern oder sogar Begrenzung der maximalen Motorleistung durch die Motorsteuerung.

Die Messung der Dissipationskonstante ist natürlich nur ein Beispiel der Ermittlung der Wasserkonzentration im Kühlmittel. Es ist auch vorstellbar andere physikalische oder Chemische Eigenschaften dafür zu messen, wie z.B. die Wärmeleitfähigkeit, die spezifische Wärmekapazität, des Thermischer Ausdehnungskoeffizienten, der Viskosität etc. Ebenso kann eine erhöhte Wasserkonzentration im Kühlmittel durch Messung des Kühlmitteldruckes diagnostiziert werden, da das Kühlmittel dann früher siedet, wodurch der Druck schnell ansteigt. Das kann z.B. dadurch geschehen, indem eine Tabelle mit dem Referenzdruck abhängig von Kühlmitteltemperatur, und eventuell auch dem Kühlmittelfüllstand und anderen Parametern wie Motordrehzahl abgelegt wird und bei Überschreiten der entsprechenden Grenzwerte eine Fehlerfunktion diagnostiziert und angezeigt wird. Um die Gefahr des Herausspritzens von heißem Kühlmittel beim Öffnen des Kühlerdeckels komplett zu vermeiden, könnte man diesen auch mit einer Verriegelung versehen, der erst unterhalb eines bestimmten Kühlmitteldruckes zu öffnen ist. Auch wäre es vorstellbar den Motor automatisch abzuschalten, sobald der Druck durch Öffnen des Kühlerdeckels abfallen würde. Dadurch kann verhindert werden, dass das falsche Kühlmittel bei laufendem Motor eingefüllt würde und dadurch schlecht diagnostiziert werden könnte. Durch die bevorzugt fortlaufende Diagnose des Kühlmittels wird verhindert, dass der Motor im Winter einfriert, dass er im Sommer überhitzt, Korrosion wird verhindert und die Wasserpumpe wird geschützt. Diese vorgeschlagene Weiterentwicklung zur Diagnose der Kühlmitteleigenschaften kann auch unabhängig von den vorgenannten erfindungsgemäßen Merkmalen umgesetzt werden, um eine vorteilhafte Wirkung zu erzielen.

In einer vorteilhaften Weiterentwicklung des Verfahrens wird vorgeschlagen, dass bei einer positiven Änderung der Motorlast die Leistung zumindest eines Kühlerlüfters und/oder die elektrische Motorlast eines Stromgenerators, insbesondere der Lichtmaschine zumindest für eine befristete Zeit reduziert wird und insbesondere abgeschaltet wird. Somit kann die maximale Motorlast während einer Beschleunigung kurzfristig reduziert werden, wodurch auch die maximale Brennraumtemperatur und die NOx Emissionen reduziert werden. Da diese Abschaltung von Kühlerlüfter und/oder Stromgenerator nur kurzfristig geschieht, für wenige Sekunden, wird sich die Kühlmitteltemperatur nur unwesentlich ändern und über die Wärmekapazität des Gesamtsystems gedämpft werden. Ebenso wird der Ladezustand der Batterie nur unwesentlich beeinflusst. Diese vorgeschlagene Weiterentwicklung kann auch unabhängig von den vorgenannten erfindungsgemäßen Merkmalen umgesetzt werden, um eine vorteilhafte Wirkung zu erzielen.

In einem Nebenaspekt wird ein Wärmemanagementsystem eines Verbrennungsmotors zur Durchführung eines der vorgenannten Wärmemanagementverfahren vorgeschlagen. Das Wärmemanagementsystem umfasst zumindest eine zumindest teilweise um einen Zylinder des Verbrennungsmotors angeordnete Fluidkammer, aufweisend zumindest eine Einlassleitung und zumindest eine Auslassleitung, wobei die Fluidkammer mit zumindest einer Kühlmittelfördereinrichtung zur Förderung eines Kühlmittels und mit zumindest einer Wärmesenke verbunden ist, wobei die Wärmesenke insbesondere Umgebungsluft oder ein luftdurchströmter Kühler ist. Es wird vorgeschlagen, dass der durch die Kühlmittelfördereinrichtung geförderte Kühlmittelvolumenstrom durch eine Drosseleinrichtung veränderbar ist, insbesondere unabhängig von der Motordrehzahl, wobei die Drosseleinrichtung insbesondere aus zumindest einem ersten Ventil besteht. Das erste Ventil ist mit einer Motorlaststelleinheit zur Einstellung der Motorlast gekoppelt, und das erste Ventil ist durch die Motorlaststelleinheit derart steuerbar, dass ein Volumenstrom des Fluids durch die Fluidkammer erhöht wird, wenn die Motorlast erhöht wird und reduziert wird, wenn die Motorlast reduziert wird. Insbesondere ist ein Zylinderkopftemperatursensor, und/oder ein Fluidkammertemperatursensor umfasst. Ein Volumenstrom der Kühlmittelfördereinrichtung ist in Abhängigkeit einer Motordrehzahl, und/oder einer Fluidkammertemperatur und/oder einer Motorlast, insbesondere durch Betätigung zumindest des ersten Ventils zur Steuerung des Volumenstroms des Kühlmittels durch zumindest eine der Fluidkammern steuerbar. Diese vorgeschlagene Weiterentwicklung kann auch unabhängig von den vorgenannten erfindungsgemäßen Merkmalen umgesetzt werden, um eine vorteilhafte Wirkung zu erzielen.

Schubabschaltung: Vorzugsweise ist eine Abschaltung der Verbrennung während Schubbetrieb ein bekanntes Mittel bei Motoren mit elektronisch geregelter Einspritzung den Kraftstoffverbrauch zu reduzieren.

In einer vorteilhaften Weiterentwicklung des Systems wird vorgeschlagen, dass eine Motorlaststelleinheit, insbesondere ein Gaspedal oder Gasgriff, zur Steuerung einer Kraftstoffzufuhr des Verbrennungsmotors eingerichtet und mechanisch ausgebildet ist, insbesondere ohne ein elektrisch gesteuertes Einspritzventil ausgebildet ist, und eingerichtet ist, eine Kraftstoffzufuhr automatisch abzuschalten, wenn die Motorlaststelleinheit eine minimale Laststellung aufweist, insbesondere wenn sie geschlossen ist, und das Fahrzeug während eines Schubbetriebs verzögert wird, wobei ein Unterdruck in einem Ansaugkanal im Schubbetrieb größer als ein Unterdruck in einem schubfreien Leerlauf ist, oder eine Druckdifferenz zwischen einem Luftansaugrohr und einem Referenzdruck, insbesondere einem Umgebungsdruck, größer als im schubfreien Leerlauf ist. Diese vorgeschlagene Weiterentwicklung der Schubabschaltung kann auch unabhängig von den vorgenannten erfindungsgemäßen Merkmalen umgesetzt werden, um eine vorteilhafte Wirkung zu erzielen.

Bei sehr kostengünstigen Fahrzeugen mit einfachem Vergaser (d.h. ohne Motorsteuerung, die die Kraftstoffmenge regeln kann), die in großer Stückzahl in Entwicklungsländern oder Schwellenländern wie z.B. Indien, Indonesien, etc. hergestellt werden, wird im Schubbetrieb weiterhin Kraftstoff verbrannt. Im NEDC Test macht das ca. 2-3% des Kraftstoffverbrauches aus, im Indischen Testzyklus für Zwei- und Dreiräder (IDC) sogar bis über 5% im Vergleich zu Motoren, bei denen die Kraftstoffzufuhr im Schub abgeschaltet wird.

Bei einfacheren kostengünstigeren Motoren mit mechanischer Gemischbildung z.B. mittels Vergaser war eine Schubabschaltung bislang nicht möglich. Im Schubbetrieb ist der Unterdruck im Saugrohr bei geschlossener Drosseleinrichtung deutlich höher als im Leerlauf. Durch Kopplung der Lasteinstelleinrichtungsposition an den Unterdruck im Saugrohr lässt sich die Kraftstoffzufuhr im Schub abschalten ohne dass der Motor im Leerlauf ausgehen würde.

Eine solche Schubabschaltung bewirkt auch die Reduzierung von Abgasemissionen, insbesondere HC und CO, da kein Kraftstoff im Schub zugeführt und verbannt wird, sowie die Reduzierung von NOx Emissionen, da sich der Brennraum und insbesondere die Abgasventile im Schub durch die durchgepumpte Luft abkühlen, so dass die maximalen Verbrennungstemperaturen zu Beginn der folgenden Beschleunigungsphasen reduziert werden. Wärmeverlust im Leerlauf da die Kühlung durch Kraftstoffverdampfung vermieden.

Regelfreie Abgasrückführung AGR: Die Rückführung von Abgas in den Brennraum ist eine weitere bekannte Maßnahme zur Reduzierung von Kraftstoffverbrauch und NOx Emissionen. NOx Emissionen werden reduziert durch die Reduzierung der maximalen Verbrennungstemperatur und der Kraftstoffverbrauch wird reduziert durch Entdrosselung wodurch beim Benziner der Kraftstoffverbrauch reduziert wird um ca. 2-3% und mehr, je nach Zyklus und maximal möglicher AGR-Rate.

Die Kosten für ein Abgasrückführungssystem sind allerdings in der Regel sehr hoch, insbesondere wegen der erforderlichen Regelventile die auch sehr anfällig sind. Daher wird der Einsatz von Abgasrückführsystemen möglichst vermieden, wenn möglich. Die vorgeschlagene Lösung reduziert den Kostenaufwand für eine Abgasrückführung erheblich, so dass ein Einsatz sogar bei sehr einfachen Einzylindermotoren mit Vergaserwirtschaftlich möglich wird.

In einer vorteilhaften Weiterentwicklung des Systems wird vorgeschlagen, dass die Motorlaststelleinheit im mechanischen Wirkeingriff mit einer Drosseleinrichtung steht, insbesondere mit einer Drosselklappe oder einem Gasschieber verbunden ist, und die Drosseleinrichtung im Wirkeingriff mit einem Abgasventil steht, wobei das Abgasventil beim Öffnen der Drosseleinrichtung zumindest teilweise geschlossen wird, und eine erste Seite des Abgasventils mit einer Abgasrückführungsleitung des Verbrennungsmotors verbunden ist und Abgas leitet, und eine zweite Seite des Abgasventils über eine Leitung oder Öffnung mit einem Ansaugkanal des Verbrennungsmotors nach und/oder vor der Drosseleinrichtung verbunden ist, und dass im Falle eines Gasschiebers oberhalb vom Gasschiebers zumindest eine mit der Abgasrückführungsleitung des Verbrennungsmotors verbundene Abgasöffnung vorhanden ist, die beim Öffnen des Gasschiebers zumindest teilweise geschlossen wird und Abgas in einem Raum oberhalb des Gasschieber leitet, und dass vorzugsweise eine mit dem Ansaugkanal des Verbrennungsmotors verbundene Verbindungsleitung stromabwärts und/oder stromaufwärts des Gasschiebers und/oder des Abgasventils vorhanden ist.

Die Öffnung auf der zweiten Seite des Abgasventils könnte ein Loch im Gasschieber sein, was von der Oberseite zur Unterseite reicht und bei vielen Gasschiebern vorhanden ist, z.B. ein Schlitz an der Seite der zur Führung über eine Arretierstift läuft.

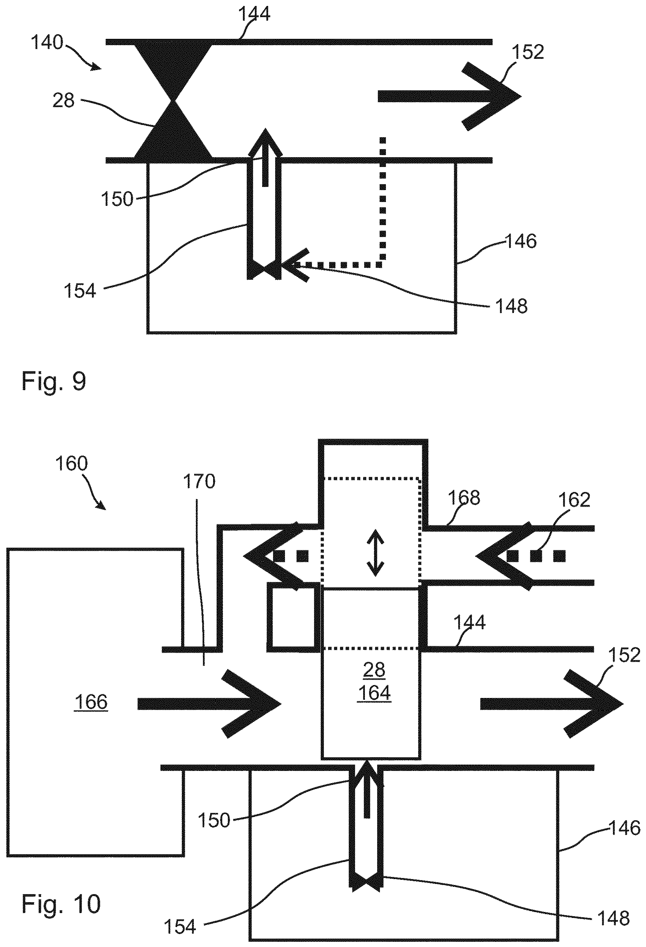

Der Raum über dem Gasschieber wird mit Abgas durchströmt, wie in Fig. 10 ersichtlich. Ein Teil dieses Abgases wird schon alleine durch die Laufspiele des Schiebers nach unten in den Ansaugkanal strömen. Viele Gasschieber weisen zusätzlich ein Loch nach unten auf, durch welches der Gaszug eingehängt wird. Das Abgasventil besteht im Falle eines Gasschiebers z.B. aus der Oberkannte des Gasschiebers und der Öffnung zur Abgasleitung, die sich im Vergasergehäuse befindet. Diese vorgeschlagene Weiterentwicklung einer Abgasrückführung kann auch unabhängig von den vorgenannten erfindungsgemäßen Merkmalen umgesetzt werden, um eine vorteilhafte Wirkung zu erzielen.

Externe Abgasrückführsysteme (AGR) erfordern in der Regel ein Ventil, welches durch die Motorsteuerung geregelt wird. Ohne Motorsteuerung geht das also nicht. Mit der vorgeschlagenen Lösung wird es auch ohne Motorsteuerung möglich eine externe Abgasrückführung zu realisieren.

AGR Ventile sind recht aufwändig und teuer, insbesondere durch den erforderlichen Aktuator, meistens eine Unterdruckdose in Kombination mit einem Steller der die Verbindung zum Unterdruck des Motors regelt. Des Weiteren wird meist noch ein Sensor benötigt zur Ermittlung der wirklichen AGR Ventilstellung, insbesondere auch zur Fehlerdiagnose im Rahmen der gesetzesseitigen On Board Diagnose (OBD) Anforderung. Das AGR Ventil bestimmt als maßgeblich die Kosten eine AGR Systems. Wegen der hohen Kosten verzichtet man daher oft auf AGR bei Benzinmotoren. Die erfindungsgemäße Lösung ermöglicht ein AGR Ventil auch ohne zusätzliche teuren Aktuatoren und Sensoren, wenn das AGR Ventil über die Betätigung der Drosselklappe betätigt ist (analog zu Lösung 3.), z.B. kann des Ventil auf derselben Antriebswelle sitzen oder über ein Getriebe mit dieser verbunden sein, oder aber über die Verbindung zum Gaspedal / Gasgriff etc.

Durch die vorgeschlagene Lösung werden bei minimalem Kostenaufwand NOx Emissionen sowie der Kraftstoffverbrauch und CO2 Emissionen reduziert.

Geteilter Blockkühlmantel: Bei modernen Motoren wird häufig der Zylinderblock mit einer höheren Kühlmitteltemperatur betrieben als der Zylinderkopf, um die Reibung der Kolben und den Wandwärmeverlust zu reduzieren. Das hat den Nachteil, dass die Klopfempfindlichkeit steigen kann, und dass im Bereich um den oberen Totpunkt bei niedrigen Kolbengeschwindigkeiten verstärkt Mischreibung auftritt, welches nachteilig für den Kraftstoffverbrauch, den Verschleiß und die Betriebsfestigkeit ist. Des Weiteren erzeugt dies Temperaturspannungen zwischen Zylinderkopf und Zylinderblock, die durch die Zylinderkopfdichtung mit hohem technischem Aufwand aufgefangen werden müssen.

In einer vorteilhaften Weiterentwicklung des Systems wird vorgeschlagen, dass die Fluidkammer in einen oberen Fluidkammerbereich und einen unteren Fluidkammerbereich aufgeteilt ist, wobei bevorzugt der obere Fluidkammerbereich als Zylinderkopf-Fluidkammer ausgebildet ist, die von dem unteren Fluidkammerbereich, die insbesondere als Zylinderblock-Fluidkammer ausgebildet ist, fluidtechnisch getrennt ist, insbesondere durch eine Zylinderkopfdichtung fluidtechnisch getrennt ist, so dass der Volumenstrom des Kühlmittels durch eine der beiden Fluidkammern, insbesondere der Zylinderblock-Fluidkammer unabhängig vom Volumenstrom der anderen Fluidkammer, insbesondere der Zylinderkopf-Fluidkammer, einstellbar ist, und bevorzugt zumindest einen separaten Zulauf und/oder Ablauf aufweist, wobei die Zylinderblock-Fluidkammer zeitweise mit Gas befüllbar ist, insbesondere durch Abpumpen eines Kühlmittels mit Gas befüllbar ist, und wobei bevorzugt Kühlkreise von Zylinderkopf-Fluidkammer und Zylinderblock-Fluidkammer baulich getrennt geführt sind und jeweils mit unterschiedlichen Kühlmittel gefüllt sind, wobei bevorzugt das Kühlmittel in der Zylinderblock-Fluidkammer eine höhere Siedetemperatur als in der Zylinderkopf-Fluidkammer aufweist, und wobei weiterhin bevorzugt die Zylinderblock-Fluidkammer zumindest zwei Fluidkammerbereiche umfasst, mit einer oberen Zylinderblock-Fluidkammer dessen Höhe nur ein Teil eines Zylinderhubes beträgt, insbesondere weniger als 50% eines Zylinderhubes beträgt, und bevorzugt mit der Zylinderkopf-Fluidkammer verbunden ist, und einer unteren Zylinderblock-Fluidkammer, in der zumindest ein Teil der unteren Zylinderblock-Fluidkammer in Richtung eines Kolbenhubes unterhalb der oberen Zylinderblock-Fluidkammer angeordnet ist, und dass insbesondere die Temperatur der unteren Fluidkammer zumindest 40°C höher ist als die Temperatur der Fluidkammer. Diese vorgeschlagene Weiterentwicklung kann auch unabhängig von den vorgenannten erfindungsgemäßen Merkmalen in einer Fluidkammer eines Zylinders umgesetzt werden, um eine vorteilhafte Wirkung zu erzielen.

Durch Teilen des Kühlmantels des Zylinderblockes in einen oberen und einen unteren Bereich kann der obere Bereich mit einer höheren Kühlmitteltemperatur als im unteren Bereich betrieben werden (z.B. mit der Kühlmitteltemperatur des Zylinderkopfkühlmantels. Dadurch wird die Klopfneigung reduziert und Mischreibung des Kolbens im Bereich des oberen Totpunktes vermieden. Außerdem werden die Temperaturspannungen zwischen Zylinderkopf und Zylinderblock deutlich reduziert. Des Weiteren kann der untere Bereich des Kühlmantels des Motorblockes mit einer weiter gesteigerten Kühlmitteltemperatur betreiben werden, z.B. durch Steigerung des Druckes oder durch Verwendung eines Hochtemperaturkühlmittels. Dadurch werden im unteren Bereich des Kolbenhubes die Kolbenreibung sowie der Wandwärmeverlust reduziert.

Im Prinzip gibt es mindestens drei verschiedene Varianten:
1. Trennung von Block- und Kopf- Kühlmantel, wobei auch nur der Block zeitweise mit Gas gefüllt wird.
2. Trennung von Kopf-, oberen- und unteren Blockkühlmantel, also 3 verschiedene Kühlmäntel.
3. Trennung von Block- und Kopf- Kühlmantel, wie bei 1., mit dem Unterschied, dass der obere Blockkühlmantel mit dem Kopfkühlmantel verbunden ist, bzw. der Kopfkühlmantel umfasst also auch einen gewissen oberen Teil des Blockkühlmantels, die Trennung erfolgt dann nicht durch die Kopfdichtung.

Hochtemperaturkühlmittel: Eine der größten Begrenzungen herkömmlicher Kühlsysteme sind die Kühlmittel, die aus einer Mischung von Wasser und maximal 70% Frostschutzzusatz wie z.B. Glykol bestehen. Diese Kühlmittel sieden üblicherweise schon bei 110 °C mit einem Bar Umgebungsdruck, bzw. bei 125°C mit einem Bar Überdruck, also 2 Bar Gesamtdruck. Daher ist die maximale Motorbetriebstemperatur auf Werte unterhalb dieser Grenzen limitiert, bzw. liegt wegen Sicherheitsreserven deutlich darunter.

In einer vorteilhaften Weiterentwicklung des Systems wird vorgeschlagen, dass das Kühlmittel in der Fluidkammer, insbesondere der unteren Fluidkammerbereiche, bei Umgebungsdruck von einem Bar eine Siedetemperatur von über 130°C und eine Gefriertemperatur von -30°C oder niedriger aufweist, und bevorzugt eine spezifische Wärmekapazität von größer 2,4 kJ / (kg·K) besitzt, wobei bevorzugt das Kühlmittel weniger als 30% Wasser enthält und insbesondere zumindest 94% Propylenglykol umfasst, oder zu insbesondere mindestens 80% aus Ethylenglykol, Propylenglykol, Glycerin oder aus einer beliebigen Mischung dieser Stoffe besteht t oder Öl oder Luft ist, und wobei insbesondere zumindest ein Fluidkammertemperatursensor zur Erfassung einer Kühlmitteltemperatur in der Fluidkammer, insbesondere in dem unteren Fluidkammerbereich umfasst ist, und bevorzugt das erste Ventil eingerichtet ist, einen Volumenstrom des Kühlmittels durch zumindest eine der Fluidkammern zu reduzieren, wenn die Fluidkammertemperatur nach Überschreiten einer Grenztemperatur ≥ 120°C diese Grenztemperatur wieder unterschreitet. Insbesondere kann vorteilhaft als Kühlmittel das unter der Handelsbezeichnung G13 bekannte Kühlmittel mit einer Mischung aus hauptsächlich Glycerin und Ethylenglykol oder mit der Handelsbezeichnung Evans Waterless Coolant, dass 94% bis 96% Propylenglykol enthält, eingesetzt werden. Diese vorgeschlagene Weiterentwicklung kann auch unabhängig von den vorgenannten erfindungsgemäßen Merkmalen umgesetzt werden, um eine vorteilhafte Wirkung zu erzielen.

Ein Kühlmittel mit deutlich höherer Siedetemperatur ermöglicht die Regelung der Temperatur über einen viel weiteren Bereich, so dass in der Teillast durch eine höhere Kühlmitteltemperatur deutliche Verbrauchsverbesserungen, ähnlich wie bei isolierten Kolben realisiert werden können. Insbesondere die Kombination der Motorlast-gesteuerten Beeinflussung des Kühlmittelvolumenstroms mit einem Hochtemperaturkühlmittel ermöglicht weitere Verbrauchsvorteile bei minimalem Aufwand, so dass auch kostengünstige und kleine Motoren mit Luft- oder Ölkühlung durch Verbrauchsminderung ökonomisch betrieben werden können. Luftgekühlte Motoren mit Temperaturregelung zum Beispiel werden üblicherweise mit ähnlichen niedrigen Kühlmitteltemperaturen unter 100°C betrieben um bei Volllast wegen der niedrigeren spezifischen Wärmekapazität und der niedrigen Wärmeleitfähigkeit des Kühlmediums Luft noch im Rahmen der zugelassenen Bauteiltemperaturen zu bleiben, insbesondere für Kolben, Zylinderkopf und Zylinderblock. Dasselbe gilt für Motoren mit Ölkühlung. Die Erhöhung der Kühlmediumtemperatur auf über 130°C ist hierbei von besonderer Bedeutung, da ein Betrieb mit Temperaturen oberhalb 130°C ist nur mit Fluiden ohne signifikanten Wasseranteil möglich, wie z.B. Luft, Öl, oder Propylenglykol, da sonst das Wasser verdampfen würde und einen großen Überdruck erzeugen würde, der die Grenzen üblicher Kühlsystemkomponenten überschreitet.

Durch ein solches Hochtemperaturkühlmittel in Verbindung mit erhöhten Kühlmitteltemperaturen lassen sich also bei niedrigsten Kosten der Kraftstoffverbrauch sowie die Abgasemissionen reduzieren, die Motorleistung erhöhen, die Gefahr der Motorüberhitzung, insbesondere durch lokales Filmsieden reduzieren. Durch Filmsieden kommt es bei stark Wasser-haltigen Kühlmitteln lokal zu extrem hohen Spitzentemperaturen, die insbesondere sehr schnell aufgebaut werden, da der Wärmeübergangskoeffizient beim Übergang vom Blasensieden zum Filmsieden schlagartig abfällt, gerade zu dem Moment wo die Brennraumtemperaturen am schnellsten ansteigen. Dies führt zu starken Thermoschockbedingungen, wobei es bei Kombination von resultierenden Thermospannungen und durch hohe Temperaturen reduzierte Bauteilfestigkeiten (quasi durch Aufweichen) schnell zu Rissbildung kommt. Eine solche Rissbildung tritt bei Luft-gekühlten Motoren zum Beispiel viel seltener auf. Auch kann der maximale Druck des Kühlsystems durch ein Hochtemperaturkühlmittel reduziert werden, wodurch die Belastung auf Schläuche und Dichtungen, insbesondere der Wasserpumpen sinkt. Das ist auch der Hauptgrund warum bei den meisten japanischen PKWs der maximale Kühlmitteldruck und die maximale Kühlmitteltemperatur niedriger ausgelegt sind als bei den meisten PKWs europäischer Hersteller, wobei zu bemerken ist, dass in den Pannenstatistiken meist japanische Hersteller mit wenige Ausfällen führend sind.

Auch wird die Gefahr von Korrosion und Kavitation, insbesondere in der Wasserpumpe dem Kühlerauslassbereich und schwimmenden Zylinderlaufbuchsen durch Reduzierung des Wasseranteils minimiert. Weiterhin erhöht sich durch eine höhere Kühlmitteltemperatur die vom Kühler abgegebene Kühlleistung, wodurch es möglich ist den Kühler zu verkleinern und auch Gewicht einzusparen. Bei Verwendung eines Wärmespeichers erhöht sich auch deren Speicherkapazität dramatisch, z.B. beträgt die Temperaturdifferenz eines typischen Japanischen PKW mit einer Kühlmitteltemperatur von 85°C und der Umgebung mit 25°C nur 60°C, diese wird bei einer Erhöhung der Kühlmitteltemperatur auf 145°C auf 120°C verdoppelt.

Insbesondere bei LKWs, bei denen wegen der erheblich höheren Betriebsdauer pro Fahrt der Kaltstart für die Abgasemissionen nicht so bedeutend wie bei PKWs ist, kann es von Vorteil sein, dass die Kühlmitteltemperatur im Zylinderblock und insbesondere auch im Zylinderkopf eine Grenztemperatur von 135°C überschreitet, insbesondere bei Teillast sowie auch bei Volllast, wobei das Kühlmittel insbesondere kein Wasser beinhaltet oder zumindest weniger als 3%. Eine solche hohe Temperatur des Kühlmittels kann insbesondere durch Reduzierung des durch den Motor strömenden Kühlmittelvolumenstromes erreicht werden.

Das hat den Vorteil, dass insbesondere der Kraftstoffverbrauch und die Partikelemissionen reduziert werden, die erheblich höhere Gesundheitskosten pro Gewichtseinheit als z.B. NOx Emissionen verursachen können.

Dabei ist es auch vorteilhaft, vorhandene Fahrzeuge umzurüsten, in dem das Thermostat durch ein Thermostat mit einer höheren Öffnungstemperatur von zumindest über 120°C ersetzt wird und das Kühlmittel durch ein Kühlmittel mit weniger als 20% Wasseranteil ersetzt wird.

Bei Motoren mit einem permanent offenen Bypasskreislauf, der nicht durch das Thermostat führt, kann ein weiteres Thermostat mit einer höheren Öffnungstemperatur von zumindest über 120°C eingebaut werden, um die Kühlmitteltemperatur noch schneller erhöhen zu können.

Um die Heizleistung des Fahrgastraums hierbei nicht zu reduzieren, ist es sinnvoll, das im Bypass Kreislauf eingesetzte zusätzliche Thermostat durch ein Thermostat mit parallel angeordnetem Thermostatbypassventil auszuführen, wobei das Thermostatbypassventil insbesondere mit einer Einheit zur Einstellung der Fahrgastraumtemperatur oder des Heizbedarfs verbunden ist. Hierzu kann das Thermostatbypassventil geöffnet werden, sobald mit der Einheit zur Einstellung der Fahrgastraumtemperatur oder des Heizbedarfs eine gewünschte Heizleistung eingestellt wird.

In einer vorteilhaften Weiterentwicklung des Systems wird vorgeschlagen, dass die Fluidkammer, insbesondere der untere Fluidkammerbereich, mit einem Ausgleichsbehälter verbunden ist, dessen Flüssigkeitsseite zumindest teilweise mit einem ersten flüssigen Kühlmittelfluid und dessen Gasseite mit einem zweiten gasförmigen Kühlmittelfluid gefüllt ist, wobei die Gasseite des Ausgleichsbehälter und die Flüssigkeitsseite des Ausgleichsbehälters jeweils über eine Verbindungsleitung mit der Fluidkammer verbunden sind, wobei bei sinkender Motorlast, insbesondere bei Unterschreiten einer vorbestimmten Motorlast, insbesondere einer betriebspunktabhängigen Motorlast und/oder bei Unterschreiten einer Motortemperatur, das erste Kühlmittelfluid zumindest teilweise aus der Fluidkammer in den Ausgleichsbehälter verschoben wird, so dass das zweite Kühlmittelfluid aus dem Ausgleichsbehälter zumindest teilweise in die Fluidkammer verschoben wird und wobei bevorzugt das zweite Kühlmittelfluid einen Sauerstoffanteil von weniger als 20% besitzt. Diese vorgeschlagene Weiterentwicklung kann auch unabhängig von den vorgenannten erfindungsgemäßen Merkmalen umgesetzt werden, um eine vorteilhafte Wirkung zu erzielen.

Ein Nachteil herkömmlicher Flüssigkeitskühlung ist, dass der Motor beim Aufwärmen aus mehreren Gründen zu stark gekühlt wird:
a. Übliche Kühlmittel haben eine hohe spezifische Wärmekapazität, so dass ein Großteil der über die Brennraumwände abgeführten Wärme zum Aufheizen des Kühlmittels verwendet wird.
b. Die Wärmeleitfähigkeit von Kühlmittel ist hoch, so dass die Wandwärme schnell von der Zylinderwand an die Außenwand des Wassermantels geleitet wird.
c. Der Wärmeübergangskoeffizient vom Kühlmittel an die Außenwand ist sehr hoch.

Das Entleeren des Kühlmittels beschleunigt das Aufheizen der Zylinderwand aus mehreren Gründen:
d. Das Gas, z.B. Luft hat nur ca. ein Zehntel der Wärmeleitfähigkeit von Kühlmittel, es wirkt also isolierend zwischen Zylinderwand und der Außenseite des Kühlmantels
e. Luft hat nur ca. 0,3 Promille der Volumen spezifischen Wärmekapazität von Kühlmittel, sie heizt sich also sehr viel schneller auf als Kühlmittel

Bei normalen Motoren ist der Ausgleichsbehälter eines Kühlsystems mit Luft gefüllt. Das hat den Nachteil, dass dadurch Luft in dem Kühlmittel gelöst wird und zur Korrosion führt, im schlimmsten Falle sogar zu Lochfraß. Wenn der Sauerstoffanteil im Gasbereich des Ausgleichsbehälters reduziert wird, z.B. durch Verwendung von Stickstoff, wird eine entsprechende Korrosion vermieden.

Die Vorteile bestehen also in einem schnelleren Aufheizen des Motors was zur Reduzierung von Kraftstoffverbrauch und Abgasemissionen führt, bei minimalem Aufwand.

Durch Einsatz einer elektrischen Kühlmittelpumpe, die in beide Richtungen betrieben werden kann, kann auf eine zusätzliche elektrische Kühlmittelpumpe und ein drittes Absperrventil sowie eine zusätzliche Verbindungsleitung verzichtet werden, was die Kosten und die Komplexität reduziert.

In einer vorteilhaften Weiterentwicklung des Systems wird vorgeschlagen, dass die Flüssigkeitsseite des Ausgleichsbehälters durch ein zweites Ventil, und durch eine Fluidfördereinrichtung und bevorzugt mit einem Einlassleitungsventil, mit einer Einlassleitung der Fluidkammer, insbesondere des unteren Fluidkammerbereichsverbunden ist, wobei bevorzugt das Einlassleitungsventil und das zweite Ventil als ein einzelnes 3/2 Wegeventil ausgeführt sind, und wobei weiterhin bevorzugt zumindest die Kühlmittelfördereinrichtung und/oder die zweite Fluidfördereinrichtungen eine bidirektionale Pumpe, insbesondere eine elektrische Pumpe ist, wobei bei sinkender Motorlast, insbesondere bei Unterschreiten einer vorbestimmten betriebspunktabhängigen Motorlast und/oder bei Unterschreiten einer Motortemperatur, das zweite Ventil zumindest teilweise geöffnet wird, und ein Einlassleitungsventil zur Steuerung des Volumenstroms des Kühlmittels durch die Fluidkammer zumindest teilweise geschlossen wird, und das erste Kühlmittelfluid aus der Fluidkammer in den Ausgleichsbehälter gepumpt wird, bis die Fluidkammer zumindest teilweise mit dem zweiten Kühlmittelfluid gefüllt ist, und dass beim Steigen der Motorlast, insbesondere beim Überschreiten einer vorbestimmten betriebspunktabhängigen Motorlast, das zweite Ventil zumindest teilweise geschlossen und das Einlassleitungsventil zumindest teilweise geöffnet wird. Diese vorgeschlagene Weiterentwicklung kann auch unabhängig von den vorgenannten erfindungsgemäßen Merkmalen umgesetzt werden, um eine vorteilhafte Wirkung zu erzielen.

Durch die Verwendung dieser zusätzlichen Fluidfördereinrichtung, die insbesondere elektrisch betrieben wird, kann das erste Kühlmittelfluid auch unabhängig von der Bauart und dem Betrieb der ersten Kühlmittelfördereinrichtung aus der Fluidkammer evakuiert oder in diese zurückgeführt werden. Insbesondere durch Schließen des Einlassleitungsventils ist es sogar möglich das erste Kühlmittelfluid aus der Fluidkammer zu evakuieren, während die erste Kühlmittelfördereinrichtung mechanisch angetrieben wird. Wenn die Fluidkammer ausreichend mit dem gasförmigen zweiten Kühlmittel gefüllt ist, sollte das dritte Ventil geschlossen werden, so dass die zusätzliche Fluidfördereinrichtung abgeschaltet werden kann und keine Leistung verbraucht. Wenn das erste Ventil nach einer Evakuierung, die insbesondere bei stehendem Motor stattfindet, geschlossen ist, kann somit auch ohne das zweite Ventil und ohne das Einlassleitungsventil sichergestellt werden, dass die Fluidkammer mit dem gasförmigen zweiten Kühlmittel gefüllt bleibt, auch während die erste Kühlmittelfördereinrichtung mechanisch angetrieben wird.

Die ausreichende Entleerung der Fluidkammer kann nach z.B. durch Ablauf einer vorbestimmten Mindestdauer bestimmt werden, oder durch Ermittlung der Antriebsleistung, insbesondere der aufgenommen Stromstärke, da die Leistungsaufnahme der zusätzliche Fluidfördereinrichtung abfällt, sobald das gasförmige zweite Kühlmittelfluid die zusätzliche Fluidfördereinrichtung erreicht.

In einer vorteilhaften Weiterentwicklung des Systems wird vorgeschlagen, dass in der Verbindungsleitung zwischen der Gasseite und einer Auslassleitung der Fluidkammer, insbesondere des unteren Fluidkammerbereichs, ein drittes Ventil angeordnet ist, durch das ein Fluidstrom des zweiten Kühlmittelfluids beim Abpumpen des ersten Kühlmittelfluids aus der Fluidkammer in den Ausgleichsbehälter und/oder beim Befüllen der Fluidkammer mit dem ersten Fluides geöffnet wird und/oder dass das dritte Ventil nach Befüllen der Fluidkammer mit dem ersten Kühlmittelfluid zumindest teilweise geschlossen wird, insbesondere nach einer zeitlichen Verzögerung geschlossen wird.

Durch die Verbindung des Kühlmantels mit dem Druckausgleichsbehälter, die durch ein Absperrventil reguliert werden kann, ist die Entlüftung des Kühlmantels sehr viel schneller möglich als bei einem herkömmlichen Kühlsystem, wo die Luft nur durch einen parallelen Bypass und durch einige Drosselstellen in den Druckausgleichsbehälter zurückgeführt wird. Dadurch wird die Möglichkeit der lokalen Materialüberhitzung durch mangelnde Kühlung wegen Luftblasen vermieden.

Dabei ist von besonderem Vorteil, dass, zumindest während der Entlüftung der Fluidkammer, bzw. der Befüllung der Fluidkammer mit dem ersten Kühlmittelfluid, der gesamte Kühlmittelstrom oder zumindest 50% des gesamten Kühlmittelstrom durch den Druckausgleichsbehälter bzw. einem Gasblasenabscheider geführt wird. Bei einer normalen Entlüftung des Kühlsystems herrscht in den Entlüftungsleitungen ein relativer Überdruck durch den Gasblasen zusammen gedrückt werden und sich nur schwer entlüften lassen. Bei der vorgeschlagenen Anordnung wird durch die Saugwirkung der Fluidfördereinrichtung in den Entlüftungsleitungen ein relativer Unterdruck erzeugt, der die Gasblasen vergrößert und leicht aus der Fluidkammer saugt, ähnlich wie bei einer Vakuumbefüllung des Kühlsystems, z.B. in der Fahrzeugproduktion.

Bei der getrennten Entleerung und Befüllung verschiedener Fluidkammern ist es von Vorteil, wenn die Fluidkammer des Zylinderkopfes zuerst befüllt wird und erst anschließend die Fluidkammer des Zylinderblocks befüllt wird, da der Zylinderkopf schwieriger zu entlüften ist und die Entlüftung länger dauern kann, und da der Zylinderkopf sich schneller aufwärmt und stärker thermisch belastet wird als der Zylinderblock.

Ein Nachteil von Verfahren mit stehendem Kühlmittel ist, dass ein stehendes Kühlmittel zu Ungleichverteilung des Temperaturniveaus führt und zu hohen lokalen Materialbelastungen, insbesondere der Zylinderkopfdichtung und der mit ihr in Kontakt stehenden Flächen der Zylinderkopfes und des Zylinderblockes.

Eine solche Ungleichverteilung des Temperaturniveaus lässt sich vermeiden, falls eine Fluidkammer mit Gas gefüllt ist und nach der Befüllung die Einlassleitung und die Auslassleitung der Fluidkammer miteinander verbunden werden, z.B. über ein zusätzliches Zirkulationsventil. Durch den Thermosiphoneffekt entsteht eine Zirkulation des in der Fluidkammer vorhandenen Gases. Weiterhin lässt sich diese Zirkulation erhöhen, wenn eine Kühlmittelfördereinrichtung zwischen Einlassleitung und die Auslassleitung der Fluidkammer angeordnet ist, die auch Gas fördern kann.

Dynamische Kühlmantelisolierung: Es ist bekannt einen Kühlmantel mit einer Isolierschicht zu versehen, wobei die Isolierschicht insbesondere eng an innen liegenden Zylinderwand anliegt. Das hat den Nachteil, das bei hoher Motorlast die Kühlwirkung reduziert ist und dass bei einer Evakuierung der Kühlflüssigkeit die Isolierschicht durch ihre hohe spezifische Wärmekapazität eine sehr viel höhere zu erwärmende thermische Masse darstellt als Luft und dass sie eine größere Wärmeleitfähigkeit als Luft aufweist. Bei Befüllen mit einem heißen Kühlmittel wird dabei das Kühlmittel von der Zylinderwand isoliert und die Wärme des Kühlmittels wird verlustmäßig an die Außenfläche abgegeben.

In einer vorteilhaften Weiterentwicklung des Systems wird vorgeschlagen, dass zumindest Teilbereiche der vom Kühlmittel zu einer Zylinderwandeines Zylinders abgegrenzten und nach außen gerichteten Fläche der Fluidkammer, insbesondere des unteren Fluidkammerbereichs, mit einer innen liegenden Isolierschicht versehen ist, wobei die Isolierschicht zumindest abschnittsweise an einer nach außen gerichteten Fläche der Fluidkammer anliegt, und bevorzugt mehrteilig ausgeführt ist, wobei bevorzugt die Isolierschicht zur nach außen gerichteten Fläche der Fluidkammer vorgespannt ist, so dass die Isolierschicht zur Mittellinie des Zylinders einen größeren Radius als die nach außen gerichtete Fläche der Fluidkammer aufweist, oder dass die Isolierschicht nach innen durch punktartige Abstandshalter zur Zylinderwand beabstandet ist, und dass die Isolierschicht bevorzugt zwei Materialien mit unterschiedlichen Wärmeausdehnungskoeffizienten, insbesondere einen Bimetallträger, umfasst, wobei ein Wärmeausdehnungskoeffizient des außen angeordneten Materials größer ist als ein Wärmeausdehnungskoeffizient des innen liegenden Materials, so dass sich die Isolierschicht zumindest an Endbereichen bei Erwärmung inwärts krümmt und eine Kontaktfläche mit der nach außen gerichteten Fläche der Fluidkammer verringert, so dass der Wärmeübergangskoeffizient nach außen erhöht ist, und dass insbesondere benachbarte Isolierschichten an Endbereichen überlappen. Diese vorgeschlagene Weiterentwicklung kann auch unabhängig von den vorgenannten erfindungsgemäßen Merkmalen umgesetzt werden, um eine vorteilhafte Wirkung zu erzielen.

Durch die vorgeschlagene Lösung wird in einem Kaltstart die Außenfläche des Kühlmantels bzw. der Fluidkammer isoliert, so dass sich die Fluidkammer schneller aufwärmt. Bei hohen Lasten und Kühlmitteltemperaturen bewegt sich die Isolierschicht von der Außenfläche der Fluidkammer weg, wodurch eine bessere Kühlung erreicht wird.

Wärmespeicherintegration: Der Einsatz von üblichen Wärmespeichern hat den Nachteil, dass der größte Anteil der gespeicherten Wärme beim Entladen an die Außenflächen des Kühlmantels verloren wird. Daher müssen diese Wärmespeicher besonders groß und schwer sein, um genug Wärme speichern zu können so dass signifikante Kraftstoffverbrauchseinsparungen erzielen werden können. Dadurch sind diese Wärmespeicher sehr teuer und meist unwirtschaftlich. Des Weiteren kann bei einer Evakuierung des Kühlmittels aus dem Wassermantel ab gewissen Motorlasten eine höhere Zylinderwandtemperatur erreicht werden als durch einen Wärmespeicher, wodurch bei einer Kombination von Wärmespeicher und Kühlmittelevakuierung die erforderliche Größe des Wärmespeichers um ein Vielfaches reduziert werden kann, wodurch eine wirtschaftliche Anwendung ermöglicht wird.

In einer vorteilhaften Weiterentwicklung des Systems wird vorgeschlagen, dass mindestens ein Kühlmittelwärmespeicher, bevorzugt ein Ausgleichsbehälter, umfasst ist, der mit der Fluidkammer insbesondere mit dem unteren Fluidkammerbereich, und mit einem Ölwärmetauscher verbunden ist, wobei bei einem Kaltstart heißes Kühlmittel aus dem Kühlmittelwärmespeicher durch den Ölwärmetauscher förderbar ist, insbesondere wenn die Fluidkammer nicht vom Kühlmittel durchströmt wird, und dass insbesondere in einem warmen Betriebszustand heißes Kühlmittel von der Fluidkammer in den Kühlmittelwärmespeicher förderbar ist. Diese vorgeschlagene Weiterentwicklung kann auch unabhängig von den vorgenannten erfindungsgemäßen Merkmalen umgesetzt werden, um eine vorteilhafte Wirkung zu erzielen.

Wenn das Kühlmittel evakuiert wird, macht ein Wärmespeicher zum Aufheizen des Motors kein Sinn mehr, da der Zylinderkopf zwecks niedriger NOx Emissionen kalt gehalten werden soll. Daher ist ein Wärmespeicher sehr sinnvoll zum schnellen erwärmen des Öls, insbesondere in Kombination mit einer Innenisoliermaßnahme.

Wird hingegen die Methode der Kühlmittelevakuierung nicht angewandt, so besteht eine vorteilhafte Ausführung darin, beim Kaltstart das in einem Wärmespeicher gespeicherte warme Kühlmittel nur in die um den Zylinder herum angeordnete Fluidkammer zuzuführen und den Volumenstrom nach Befüllung der Fluidkammer mit warmen Kühlmittel zumindest vorübergehend wieder zu schließen. Dadurch kann das erforderliche Volumen des Wärmespeichers deutlich reduziert werden.

Herkömmliche Ausdehnungsgefäße haben ein sehr viel kleineres Kühlwasservolumen als Wärmespeicher, so dass durch eine Isolierung zum Wärmespeicher keine bedeutenden Verbrauchsverbesserungen zu erzielen sind. Durch Verschieben des Luftpolsters von dem Ausdehnungsgefäß in den Motorkühlmantel nach Abstellen des Motors könnte das Wärmespeichervolumen eines Ausdehnungsgefäßes etwa verdoppelt werden, ohne zusätzlichen Bauraum zu benötigen. Nachteilig ist dabei, dass dies schnell zur Korrosion des Kühlwassermantels führt, da dieser dann von innen mit Luft in Berührung kommt in Verbindung mit Wasser aus dem Kühlmittel. Diese Korrosion wird vermieden durch Verwendung eines Wasser-freien Kühlmittels sowie durch Ersatz von Luft im Ausdehnungsgefäß mit einem inerten Gas wie z.B. Stickstoff. Wenn ein solcher hochisolierter Ausgleichsbehälter nur zur Erwärmung von Motoröl, welches insbesondere durch Innenisolierungen vom Kurbelgehäuse thermisch getrennt ist, benutzt wird, kann die Größe eines normalen Ausdehnungsgefäßes durchaus ausreichend sein, um eine signifikante Verbrauchsreduzierung zu bewirken.

In einer vorteilhaften Weiterentwicklung des Systems wird vorgeschlagen, dass ein Ausgleichsbehälter des Kühlsystems als hochisolierter Wärmespeicher ausgeführt und mit Kühlmittel und mit Gas gefüllt ist, wobei ein Ablauf des Ausgleichsbehälters unten angeordnet ist und ein Zulauf insbesondere in eine Verschlusskappe des Ausgleichsbehälters integriert ist, und insbesondere im Innenvolumen des Ausgleichsbehälters unterhalb des Sollfüllstands horizontal angeordnete Trennwände angeordnet sind, die wechselseitig an einer Seite von unten nach oben eine Strömungsöffnung freigeben, so dass eine labyrinthartiger Strömungskanal des Kühlmittels von der Oberfläche nach unten definiert ist.

Die Anschlussleitungen von Wärmespeichern können zu großen Wärmeverlusten führen durch Wärmeleitung und insbesondere durch Strömung des Kühlmittels durch den Thermosiphoneffekt. Benötigt ein Wärmespeicher eine Kappe zum Nachfüllen von Flüssigkeit, kommt es zu zusätzlichen Wärmeverlusten. Ein weiteres Problem von Wärmespeichern sind innere Kurzschlüsse, das heißt dass ein kleiner Teilstrom der Speicherflüssigkeit durch an dem Großteil der Speicherflüssigkeit vorbeiströmt. Dadurch wird beim Aufladen das kalte Speichermedium nicht vollständig von heißer Speicherflüssigkeit verdrängt und ebenso wird beim Entladen das heiße Speichermedium nicht ausreichend von kälterem verdrängt.

Durch Integration des Zulaufs in die Verschlusskappe wird eine mögliche Verlustquelle vermieden. Die Nutzung des Zulaufs hat hierbei den Vorteil, dass dieser mit Luft bzw. Gas gefüllt ist und daher eine sehr geringe Wärmeleitfähigkeit aufweist. Weiterhin wird durch die darin enthaltene Gasblase eine Rückströmung der Speicherflüssigkeit - also der Thermosiphoneffekt verhindert. Innere Kurzschlüsse können durch Trennwände verhindert werden, was die Effektivität von Wärmespeichern erhöht.

Zwei verschiedene Kühlmittel: Der Kühlmantel eines Zylinderkopfes ist üblicherweise sehr viel komplexer als der Kühlmantel eines Zylinderblockes durch die im Zylinderkopf verlaufenden Einlass-und Auslasskanäle, die Zündkerze oder Glühkerze, das Einspritzventil, etc. Daher ist die Entlüftung des Kühlmantels eines Zylinderkopfes sehr viel schwieriger als die eines Zylinderblockes und dauert typischerweise sehr viel länger. Daher ist es bei einer zyklischen Entleerung des Kühlmantels vorteilhaft nur den Kühlmantel des Zylinderkopfes zu Entleeren und nicht den des Zylinderkopfes. Außerdem ist der Zylinderkopf thermisch sehr viel stärker belastet als der Zylinderblock, so dass eine Beschädigung durch Überhitzen sehr viel leichter möglich ist als beim Zylinderblock, unter anderem weil die heißen Auslasskanäle durch den Zylinderkopf laufen, der Zylinderkopf beim kompletten Arbeitstakt vollständig mit heißem Arbeitsgas in Kontakt steht, wobei die Zylinderoberfläche am Ende des Arbeitstaktes im oberen Totpunkt noch komplett vom Kolben abgedeckt wird und erst ganz am Ende des Arbeitstaktes vollständig mit dem Arbeitsgas in Kontakt steht. Ein weiteres Problem ist das Kühlmittel mit hoher Siedetemperatur wie z.B. Öle brennbar sind. Bei einer Leckage wie durch einen defekten Verbindungsschlauch könnte dann Öl auf heiße Motorteile wie den Auspuff laufen und sich entflammen. Bei einer Trennung von Kopf- und Blockkühlmittelkreislauf wobei insbesondere unterschiedliche Kühlmittel verwendet werden, kann der Zylinderblockkühlmittelkreislauf komplett innerhalb des Motors untergebracht werden und durch einen Wärmetauscher an den kälteren Kühlmittelkreislauf des Zylinderkopfes gekoppelt werden. Dadurch werden die oben beschriebenen Probleme vermieden, und insbesondere wird die Gefahr der Leckage eines entflammbaren Kühlmittels minimiert.

In einer vorteilhaften Weiterentwicklung des Systems wird vorgeschlagen, dass in einem Steg zwischen Brennräumen benachbarter Zylinder zumindest eine erste Kühlmittel-Durchtrittsöffnung zum Kühlmittelaustausch zwischen der jeweils der Druck- und Gegendruckseite des Kolbens zugewandten Seite im Zylinderblock und/oder Zylinderkopf angeordnet ist, und/oder in der Mitte zwischen zwei benachbarten Auslassventilen eines Zylinders in der Ebene durch die Mittellinien der beiden Auslassventile eine zweite Kühlmittel-Durchtrittsöffnung angeordnet ist, wobei eine Strömungsgeschwindigkeit in zumindest einer der Kühlmittel-Durchtrittsöffnungen durch Reduzierung zumindest eines Strömungsquerschnittes der Zylinderkopf-Fluidkammer und/oder der Zylinderblock-Fluidkammer in Richtung parallel zur Kühlmittel-Durchtrittsöffnung erhöht wird, wobei bevorzugt die Kühlmittel-Durchtrittsöffnung mindestens 10% des minimalen Gesamtquerschnittes der Zylinderkopf-Fluidkammer in der Ebene durch die Mittellinien der beiden Auslassventile beträgt. Diese vorgeschlagene Weiterentwicklung kann auch unabhängig von den vorgenannten erfindungsgemäßen Merkmalen umgesetzt werden, um eine vorteilhafte Wirkung zu erzielen.

Zwickeldurchflussregelung: Der Steg zwischen zwei benachbarten Zylindern ist der thermisch am höchsten belasteten Bereich eines Motorblockes. Zur Absenkung der Temperatur in diesem Zwickel werden seit Neustem Bohrungen in diesem Steg eingebracht, durch die Kühlmittel fließt. Im Zylinderkopf werden aus demselben Grund auch teilweise Schlitze in diesen Stegbereich eingesägt. Dadurch wird die Temperatur in diesem Bereich zwar abgesenkt, der Bereich bleibt aber nach wie vor der am höchsten belasteten Bereich eines Motorblockes, da zum einen die Fläche dieser Stegkühlöffnungen die zum Wärmeaustausch mit dem Kühlmittel zur Verfügung steht, sehr klein ist, und zum anderen die Strömungsgeschwindigkeit wegen dem hohen Druckverlust der kleinen Öffnungen sehr niedrig ist im Vergleich zu den restlichen durchströmten Bereichen des Wassermantels. Durch die niedrige Strömungsgeschwindigkeit ist der Wärmeübergangskoeffizient niedriger als in den anderen Bereichen. Durch gezielte Drosselung der anderen Bereiche des Wassermantels wird die Strömungsgeschwindigkeit in dem Bereich der Stegkühlungsöffnung deutlich erhöht und dadurch die Temperaturbelastung reduziert. Dadurch reduziert sich die Klopfempfindlichkeit und man kann auch bei Motoren mit hoher Spitzenleistung ein Hochtemperaturkühlmittel mit niedrigerer spezifischer Wärmekapazität einsetzen. Mit normalem Kühlmittel, welches insbesondere mehr als 30% Wasser beinhaltet, wäre eine solche Steigerung der Strömungsgeschwindigkeit im Zwickel durch Drosselung der gegenüber liegenden Seite nicht möglich, da dadurch der Druckverlust deutlich steigen würde, sodass es bei hoher Motorlast wegen der niedrigen Siedetemperatur des Wassers zur Bildung von Dampfblasen käme, wodurch das Kühlmittel irreversibel geschädigt würde und es bei Filmsieden zu lokalen Materialüberhitzungen käme.

Getriebeanbindung: Nach dem Kaltstart eines Motors erwärmt sich das Getriebe sehr viel langsamer als der Motor. Bei Automatikgetriebe werden Wärmetauscher eingesetzt um das Getriebeöl bei hohen Belastungen zu Kühlen. Im Aufwärmbetrieb lässt sich damit das Getriebe auch schneller erwärmen. Die meisten Handschaltgetriebe besitzen aber keine Ölpumpe, so dass ein schnelles Aufwärmen mittels Motorkühlmittel nicht möglich ist.

In einer vorteilhaften Weiterentwicklung des Systems wird vorgeschlagen, dass am Getriebeölsumpf eines mit dem Verbrennungsmotor verbunden Getriebes und/oder am Hinterachsdifferential ein externer, im Kühlkreislauf des Verbrennungsmotors eingebundener Getriebeölwärmetauscher im Ölkreislauf angeordnet ist, der vorzugsweise im Kühlkreislauf zwischen Verbrennungsmotor und Kühler angeordnet ist, wobei stromabwärts vom Getriebeölwärmetauscher im Kühlmittelkreislauf eine Kühlerbypassleitung mit einem Kühlerbypassventil zur Umgehung des Kühlers angeordnet ist, so dass der Getriebeölwärmetauscher zumindest teilweise ohne Kühlerdurchströmung betreibbar ist, wobei das Getriebe vorzugsweise als ölpumpenloses Schaltgetriebe ausgebildet ist und bevorzugt der Getriebeölwärmetauscher eine Außenisolierung aufweist, und wobei bevorzugt ein Außengehäuse des Getriebeölwärmetauscher aus Kunststoff ausgeführt ist und wobei weiterhin bevorzugt der Getriebeölwärmetauscher an dem Getriebe angeklebt ist. Diese vorgeschlagene Weiterentwicklung kann auch unabhängig von den vorgenannten erfindungsgemäßen Merkmalen umgesetzt werden, um eine vorteilhafte Wirkung zu erzielen.

Durch das Anbringen eines Wärmetauschers von außen an den Ölsumpf des Getriebes kann auch ein Handschaltgetriebe schnell aufgeheizt werden. Des Weiteren wirkt das ganze Getriebe dadurch bei Volllast auch als Kühler, wodurch der Hauptkühler kleiner dimensioniert werden kann. Außerdem ist durch das Ankleben auch ein nachträglicher Einbau leicht möglich. Durch die Außenisolierung des Wärmetauschers wird die Aufheizwirkung weiter verbessert, ebenso wie durch die Anfertigung der äußeren Hälfte des Wärmetauschers aus Kunststoff. Durch eine solche Einbauweise kann auch das Getriebe von einfachen Zweirädern schnell aufgewärmt werden, im Falle eines Motors mit Luftkühlung z.B. durch Leitung der erwärmten Luft vom Motor zum Getriebe, oder sogar durch Leitung von heißem Abgas aus dem Auspuff zum Getriebe. Ähnlich zur Anbindung an ein Handschaltgetriebe lässt sich ein Wärmetauschers natürlich auch von außen an den Ölsumpf eines Differentialgetriebes z.B. einer Hinterachse anbringen.

In einer vorteilhaften Weiterentwicklung des Systems wird vorgeschlagen, dass der Brennraum des Zylinders eine vom Brennraum getrennte Expansionskammer aufweist, die zumindest durch ein Expansionskammerventil, insbesondere ein Überdruckventil, mit dem Brennraum verbunden ist, wobei das Expansionskammerventil bei einer Erhöhung des Brennraumdruckes geöffnet wird und bei einer Reduzierung des Brennraumdruckes geschlossen wird, und wobei bevorzugt die Expansionskammer in einem Kolben angeordnet ist und weiterhin bevorzugt die Expansionskammer ein zweites Expansionskammerventil aufweist, wobei das zweite Expansionskammerventil durch Massenträgheit geöffnet werden kann, insbesondere nach zumindest 90° Kurbelwinkel nach dem oberen Totpunkt geöffnet werden kann, wobei weiterhin bevorzugt im Kolben unterhalb der Expansionskammer eine Isolierschicht angeordnet ist. Vorstellbar ist natürlich auch, dass auch das zweite Expansionskammerventil ein einfaches Überdruckventil ist, welches sich öffnet sobald der Druck in der Expansionskammer um einen Mindestbetrag grösser ist als der Druck im Brennraum. Diese vorgeschlagene Weiterentwicklung kann auch unabhängig von den vorgenannten erfindungsgemäßen Merkmalen umgesetzt werden, um eine vorteilhafte Wirkung zu erzielen.

Durch Öffnung einer Expansionskammer werden Druck und Temperatur im Brennraum reduziert und damit NOx Bildung und erhöhter Wandwärmeverlust reduziert. Nach unterschreiten des Öffnungsdruckes, z.B. 50 bar wird das erste Expansionskammerventil geschlossen und der Druck in der Expansionskammer zeitweise zwischengespeichert. Später nach Öffnen des zweiten Expansionskammerventils wird die zwischengespeicherte Druckenergie an den Brennraum abgegeben um die effektive Arbeit zu erhöhen. Die Expansionskammer unter dem Kolben stellt gleichzeitig eine Isolierschicht dar, die die Wandwärmeabgabe des Kolbens reduziert. Durch eine Isolierschicht unterhalb des Kolbens kann der Wärmeverlust der Expansionskammer zusätzlich reduziert werden.

Vorteilhafterweise kann ein Hochtemperatur Phasenwechselmaterial in die Kolbenkrone integriert sein, wobei das Phasenwechselmaterial bevorzugt mit einer Isolierschicht zur Unterseite des Kolbens hin isoliert ist und wobei die Schmelztemperatur des Phasenwechselmaterial bevorzugt über 110 °C liegt und insbesondere aus Lithium besteht oder einer Mischung aus Lithium und Natrium oder einer anderen Mischung zumindest eines Alkalimetalls mit einem weiteren Metall. Wie zuvor beschrieben hat eine Kolbenisolierung üblicherweise mehr Nachteile als Vorteile. Durch Integration eines Phasenwechselmaterials in die Kolbenkrone können diese Nachteile vermieden werden. Beim Ladungswechsel sowie beim Verdichten ist die Kolbentemperatur üblicherweise relativ niedrig, so dass das Phasenwechselmaterial einen festen Aggregatzustand einnimmt. Zu Beginn der Verbrennungsphase steigt die Kolbentemperatur ohne Phasenwechselmaterial üblicherweise sehr stark an, wodurch der Wandwärmeverlust dramatisch steigt. Mit integriertem Phasenwechselmaterial schmilzt zuerst das Phasenwechselmaterial wodurch die Kolbentemperatur mehr oder weniger konstant bleibt, bis das Phasenwechselmaterial geschmolzen ist. Das Phasenwechselmaterial speichert also kurzzeitig einen Teil der sonst verlorenen Wandwärme. Nach Abschluss der Verbrennung in der Expansionsphase sinkt die Temperatur im Brennraum wieder deutlich unter die Schmelztemperatur des Phasenwechselmaterials. Dabei wird die im Phasenwechselmaterial gespeicherte Energie wieder an den Brennraum abgegeben und genutzt. Dadurch wird der Wirkungsgrad des Arbeitsprozesses erhöht und Kraftstoffverbrauch reduziert. Durch die Isolierung des Kolbens unterhalb der Schicht mit dem Phasenwechselmaterial wird vermieden, dass zu viel der im Phasenwechselmaterial gespeicherten Wärme verloren geht. Des Weiteren wird die Klopfneigung reduziert, wodurch weitere Wirkungsgradsteigerungen möglich sind. Diese vorgeschlagene Weiterentwicklung kann auch unabhängig von den vorgenannten erfindungsgemäßen Merkmalen umgesetzt werden, um eine vorteilhafte Wirkung zu erzielen.

Natriumkühlung in Kolbenmitte: Vorteilhafterweise kann unter der Mitte des Kolbens zumindest eine Kammer angeordnet sein, die zumindest teilweise mit einem Kühlmittel befüllt ist, wobei das Kühlmittel vorzugsweise aus Natrium besteht wobei die Gesamtquerschnittsfläche aller dieser Kammern zumindest mehr als 40% der Querschnittsfläche des Zylinders beträgt. Diese vorgeschlagene Weiterentwicklung kann auch unabhängig von den vorgenannten erfindungsgemäßen Merkmalen umgesetzt werden, um eine vorteilhafte Wirkung zu erzielen.

Die Reduzierung der Kolbentemperatur im Bereich hinter den Kolbenringen durch einen teilweise mit Natrium gefüllten Ringkanal am Außenbereich des Kolbens ist bei Dieselmotoren bekannt um ein Verkoken des Motoröls in den Kolbenringnuten zu vermeiden, da ein solches Verkoken den Verschleiß der Kolbenringe erhöht und erheblich zur Alterung des Öls beiträgt. Der größte Teil der Wandwärmeverluste findet jedoch in der Kolbenmitte statt, wo die Isolierschicht durch Luft zur Flammfront am kleinsten ist und wo die Kolbentemperaturen auch lokal am höchsten sind. Durch Anordnung einer teilweise mit einem Kühlmittel wie z.B. Natrium gefüllten Kammer unter der thermisch am höchsten belasteten Kolbenmitte wird im oberen Totpunkt das Kühlmittel nach oben an die Kolbenkrone geschleudert, wobei das Kühlmittel die Wandwärme aufnimmt. Das Anschleudern des Kühlmittels erzeugt eine Strömungsgeschwindigkeit, die den Wärmeübertragungsprozess durch Konvektion verstärkt. Dadurch wird die Kolbentemperatur reduziert sowie auch die dynamische Änderung der Kolbentemperatur. Das hat zur Folge, dass die Wandwärmeverluste reduziert werden. Nach Ende der Verbrennung wird das Kühlmittel weg von der Kolbenkrone nach unten geschleudert. Dabei kommt es zu einer starken Isolationswirkung, so dass auch in der zweiten Hälfte des Arbeitstaktes der Wandwärmeverlust deutlich reduziert wird. Des Weiteren wird dadurch die Klopfempfindlichkeit reduziert.

In einer vorteilhaften Weiterentwicklung des Systems wird vorgeschlagen, dass zumindest eine in dem Brennraum angeordneten Wärmequelle, insbesondere eine Glühkerze umfasst ist, und dass die Wärmequelle bei einem Kaltstart insbesondere bei einer Motortemperatur unterhalb 30°C eingeschaltet wird und zumindest zeitweise länger als zumindest 5 Minuten eingeschaltet bleibt und insbesondere bei einer Kühlmitteltemperatur von über 80° eingeschaltet bleibt und dass weiterhin die Wärmequelle insbesondere bei einem Warmstart bei einer Kühlmitteltemperatur von über 80°C eingeschaltet wird, wobei bevorzugt die Wärmequelle innerhalb eines Verbrennungszyklus jeweils zumindest einmal eingeschaltet und ausgeschaltet wird, wobei insbesondere die Wärmequelle insbesondere im Arbeitstakt eingeschaltet wird und nach dem Arbeitstakt abgeschaltet wird. Diese vorgeschlagene Weiterentwicklung kann auch unabhängig von den vorgenannten erfindungsgemäßen Merkmalen umgesetzt werden, um eine vorteilhafte Wirkung zu erzielen.

Die vorteilhafte Weiterentwicklung schlägt vor, dass die Glühkerzen nicht nach einer Zeit oder Überschreiten einer Kühlmitteltemperatur abgeschaltet wird, da das laut Gesetzgebung als Abschalteinrichtung angesehen werden könnte. Eine Abschaltung könnte erfolgen bei Situationen, die ansonsten zu einer Schädigung der Glühkerze führen würde, z.B. bei Überschreitung einer maximal zulässigen Temperatur der Glühkerze selbst. Stand der Technik ist jedoch, dass die Glühleistung schon kurz nach dem Kaltstart automatisch reduziert wird, um ein Überhitzen der Glühkerzen zu vermeiden, jedoch mit dieser reduzierten Heizleistung noch bis zu 3 Minuten weiterarbeitet. Bei modernen Dieselmotoren wird zur Reduzierung der NOx Emissionen das Verdichtungsverhältnis reduziert. Dadurch wird die Kaltstartfähigkeit verschlechtert, im Warmlauf kommt es zu erhöhter Bildung von Partikeln und die Laufruhe verschlechtert sich. Zur Vermeidung dieser Probleme werden Glühkerzen verwendet, die bis zum Ablauf einer gewissen Zeit von typischerweise 3 Minuten oder bis zum Erreichen einer gewissen Kühlmitteltemperatur von typischerweise ca. 70°C mit einer Spannung versehen werden, so dass sich an der Spitze der Glühkerze eine Temperatur von bis zu über 1000°C einstellen kann. Nachteilig ist dabei, dass die positive Wirkung der Glühkerzen im Warmstart nicht genutzt wird um Emissionen zu reduzieren. Es ist jedoch bekannt, dass Dieselmotoren im Test mit Warmstart mehr als doppelt so hohe NOx Emissionen verursachen können als im Test mit Kaltstart (Weiss et al., "A complimentary emissions test for light duty vehicles: Assessing the technical feasibility of candidate procedures", JRC Scientific and Policy Report EUR 25572 EN, 2013). Auf den ersten Blick erscheint die Erhöhung der Brennraumtemperatur zur NOx Reduzierung widersprüchlich, da höhere Brennraumtemperaturen die Bildung von NOx begünstigen. Ein ähnlicher Widerspruch gilt allerdings auch für die Reduzierung des Verdichtungsverhältnisses, welches eine Erhöhung des Kraftstoffverbrauches erwarten lässt. Der Kraftstoffverbrauch von modernen Dieselmotoren mit wurde mit reduziertem Verdichtungsverhältnis jedoch gleichzeitig gesenkt, z.B. durch intelligente Abstimmung der Einspritzverläufe. Durch die geschickte Anpassung des Einspritzverlaufes in Kombination mit der Aktivierung von Glühkerzen im Warmstart lassen sich sowohl die Partikelemissionen als auch die NOx Bildung reduzieren, da die NOx Emissionen in erster Linie von der maximalen Brennraumtemperatur abhängen, und nicht von der durchschnittlichen Brennraumtemperatur während des Arbeitstaktes. Die maximale Brennraumtemperatur lässt sich reduzieren, wenn man die Verbrennung am Anfang verzögert, z.B. durch einen verspäteten Einspritzbeginn oder durch die Reduzierung der Einspritzmenge vor Erreichen der maximalen Brennraumtemperatur. Ohne Aktivierung der Glühkerze würde dies den Verbrennungsvorgang merklich verlangsamen und den Kraftstoffverbrauch sowie Partikelemissionen erhöhen. Die hohe Temperatur der Glühkerze, die bei den in Abgastesten vorherrschenden niedrigen Motorlasten meist höher ist als die durchschnittliche Brennraumtemperatur während dem Arbeitstakt, beschleunigt daher den Verbrennungsvorgang, so dass es nicht zu einer Erhöhung von Kraftstoffverbrauch und Partikelemissionen kommen muss.

Besonders vorteilhaft ist dabei, wenn die Glühkerzen zyklisch aktiviert werden, und z.B. nur während des Arbeitstaktes eingeschaltet sind. Dadurch werden die NOx Emissionen reduziert und es wird der Energieaufwand zum Betrieb der Glühkerzen in den restlichen Teilen des Arbeitsspiels vermieden, wodurch auch der Kraftstoffverbrauch reduziert wird. Diese vorgeschlagene Weiterentwicklung kann auch unabhängig von den vorgenannten erfindungsgemäßen Merkmalen umgesetzt werden, um eine vorteilhafte Wirkung zu erzielen.

In einer vorteilhaften Weiterentwicklung des Systems wird vorgeschlagen, dass, dass zumindest abschnittsweise eine Außenwand eines hochisolierten Ölwärmespeichers durch einen Teil einer Ölwanne ausgebildet ist, insbesondere die Ölwanne selbst ist, und zumindest abschnittsweise die Außenwand des hochisolierten Ölwärmespeichers aus Kunststoff ausgeführt ist. Diese vorgeschlagene Weiterentwicklung kann auch unabhängig von den vorgenannten erfindungsgemäßen Merkmalen umgesetzt werden, um eine vorteilhafte Wirkung zu erzielen.

Hochisolierte Wärmespeicher sind recht teuer in der Fertigung, so dass sich die zusätzlichen Kosten erst nach recht langer Betriebsdauer amortisieren. Die Hauptbauteile bestehen aus dem Außengehäuse, dem Innengehäuse, sowie den Anschlussroheren und inneren Leitwänden oder ähnlich. Durch Integration von dem Außengehäuse mit der Ölwanne kann man die Produktionskosten erheblich reduzieren.

In einer vorteilhaften Weiterentwicklung des Systems wird vorgeschlagen, dass die Fluidkammer als eine von einem Kolben zum Brennraum eines Zylinders abgetrennter Kurbelgehäuseraum ausgebildet ist, und bevorzugt das Kühlmittel Motoröl ist, und weiterhin bevorzugt ein erstes Ventil zur Steuerung eines Kühlmittelstroms durch die Fluidkammer ein Überdruckventil ist, wobei ein Öffnen und Schließen des Überdruckventils durch eine Öldrucksteuerung bewirkt wird, insbesondere durch eine Steuerung einer Ölpumpe bewirkt wird.

Somit ist eine geregelte Kolbenspritzkühlung vorgeschlagen: Bei hochbelasteten aufgeladenen Motoren wird meist eine Kolbenspritzkühlung verwendet, bei der Motoröl über Spritzdüsen, die z.B. im Pleuel oder in der Ölgallerie angeordnet sind, an den Kolben gespritzt wird und gegebenenfalls auch an die Zylinderbahn gespritzt wird. Diese Kolbenspritzdüsen sind entweder permanent offen, z.B. wenn es sich um einfache Bohrungen im Pleuel handelt, oder sie werden durch ein Überdruckventil gesteuert, so dass die Düsen nur ab einer gewissen Motordrehzahl geöffnet werden. Das hat den Nachteil, dass die Kolben bei niedriger Motorlast zu stark gekühlt werden und das eine optimierte Regelung in Abhängigkeit von der Öltemperatur des zugeführten Spritzöls nicht möglich ist. Bei Motoren mit mehreren Zylindern ist es schwierig, die Öffnung jeder einzelnen Kolbenspritzdüse zu regeln. Entweder bräuchte man jeweils ein Ventil pro Zylinder, was teuer ist und schwer unterzubringen, oder man bräuchte eine separate Verteilerleitung, z.B. als zusätzliche Ölgallerie, die in das Kurbelgehäuse gebohrt wird, oder als zusätzliches Verteilerrohr montiert wird. Solche Lösungen sind bekannt, allerdings wird dabei nur der Ölvolumenstrom durch die Kühldüsen abgeschaltet um den Kraftstoffverbrauch zu reduzieren, z.B. während den Betriebsbedingungen, die während eines Abgastestes vorherrschen, z.B. bei Motorlasten bis maximal 70% und bei Drehzahlen bis maximal 50% der maximalen Motordrehzahl. Die Abschaltung der Kolbenspritzdüsen hat den Nachteil, dass dadurch die NOx Emissionen erhöht werden können. Die Erhöhung des Ölvolumenstromes durch die Ölspritzdüsen mit heißem Öl was heißer ist als das Kurbelgehäuse oder die Kolben ist bisher nicht bekannt und daher erfinderisch. Durch die Erhöhung des Ölvolumenstromes durch die Ölspritzdüsen mit heißem Öl wird insbesondere im Warmlauf der Wandwärmeverlust im Kolben reduziert, ebenso wie die Emissionen von HC, CO und Partikel reduziert werden. Diese vorgeschlagene Weiterentwicklung kann auch unabhängig von den vorgenannten erfindungsgemäßen Merkmalen umgesetzt werden, um eine vorteilhafte Wirkung zu erzielen.

Durch Regelung der Öffnung der Düsen durch Variation des Öldruckes können die Ölspritzdüsen nach wie vor in der vorhandenen Ölgallerie montiert werden. Desweitere sind geregelte Ölpumpen schon ohnehin sehr weit verbreitet, so dass das zur Regelung des Öldruckes erforderliche Stellventil schon vorhanden sein kann. Daher wird nur eine neue Regelstrategie erforderlich, die baulichen Änderungen können sich in Grenzen halten.

Wassereinspritzung ist als Maßnahme zur Steigerung der Motorleistung und Reduzierung von NOx Emissionen bekannt. Nachteilig ist, dass ein großer Wasservorrat im Fahrzeug mitgeführt werden muss und dass durch das Einspritzern von Wasser ein Teil der Ansaugluft verdrängt wird, wodurch der Liefergrad niedriger ist als bei gleicher reduzierter Ansauglufttemperatur allerdings ohne Wassereinspritzung. Bekannt ist die Gewinnung des erforderlichen Wassers aus dem Kondensator der Klimaanlage. Dies erfordert allerdings den energieintensiven Betrieb einer Klimaanlage. Solche Wassereinspritzsysteme sind natürlich sehr aufwändig und teuer, da außer dem Tank noch eine Förderpumpe, Einspritzventile und Leitungen benötigt werden, die alle Frostsicher aufgebaut sein müssen.

In einer vorteilhaften Weiterentwicklung des Systems wird vorgeschlagen, dass ein Abgasrückführungskühler und eine Entnahmestelle der Abgasrückführung im Abgaskanal des Zylinderkopfes oberhalb der Unterkante zumindest eines Abgas-Auslassventils eines Brennraums angeordnet sind, wobei zumindest ein Teil der Abgasleitungen des Abgasrückführungskühlers sowie die Abgasrückführungsleitung zwischen der Entnahmestelle im Abgaskanal des Zylinderkopfes und des Abgasrückführungskühlers ein Gefälle in Richtung des Abgas-Auslassventils aufweisen, so dass Kühlmittelkondensat aus dem Abgasrückführungskühler auf das Abgas-Auslassventil zurücklaufen kann, und dass bevorzugt durch Kühlmittelleitungen der Abgasrückführungskühler mit einem Kühlmittel mit einer Temperatur von zumindest zeitweise unterhalb 70°C betrieben wird, um eine Bildung des Kühlmittelkondensats in dem Abgasrückführungskühler zu begünstigen, und dass insbesondere durch Regelung der Temperatur des durch die Kühlmittelleitungen der durchströmenden Kühlmittels die dem Brennraum während der Ventilüberschneidungsphase zugeführte Kühlmittelkondensatmenge einstellbar ist. Diese vorgeschlagene Weiterentwicklung kann auch unabhängig von den vorgenannten erfindungsgemäßen Merkmalen umgesetzt werden, um eine vorteilhafte Wirkung zu erzielen.

Das Abgas-Auslassventil besteht in der Regel aus einem Ventilsteller, einem Schaft und gegebenenfalls einer Natriumfüllung. Das Gehäuse des Abgas-Auslassventil ist gleichzeitig der Zylinderkopf.

Abgasrückführungskühler werden insbesondere bei Dieselmotoren zur Reduzierung von NOx-Emissionen eingeführt. Diese Abgasrückführungskühler haben den Nachteil, dass sie leicht verschmutzen können, z.B. durch Ablagerung von Rußpartikel und/oder Versottung. Daher werden sie oft per Bypass Betriebspunkt-abhängig abgeschaltet, z.B. wenn das Kühlmittel unterhalb einer gewissen Grenztemperatur ist. Dies wird als sogenanntes Thermofenster bezeichnet, wobei manche Fahrzeughersteller den AGR Kühler schon bei Umgebungstemperaturen unterhalb 10°C bzw. sogar unterhalb 17°C abschalten, um den Motor zu schützen. Bei den in Deutschland üblichen Temperaturen kann das kann dazu führen, dass die NOx Reduzierung durch AGR Kühler an mehr Tagen ausgeschaltet ist als aktiv zu sein.

Die Auslassventile sind bei betriebswarmem Motor eines der heißesten Bauteile eines Brennraumes und im Wesentlichen für die Entstehung von NOx Emissionen verantwortlich. Bei manchen Motoren wird daher zur verbesserten Kühlung z.B. Natrium in den Schaft eingefüllt, was die Bildung von NOx Emissionen reduziert. Dies ist allerdings aufwändig und oft nicht ausreichend zur Reduzierung von NOx. Diese Nachteile können vermieden werden indem ein Abgasrückführungskühler oberhalb der Unterkante eines Auslassventils angeordnet ist. Dadurch kann Kondenswasser, welches sich in dem Abgasrückführungskühler bildet, auf Auslassventil laufen. Dabei wird das Auslassventil durch Verdampfung des Kondenswassers gekühlt, insbesondere während dem Ansaugtakt, dem Verdichtungstakt und dem Arbeitstakt. Durch das Gefälle der Abgaskanäle des Abgasrückführungskühlers wird eine Versottung des Abgasrückführungskühlers vermieden, da die Rußpartikel mit dem Kondensat von den Wänden des Abgasrückführungskühlers abgewaschen werden, insbesondere wenn die Abgaskanäle des Abgasrückführungskühlers mit maximalen Gefälle vertikal ausgeführt sind.

Während der Ventilüberschneidungsphase kommt es üblicherweise zu einer kurzzeitigen Rückströmung von Abgas in den Brennraum. In dieser Phase kann also auch das aus dem Abgasrückführungskühler nach unten fließende Wasser in den Brennraum gesaugt werden. Damit kann ein ähnlicher Effekt wie bei einer Wassereinspritzung erreicht werden, allerdings ohne jeden Zusatzaufwand, da Abgasrückführungskühler ja schon bei vielen Motoren Standard sind. Durch das zyklische Zurückfließen des Kondenswassers in Richtung Auslassventil steigt dort die Wasserkonzentration kontinuierlich an. Zur Vermeidung einer überhöhter Wasserkonzentration kann es sich als sinnvoll erweisen, die Kühlmitteltemperatur im Abgasrückführungskühler zumindest zeitweise zu erhöhen, um so die Wassermenge, die während der Ventilüberschneidung in den Brennraum gelangt, zu begrenzen.

Durch die beschriebene Maßnahme ist es also möglich NOx Emissionen zu reduzieren und die Motorleistung zu erhöhen bei minimalem Aufwand, ohne zusätzliche Wassereinspritzventile, Pumpe, Tank und Leitungen, etc.

Wenn das Abgas nach einem Katalysator entnommen wird, wo es schon sauberer ist und den AGR Kühler weniger verschmutzen kann, ist auch vorstellbar das kondensierte Wasser nach dem AGR Kühler aufzufangen und einem Speichertank zuzuführen, so dass zumindest keine Klimaanlage zur Gewinnung von Wasser betrieben werden muss um das Wasser in den Ansaugkrümmer oder in den Brennraum einzuspritzen. Wenn der Einbau eines AGR Kühlers über dem Auslasskanal baulich schwierig unterzubringen ist, kann man natürlich auch auf die Lösung mit einem Speichertank zurückgreifen und das Wasser mittels Pumpe und Einspritzdüsen direkt in den Abgaskanal einzuspritzen, bevorzugt auf das oder die Auslassventile. Dadurch kann der Liefergrad und damit auch die Motorleistung im Vergleich zur Einspritzung des Wassers in den Ansaugkrümmer oder Brennraum weiter gesteigert werden und die NOx Emissionen reduziert werden. Auch ist eine Lösung ohne AGR Kühler möglich, bei der das Kondenswasser am Ende des Auspuffs insbesondere während eines Warmlaufs aufgefangen und einem Wassertank zugeführt wird. Sollte diese Wassermenge nicht ausreichen, kann man insbesondere am Ende des Auspuffs einen Abgaswärmetauscher einsetzen, der durch Kühlmittel gekühlt wird so dass das Wasser im Auspuff kondensiert. Auch ohne einen Abgaswärmetauscher lässt sich das Wasser im Abgas kondensieren wenn man zumindest einen Teilstrom des Abgases vom Auspuff entnimmt und über weitere mit dem Fahrtwind in Kontakt kommenden Rohre, die z.B. auch mit Teilen der Karosserie in Verbindung stehen können, abkühlt.

Bei Auslassventilen, die mit Natrium gefüllt sind, ist der Hohlraum von der Länge her begrenzt, so dass der Bereich des Ventilschafts der sich über Ventilschaftabdichtung bewegt, nicht hohl ist, da ansonsten die Dichtlippe der Ventilschaftabdichtung zu heiß werden würde und beschädigt würde.

Des Weiteren ist eine Anwendung von Natrium-gekühlten Ventilen auf der Einlassseite von Dieselmotoren nicht bekannt, da die Einlassventile sehr viel kälter als die Auslassventile sind. Zur Reduzierung von NOx Emissionen ist aber insbesondere bei Dieselmotoren auch die Kühlung der Einlassventile durch einen mit Natrium teilweise gefüllten Hohlraum sinnvoll, insbesondere bei LKW Motoren, Schiffsmotoren etc., die oft mit Volllast bzw. maximalem Drehmoment bzw. maximaler Leistung betrieben werden. Da Natrium erst bei ca. 97°C schmilzt, besteht bei niedrigen Motorlasten das Problem, dass das Natrium im Schaft des Einlassventils nicht komplett schmilzt, und daher nicht zum Wärmeaustausch mit der Ventilführung des Zylinderkopfes genutzt werden kann.

Dieses Problem wird gelöst, wenn die Einlassventile, und gegebenenfalls auch die Auslassventile im hohlen Schaftbereich an Stelle von Natrium mit Kalium oder einem Gemisch aus Natrium und Kalium oder einem anderen Gemisch eines Alkalimetalls mit zumindest einem anderen Metall teilweise gefüllt werden. Kalium hat mit ca. 63°C einen niedrigeren Schmelzpunkt als Natrium. Durch Mischung von Kalium und Natrium kann die Schmelztemperatur sogar auf bis zu -11°C abgesenkt werden. Dadurch kann der Kühleffekt durch die Shakerwirkung, bei der die flüssige Metallfüllung im Ventilschaft zwischen Ventilteller und dem oberen Ende des Ventils, welches in Kontakt mit der Ventilschaftführung ist, hin und her geschleudert wird und somit Wärme vom Ventilteller an die Ventilführung abgibt. Diese vorgeschlagene Weiterentwicklung kann auch unabhängig von den vorgenannten erfindungsgemäßen Merkmalen umgesetzt werden, um eine vorteilhafte Wirkung zu erzielen.

Durch diese Maßnahme lassen sich die NOx Emissionen weiter absenken. Des Weiteren lässt sich dadurch auch der Hohlraum des Ventilschaftes bis in den Bereich der Ventilschaftdichtung hinaus geführt werden, ohne die Dichtlippe der Ventilschaftdichtung zu beschädigen.

Dasselbe gilt für die Kühlung des Auslassventils mit Kondenswasser, dadurch kann ebenso der Hohlraum des Ventilschaftes bis in den Bereich der Ventilschaftdichtung hinaus geführt werden, wodurch sich die Kühlung verbessert.

Abgaskanal in Laufbuchse: Zur schnellen Aufheizung sind Abgaswärmetauscher bekannt, die ansonsten verlorene Abgaswärme an das Kühlmittel, Motoröl oder Getriebeöl übertragen. Diese Abgaswärmetauscher sind sehr aufwändig und teuer und schwer unterzubringen. Wegen der Aggressivität des Abgases und der hohen thermischen Belastung sind diese Abgaswärmetauscher auch sehr anfällig gegen Korrosion so dass eine kurze Lebensdauer zu erwarten ist im Vergleich zu anderen Bauteilen wie dem Zylinderblock. Wird ein schaltbarer Abgaskanal in die Zylinderlaufbuchse integriert, so entfallen diese Nachteile so dass die Vorteile des schnellen Aufwärmens auch bei kleineren Fahrzeugen wie Zweirädern, insbesondere Motorrollern, wirtschaftlich realisiert werden können. Diese vorgeschlagene Weiterentwicklung kann auch unabhängig von den vorgenannten erfindungsgemäßen Merkmalen umgesetzt werden, um eine vorteilhafte Wirkung zu erzielen.

In einer vorteilhaften Weiterbildung des Wärmemanagementsystems kann der Verbrennungsmotor zumindest eine regelbare Abgasdrosselklappe umfassen, und der Öffnungsquerschnitt der Abgasdrosselklappe bei gleichbleibender Stellung der Motorlaststelleinheit bei einer Drehzahl von 50% der Nenndrehzahl der minimale Öffnungsquerschnitt der Abgasdrosselklappe innerhalb einer Toleranz von maximal 20% des minimalen Öffnungsquerschnittes bei steigender Drehzahl oberhalb einer Motordrehzahl von zumindest 50% der Nenndrehzahl beibehalten, und/oder bei gleichbleibender Drehzahl und steigender Motorlast innerhalb eines Lastbereichs zwischen 50% bis 75% der maximalen Motorlast der jeweiligen Drehzahl innerhalb einer Toleranz von maximal 20% des minimalen Öffnungsquerschnittes beibehalten. Diese vorgeschlagene Weiterentwicklung kann auch unabhängig von den vorgenannten erfindungsgemäßen Merkmalen umgesetzt werden, um eine vorteilhafte Wirkung zu erzielen.

Durch die entsprechende Ausführung werden die NOx Emissionen reduziert und die Gefahr wird minimiert, dass die Abgasdrosselklappe als Abschalteinrichtung interpretiert werden könnte. Weitere vorteilhafte Ausführungsformen können wie folgt sein:
Grenzlastbestimmung: Bei gleicher Motorlast steigen mit steigender Drehzahl die Motorleistung und damit auch die Bauteiltemperaturen, so dass sich der Übergang von Verbrauchspareffekt zu Verbrauchserhöhung in Richtung niedrigere Motorlasten verschiebt. Im Kaltstart verschiebt sich dieser Übergang zu größeren Motorlasten. Vorteilhaft kann die Bestimmung einer Grenzlast sein wobei bei Überschreiten dieser Grenzlast eine Temperaturreduzierung erfolgt und bei Unterschreitung dieser Grenzlast eine Temperaturerhöhung erfolgt. Diese Grenzlast wird in Abhängigkeit von der Motordrehzahl und /oder der Motortemperatur und/oder von der Temperaturdifferenz der Temperatur der Kühlflüssigkeit und der Temperatur der teilweise mit Gas gefüllten Fluidkammer variiert, insbesondere ist vorteilhaft, dass die Grenzlast mit steigender Motordrehzahl reduziert wird und/oder mit fallender Motortemperatur erhöht wird und dass die Grenzlast von zumindest einer kritischen Grenztemperatur zumindest eines der Systembestandteile abhängig ist. Solche Grenzlasten können für verschiedene Bauteile definiert werden, insbesondere für Zylinderkopf, Zylinder und Kolben.

Wärmespeicherintegration: Vorteilhaft kann mindestens ein Wärmespeicher integriert sein mit mindestens einem vierten Absperrventil wobei das heiße Kühlmittel durch Öffnen des vierten Absperrventil von dem Wärmespeicher in den Motor geführt wird sobald der Motor betrieben wird und eine Grenztemperatur 1 des Motors unterschritten wird, und dass die Zuführung des heißen Kühlmittels von dem Wärmespeicher zu dem Motor durch Schließen des vierten Absperrventils unterbrochen wird sobald eine Grenztemperatur 2 des Motors (oder der Motoraustrittstemperatur des Kühlmittels) (oder Differenztemperatur zur Austrittstemperatur des Wärmespeichers unterschritten) überschritten wird.

Ölkühlerregelung: Der Einsatz von Ölkühlern zur Erwärmung von Motoröl hat den Nachteil, dass das Motoröl vom Kühlmittel gekühlt wird sobald das Motoröl heißer ist als das Kühlmittel. Dadurch kann die Reibung nicht optimal reduziert werden und insbesondere wird der Wärmeverlust im Kolben erhöht. Die Regelung eines Ölbypasses im Ölkühler erlaubt eine Optimierung der Öltemperatur, insbesondere sogar abhängig vom jeweiligen Betriebspunkt des Motors, wie der Motorlast, Drehzahl und Temperatur. Solange der Katalysator noch nicht auf Betriebstemperatur ist, wird üblicherweise die Motordrehzahl im Leerlauf angehoben, so dass sich ein größerer Abgaswärmestrom ergibt. In diesem Betriebszustand ist es sinnvoll das Motoröl noch nicht aufzuwärmen, und so die vorhandene Wärme im Wärmespeicher weiter zu speichern, bis der Katalysator auf Betriebstemperatur ist.

Vorteilhaft kann im Kühlsystem ein Ölkühler angeordnet sein, insbesondere zwischen der Auslassleitung der Fluidkammer und dem ersten Absperrventil und/oder dem Druckausgleichsbehälter, wobei der Ölkühler insbesondere ölseitig mit einem Bypass versehen ist, so dass beim Erwärmen die heiße Kühlflüssigkeit das Motoröl erwärmt und der Ölbypass geöffnet wird, sobald die Öltemperatur grösser ist als die Kühlmitteltemperatur und dass beim Kühlen des Öls der Ölbypass geschlossen wird sobald die Öltemperatur grösser ist als die Kühlmitteltemperatur, und dass der Ölbypass insbesondere während eines Kaltstarts geöffnet ist, bis die Anspringtemperatur des Katalysators erreicht ist. Diese vorgeschlagene Weiterentwicklung kann auch unabhängig von den vorgenannten erfindungsgemäßen Merkmalen umgesetzt werden, um eine vorteilhafte Wirkung zu erzielen.

Vorteilhaft kann die Ölgallerie mit einer Innenisolierung versehen sein und / oder ein Abgaswärmetauscher integriert sein.

Ölgallerieinnenisolierung ohne Schaltung einer Wärmequelle: Erwärmtes Motoröl kühlt üblicherweise im Kaltstart stark ab, wenn es durch die Ölgallerie des kalten Motorblockes fließt. Diese Abkühlung wird durch die Innenisolierung der Ölgallerie vermieden. Ebenso wird bei erforderlicher Ölkühlung eine Aufheizung von gekühltem Öl vermieden, die ansonsten insbesondere bei hohen Motordrehzahlen durch die Wärme, die durch die Reibung in den Kurbelwellenlagern entsteht und die an das Kurbelgehäuse abgegeben wird.

Eine entsprechende Innenisolierung ist aus der WO2014128308A1 bekannt. Nachteilig ist hierbei allerdings, dass eine Wärmequelle abgeschaltet, oder zumindest in Ihrer Heizwirkung reduziert werden muss. Diese zusätzliche Beeinflussung kann vermieden werden, indem vor der Ölgallerie ein Ölkühler angeordnet ist, der insbesondere durch Kühlmittel durchströmt wird. Im Kaltstart erwärmt sich das Kühlmittel deutlich schneller als das Öl, da der Kühlmantel sehr viel dichter am Brennraum angeordnet ist als die Ölwanne und der Großteil der Ölkanäle. Nach einer gewissen Betriebszeit, insbesondere mit hohen Drehzahlen und Motorlasten steigt die Öltemperatur üblicherweise über die Kühltemperatur, wodurch eine Abschaltung des Ölkühlers als Wärmequelle nicht erforderlich ist. Ein weiterer Vorteil dieser Ausführungsform ist, dass der Motor bei einer Demontage, z.B. zum Wechsel von Kolben oder Lagerschalen, leicht mit der Innenisolierung versehen werden kann, ohne dass ein Schaltmechanismus für den Ölkühler angebracht werden müsste.

Eine alternative Ausführungsform ist, wenn das Öl von der Ölpumpe anstatt in einen Ölkühler zuerst in die Ölgallerie des Zylinderkopfes geleitet wird und von da in den Zylinderblock, der mit einer Innenisolierung der Ölgallerie ausgestattet ist. Der Zylinderkopf erwärmt sich sehr viel schneller als der Zylinderblock, so dass auch das Öl sich sehr schnell erwärmt, ähnlich wie bei der Verwendung eines Ölkühlers. Eine Abschaltung des Zylinderkopfs als Wärmequelle ist auch hier nicht erforderlich, da insbesondere bei hohen Drehzahlen und Motorlasten das Öl heißer wird als das Kühlmittel und somit das Öl durch das Kühlmittel gekühlt wird. Diese vorgeschlagene Weiterentwicklung kann auch unabhängig von den vorgenannten erfindungsgemäßen Merkmalen umgesetzt werden, um eine vorteilhafte Wirkung zu erzielen.

Luftspaltinnenisolierung: Herkömmliche Innenisolierungen haben den Nachteil, dass zur ausreichenden Isolationswirkung die Isolierschicht eine gewisse Dicke erfordert, die im vorhandenen Bauraum nicht zur Verfügung steht. Desweitere erfordert eine große Isolierschichtdicke einen hohen Materialbedarf und Kosten. Durch einen Gasraum zwischen Innenisolierung und Strukturumgebung entsteht eine signifikant höhere Isolationswirkung bei gleichem Platzbedarf da Gase, insbesondere Luft, eine größere Isolationswirkung aufweisen als feste Stoffe. Durch eine niedrigere Volumenspezifische Wärmekapazität wird auch weniger Energie zum Aufwärmen benötigt und bei der Verwendung von Luft als Isoliergas wird der Materialbedarf für die Innenisolierung minimiert. Diese vorgeschlagene Weiterentwicklung kann auch unabhängig von den vorgenannten erfindungsgemäßen Merkmalen umgesetzt werden, um eine vorteilhafte Wirkung zu erzielen.

Druckverlustminimierende Abschrägungen: Gebohrte Leitungen wie z.B. Ölgallerien in Verbrennungsmotoren haben den Nachteil, dass die Abzweigungen durch Zusammentreffen von zylindrischen Bohrungen scharfe Kanten entstehen, die einen großen Druckverlust verursachen, so dass eine hohe Pumpleistung benötigt wird. Eine Innenisolierung die z.B. aus Kunststoff gefertigt wird, und im Bereich der Abzweigungen innen abgeschrägt ist, hat einen deutlich niedrigeren Druckverlust. Der Widerstandsbeiwert kann durch solche Abschrägungen mehr als halbiert werden, insbesondere wenn diese mit einem Radius ausgeführt sind. Ein typischer Vierzylindermotor mit zwei Nockenwellen hat etwa 40 solcher scharfkantigen Abzweigungen. Daher wird der Druckverlust eines solchen Systems mehr durch die Abzweigungen als durch den Leitungsdurchmesser bestimmt. Durch eine entsprechende Abrundung dieser Abzweigungen kann die Pumpleistung also signifikant reduziert werden. Eine solche Isolierung und Reduzierung des Druckverlustes kann auch durch eine doppelwandige Luftspaltisolierung, z.B. aus zwei Metallrohren sich umfassende Metallrohre erreicht werden. Vorteilhaft kann zumindest eine Fluidleitung, die in einer metallischen Strukturumgebung eines Gehäuses baulich integriert ist, inwandig durch eine Innenisolierung isoliert sein, wobei zumindest ein Gasraum zwischen Innenisolierung und der Strukturumgebung eines Gehäuses entsteht, und der Gasraum zum Kühlmittelfluid abgedichtet ist.

Vorteilhaft kann die Innenisolierung im Bereich von zumindest einer Abzweigung innen abgeschrägt sein, wobei der Querschnitt der zumindest einen abgezweigten Leitung stromabwärts zumindest in einem Teilbereich reduziert wird.

Vorteilhaft kann die zumindest eine Fluidleitung im Kontakt mit den Lagerschalen innen abgeschrägt sein, wobei der Querschnitt der zumindest einen Fluidleitung stromabwärts zumindest in einem Teilbereich vergrößert wird und deren Breite kleiner ist als die Breite der damit in Kontakt befindlichen Ölbohrung der Lagerschale.

Diese vorgenannten Weiterentwicklungen können auch unabhängig von den vorgenannten erfindungsgemäßen Merkmalen umgesetzt werden, um eine vorteilhafte Wirkung zu erzielen.

Vorteilhaft kann die Evakuierung der Kühlflüssigkeit durch die Volumenänderung des Kühlmittels beim Abkühlen erreicht werden, wobei auf eine elektrische Pumpe verzichtet werden kann.

Entleerung durch Dichtereduzierung: Der Einsatz einer elektrischen Pumpe zum Abpumpen des Kühlmittels ist mit höheren Kosten verbunden, so dass das automatische Entleeren durch die Volumenreduzierung der Kühlflüssigkeit beim Abkühlen von Vorteil ist. Ein Nachteil des Entleerens mit Hilfe der Volumenreduzierung des Kühlmittels beim Abkühlen ist, dass diese Methode nicht während des warmen Motorbetriebs angewandt werden kann. Hier ist das Ablassen des Kühlmittels insbesondere im Falle von Öl durch Schwerkraft von Vorteil. Diese ist sogar ohne elektrisch betätigte Ventile möglich, z.B. wenn das Ventil direkt oder indirekt vom Gaspedal oder im Falle eines Zweirades vom Gasgriff betätigt wird.

Lagerschalenanpassung: Die Ölbohrung von Lagerschalen, insbesondere für Kurbelwellen und Pleuellager, haben in der Regel eine Öffnungsbreite, die kleiner ist als der Durchmesser der zuführenden Ölleitung. Dadurch entstehen ein starker Drosselverlust, sowie die Gefahr von Kavitation auf der Gleitfläche der Lagerschale. Der große Durchmesser der zuführenden Ölleitung entsteht durch die Anforderung an einen geringen Strömungswiderstand der langen Leitung, sowie durch fertigungstechnische Gründe, da ein langes Bohrungen mit dünnem Durchmesser schwerer mit einer hohen Genauigkeit herzustellen sind als mit großem Durchmesser, und da die Bohrwerkzeuge bei kleineren Durchmessern häufiger gewechselt werden müssen. Durch eine Abschrägung der Ölleitung mit einer Öffnungsbreite, die kleiner ist als die Breite der Öffnung der Lagerschale, lässt sich dieser Druckverlust reduzieren und die Gefahr von Kavitation wird ebenso reduziert. Diese vorgeschlagene Weiterentwicklung kann auch unabhängig von den vorgenannten erfindungsgemäßen Merkmalen umgesetzt werden, um eine vorteilhafte Wirkung zu erzielen.

Vorteilhafterweise kann das System einen Wärmespeicher aufweist, der zwei getrennte Kammern aufweist, wobei eine Kammer mit Motoröl gefüllt ist und die andere Kammer mit Hochtemperaturkühlmittel gefüllt ist, so dass zumindest in manchen Betriebszuständen eine gemeinsame Betriebstemperatur innerhalb des Wärmespeichers von zumindest über 115°C erreicht wird wobei in bevorzugter Form der Wärmespeicher in der Ölwanne integriert ist.

Kombinierter Wärmespeicher: Kombinierte Wärmespeicher sind bekannt zur Speicherung von heißem Kühlmittel und heißem Öl. Der Nachteil dabei ist, dass die maximale Betriebstemperatur des Wärmespeichers von der maximalen Betriebstemperatur der Flüssigkeit abhängt die die niedrigste maximale Betriebstemperatur aufweist, in diesem Fall das Kühlmittel, was typischerweise auf unter 105°C begrenzt ist. Nach einer Abkühlphase über Nacht reduziert sich diese Temperatur im Speicher je nach Isolierung um ca. 10°C. Bezogen auf eine typische Kaltstarttemperatur von 25°C bedeute das einen maximalen Temperaturunterschied von 70°C. Das Motoröl könnte aber bei 140°C betrieben werde, was mit einem Hochtemperaturkühlmittel auch möglich ist. Dadurch ergibt sich zum Kaltstart ein Temperaturunterschied von 105°C, das bedeutet, dass die Wärmespeicherkapazität 50% höher ist bei gleichem Bauvolumen und Gewicht, oder das bei gleicher Speicherkapazität das Bauvolumen und das Gewicht und damit auch die Kosten stark reduziert werden. Bei einer Integration in der Ölwanne entfällt ein ansonsten zusätzlich benötigter Bauraum, da dort ohnehin eine große Menge Öl gespeichert wird.

Vorteilhafterweise kann eine schaltbare Verbindung zwischen Abgastrakt und Motorkühlmantel besteht, so dass zumindest im Kaltstart heißes Abgas durch den entleerten Motorkühlmantel geleitet wird, und zumindest bei Volllast diese Verbindung geschlossen wird.

Verbindung zwischen Abgas und Kühlmantel: Nachteile von Abgaswärmetauschern wurden schon beschrieben. Wenn das Abgas zumindest im Kaltstart direkt durch einen vom Kühlmittel entleerten Kühlmantel geleitet wird, entfallen der Aufwand und der Bauraum für einen aufwändigen Abgaswärmetauscher. Das Abgas wird im Kühlmantel abgekühlt und kann z.B. über die Leitung zum Ausgleichsbehälter geführt werden, wo es dann durch das Überdruckventil entweichen kann.

Vorteilhafterweise kann das Kühlmittel erst kurz vor dem Start des Motors aus dem Kühlmantel gepumpt wird, wobei der unmittelbar zu erwartende Start des Motors insbesondere durch das Öffnen der Fahrertür gemeldet wird oder durch andere Signale der Motorsteuerung.

Kühlmittelevakuierung kurz vor Start: Wenn das Kühlmittel direkt nach dem Abstellen des Motors abgesaugt werden würde, wäre der Wassermantel jeden Tag für etliche Stunden in Kontakt mit Luft, und nicht mehr durch das Kühlmittel vor Korrosion geschützt, Dadurch könnte es also sehr schnell zu Korrosionsschäden im Wassermantel kommen. Dies wird vermieden, wenn das Kühlmittel erst kurz vor dem Motorstart abgepumpt wird.

Berechnungsverfahren zur Ermittlung der Wirksamkeit von emissionsmindernden Einrichtungen: Die meisten der oben beschriebenen Maßnahmen zielen darauf ab insbesondere die NOx Emissionen, den Kraftstoffverbrauch und die CO2 Emissionen zu reduzieren. Oft gibt es dabei einen Zielkonflikt mit anderen Fahrzeugattributen, insbesondere andere limitierte Emissionen wie Partikelmasse, Partikelanzahl, HC und CO. Per Gesetz sind Abschalteinrichtungen, die die Wirksamkeit von emissionsmindernden Einrichtungen reduzieren bis auf wenige Ausnahmen verboten. Ibn den einschlägigen Gesetzestexten fehlen allerding jegliche Hinweise, wie die Wirksamkeit von emissionsmindernden Einrichtungen ermittelt werden sollte. Um solche Abschalteinrichtungen schon im Entwicklungsprozess für neue Produkte vermeiden zu können, leitet sich der dringende Bedarf ab für ein Berechnungsverfahren zur Ermittlung der Wirksamkeit von emissionsmindernden Einrichtungen.

Eine oft insbesondere in den Medien angewandte triviale Methode besteht darin eine Abgaskomponente, insbesondere die NOx Emissionen (z.B. in g/km gemessen), die bei Realfahrten gemessen werden, ins Verhältnis zum gesetzlichen Grenzwert oder den Emissionen, die im Zertifizierungstest ermittelt wurden, gesetzt werden. Ist das Verhältnis grösser als eins (wenn die bei Realfahrten gemessenen Emissionen höher sind als der Referenzwert des gesetzlichen Grenzwertes oder des Zertifizierungsergebnis), geht man davon aus, dass die Wirksamkeit der emissionsmindernden Einrichtungen reduziert wird. Dieses triviale Verfahren hat zwei gravierende Nachteile. Zum einen wird eine Abgaskomponente allein betrachtet ohne die Wirkung derselben emissionsmindernden Einrichtung auf die anderen gesetzlich limitierten Abgaskomponenten zu beurteilen. Zum anderen gibt es dabei ein sprachliches Problem. Eine Wirksamkeit wird im Allgemeinen als gut oder vorteilhaft betrachtet, wenn sie hoch ist. Daher muss auch der per Berechnungsverfahren ermittelte Wert, der ein Maß für diese Wirksamkeit repräsentieren soll ebenso höher sein als ein Wert für eine schlechtere oder niedrigere Wirksamkeit.

Dieses Problem wird auf einfachste Weise gelöst, indem stattdessen der Referenzwert des gesetzlichen Grenzwertes oder des Zertifizierungsergebnis durch den aktuellen zu betrachtenden gemessenen oder anderweitig ermittelten Wert der Abgaskomponente geteilt wird. Ist der bezüglich der Wirksamkeit zu beurteilende Wert kleiner als der Referenzwert, so ergibt sich eine Wirksamkeit grösser eins. Je niedriger der aktuelle Wert der Abgaskomponente, z.B. bei realen Fahrten, umso höher ist die Wirksamkeit.

Das andere Problem wird dadurch gelöst, dass für jede gesetzlich begrenzte Abgaskomponente entsprechend dem gerade beschriebenen Verfahren die individuelle Wirksamkeit berechnet wird und dann der Mittelwert der Wirksamkeiten aller einzelnen Komponenten berechnet wird. Diese vorgeschlagene Weiterentwicklung kann auch unabhängig von den vorgenannten erfindungsgemäßen Merkmalen umgesetzt werden, um eine vorteilhafte Wirkung zu erzielen.

Durch das beschriebene Verfahren lässt sich anhand von vorhandenen oder zu erzeugenden Messwerten leicht bestimmen, ob die Wirksamkeit von emissionsmindernden Einrichtungen durch bestimmte Einstellungen insbesondere der Motorsteuerung reduziert wird, so dass die Einstellungen korrigiert werden können um somit eine potentielle Abschalteinrichtung vermeiden zu können. Daher eignet sich das Verfahren in erster Linie zur Prüfung von Fahrzeugen auf Prüfständen, insbesondere Abgasrollenprüfständen und realen Fahrten auf der Straße, z.B. bei unter der Anwendung von Portablen Emissionsmesssystemen (PEMS).

Das Verfahren eignet sich daneben auch besonders für die Abstimmung der Motorsteuerung, insbesondere von Kennfeldern, auf Prüfständen. Es ist auch ein Einsatz zur Regelung der Antriebstrangsteuerung im Fahrzeugbetrieb denkbar. Manche Motoren regeln z.B. mit Hilfe von Messung des Druckverlaufs im Brennraum den Verbrennungsschwerpunkt, so dass die CO2 Emissionen minimiert werden. Dabei werden die potentiellen Auswirkungen auf die Schadstoffemissionen, insbesondere NOx, nicht berücksichtigt und man vertraut auf die Wirksamkeit der Abgasnachbehandlung zur Reduzierung der NOx Emissionen. Anstelle oder zusätzlich zur Minimierung der CO2 Emissionen wäre es sinnvoll, den Verbrennungsschwerpunkt so zu regeln, dass die Wirksamkeit der emissionsmindernden Einrichtungen nicht reduziert wird, und, insbesondere die Wirksamkeit der NOx Reduzierung, zumindest in Bezug auf einen gesetzlichen Grenzwert, erhöht wird. Nachrangig kann die Minimierung der CO2 Emissionen erfolgen. Ein solches Verfahren wäre leicht umsetzbar bei Fahrzeugen, die ohnehin mit Sensoren zur Messung von Abgasemissionen, insbesondere NOx Sensoren ausgerüstet sind, wie z.B. LKWs.

Eine weitere Möglichkeit, die Wirksamkeit von emissionsmindernden Einrichtungen zu ermitteln, besteht darin, die Gesundheitskosten jeder einzelnen Abgaskomponente, insbesondere der gesetzlich limitierten Abgaskomponenten zu berücksichtigen. Dabei wäre für jede Abgaskomponente zunächst die Differenz ihrer Emissionen (z.B. in Gramm pro Kilometer gemessen) zu einem Referenzwert (z.B. einem gesetzlichen Grenzwert) zu bilden. Z.B könnte der gemessene zu betrachtenden Abgaswert vom gesetzlichen Grenzwert subtrahiert werden. Dieser Differenzbetrag würde dann mit den spezifischen Gesundheitskosten (z.B. in Euro pro Gramm) für die jeweilige Abgaskomponente multipliziert und anschließend die Summe dieser Produkte für alle Abgaskomponenten errechnet werden. Ist der Wert der Summe positiv, so handelt es sich um eine Einsparung der Gesundheitskosten. Je höher die Einsparung der Gesundheitskosten ist, umso höher ist die Wirksamkeit von emissionsmindernden Einrichtungen. Ergibt sich statt einer Einsparung ein negativer Wert für die Gesundheitskosten, so ist die Wirksamkeit der emissionsmindernden Einrichtungen effektiv reduziert. Da die Gesundheitskosten pro zurückgelegten Kilometer sehr niedrig sind, liegt es nahe, diese mit einer durchschnittlichen, während einer Fahrzeuglebensdauer zu erwartenden Laufleistung, zu multiplizieren. Der Vorteil dieser Methode ist, dass es ermöglicht wird die Auswirkungen eines Fahrzeuges mit Verbrennungsmotors auf die menschliche Gesundheit und der möglichen resultierenden Kosten ganzheitlich zu betrachten und die Wirksamkeit der emissionsmindernden Einrichtungen eines Fahrzeuges so zu optimieren, dass die gesundheitlichen Folgen minimiert werden.

Ähnlich wie die vorbeschriebene erste Variante dieses Verfahrens ist es natürlich auch sinnvoll die gerade dargestellte zweite Variante zur Optimierung von Motoren auf Prüfständen und im Fahrzeug einzusetzen. Diese vorgeschlagene Weiterentwicklung kann auch unabhängig von den vorgenannten erfindungsgemäßen Merkmalen umgesetzt werden, um eine vorteilhafte Wirkung zu erzielen.

Zylinderabschaltung: Die Abschaltung von einem oder mehreren Zylindern ist ein bekanntes Mittel zur Reduzierung des Kraftstoffverbrauchs, insbesondere durch die Reduzierung der Wandwärmeverluste und bei Ottomotoren auch durch die Reduzierung der Drosselverluste. Bei den abgeschalteten Zylindern werden die Ein- und Auslassventile abgeschaltet und die Kraftstoffzufuhr wird unterbrochen. Obwohl die Unterbrechung der Kraftstoffzufuhr sehr einfach durch die Motorsteuerung realisierbar ist, sind die System zur Abschaltung der Ventile sehr aufwändig und daher teuer. Ein weiterer Nachteil ist die Erhöhung der NOx Emissionen durch die höhere Last der aktiven Zylinder. Die Abschaltung rein elektronisch durch Unterbrechung der Kraftstoffeinspritzung hat den Nachteil, dass die abgeschalteten Zylinder kalte Luft in das Abgassystem pumpen. Dadurch wird die Konvertierung von NOx Emissionen in Dreiwegekatalysatoren erheblich reduziert.

In einer vorteilhaften Weiterentwicklung des Verfahrens wird vorgeschlagen im Teillastbetrieb insbesondere unterhalb 75% der Volllast zumindest einen Zylinder durch Abschalten der Kraftstoffzufuhr abzuschalten. Bei Benzinmotoren weißt das Abgassystem dazu zumindest zwei Dreiwegekatalysatoren auf, wobei der erste Dreiwegekatalysator stromabwärts des zumindest einen aktiven Zylinders angeordnet ist und nicht stromabwärts des zumindest einen abschaltbaren Zylinders angeordnet ist und dass der zweite Dreiwegekatalysator stromabwärts des ersten Dreiwegekatalysators und stromabwärts des zumindest einen abschaltbaren Zylinders angeordnet ist. Dabei ist es von Vorteil, wenn die Volumendifferenz der beiden Katalysatoren weniger als 50% beträgt. In einer vorteilhaften Ausführung wird im Betrieb mit Zylinderabschaltung der mindestens eine aktive Zylinder mit einem fetten Gemisch betrieben mit einem Verbrennungsluftverhältnis kleiner 1.

Im Betrieb mit Zylinderabschaltung kann somit der erste Dreiwegekatalysator ohne Luftüberschuß betrieben werden, wobei insbesondere die NOx hervorragend reduziert werden. In dem zweiten Dreiwegekatalysator werden durch die Zufuhr der Luft aus dem zumindest einen abgeschalteten Zylinder insbesondere die CO- und HC-Emissionen reduziert. Dabei wird der zweite Dreiwegekatalysator auf Betriebstemperatur gehalten, und zwar erstens durch die heißen Abgase aus dem zumindest einem aktiven Zylinder, zweitens durch die katalytische Reaktion im ersten Katalysator und drittens durch die endotherme Reaktion im zweiten Katalysator selbst.

Diese vorgeschlagene Weiterentwicklung kann auch unabhängig von den vorgenannten erfindungsgemäßen Merkmalen umgesetzt werden, um eine vorteilhafte Wirkung zu erzielen.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: zeigt schematisch ein erstes Ausführungsbeispiel eines Wärmemanagementsystems;
- **Fig. 2**: zeigt eine Variante des in Fig. 1 dargestellten Ausführungsbeispiels;
- **Fig. 3**: zeigt schematisch ein weiteres Ausführungsbeispiel eines Wärmemanagementsystems;
- **Fig. 4a-4c**: zeigen Varianten des in Fig. 3 dargestellten Ausführungsbeispiels;
- **Fig. 5**: zeigt schematisch ein weiteres Ausführungsbeispiel eines Wärmemanagementsystems;
- **Fig. 6**: zeigt schematisch ein Kolben zum Einsatz in einem Ausführungsbeispiel eines Wärmemanagementsystems;
- **Figs. 7a-7b**: zeigen verschiedene Kühlmittelleitungen zum Einsatz in einem Ausführungsbeispiel eines Wärmemanagementsystems;
- **Figs. 8a-8e**: zeigen verschiedene Varianten von Verbrennungskraftmaschinen mit einem Wärmemanagementsystem gemäß der Erfindung;
- **Fig. 9**: zeigt schematisch einen Vergaser für den Einsatz in einem Wärmemanagementsystem gemäß der Erfindung;
- **Fig. 10**: zeigt schematisch einen Vergaser mit Abgasrückführung für den Einsatz in einem Wärmemanagementsystem gemäß der Erfindung;
- **Fig. 11**: zeigt schematisch ein weiteres Ausführungsbeispiel eines Wärmemanagementsystems;
- **Figs. 12a-12b**: zeigen einen Querschnitt durch einen Zylinder zum Einsatz in einem Wärmemanagementsystem gemäß der Erfindung;
- **Figs. 13a-13b**: zeigen verschiedene Anordnungen von mehreren Fluidkammern in einem Zylinder für ein Wärmemanagementsystem gemäß der Erfindung;
- **Figs. 14a-14b**: zeigen schematisch ein Kolben zum Einsatz in einem Ausführungsbeispiel eines Wärmemanagementsystems;
- **Figs. 15a-15b**: zeigen schematisch ein Kolben zum Einsatz in einem Ausführungsbeispiel eines Wärmemanagementsystems;
- **Fig. 16**: zeigt ein dynamischer Fluidstromverlauf in Abhängigkeit eines Kolbenwinkels für ein Ausführungsbeispiel der Erfindung;
- **Fig. 17**: zeigt ein Schalt- und Temperaturverlauf einer Glühkerze für ein Ausführungsbeispiel der Erfindung;
- **Figs. 18a-18c**: zeigen Kühlmittelkanäle zwischen Zylindern und durch einen Zylinderkopf für ein Ausführungsbeispiel der Erfindung;
- **Fig. 19**: zeigt schematisch ein weiteres Ausführungsbeispiel eines Wärmemanagementsystems;
- **Figs. 20a-20c**: zeigen schematisch ein weiteres Ausführungsbeispiel eines Wärmemanagementsystems zur Nutzung von Abgaskondensat zu verschiedenen Zeitpunkten eines Arbeitsspiels-;
- **Fig. 21**: zeigt modifizierte Thermostat-Hystereseverhalten von Kühlmittelvolumenstrom als Funktion der Kühlmitteltemperatur für ein Ausführungsbeispiel der Erfindung;
- **Figs. 22a-22b**: veranschaulichen eine Wirkung unterschiedlicher Temperaturgradienten im Brennraum in Abhängigkeit des Kurbelwinkels auf die NOx-Produktion.
- **Fig. 23**: zeigt ein weiteres Ausführungsbeispiel eines Wärmemanagementsystems gemäß der Erfindung in einem Verbrennungsmotor;
- **Fig. 24**: zeigt ein weiteres Ausführungsbeispiel eines Wärmemanagementsystems gemäß der Erfindung in einem Verbrennungsmotor.

In den Figuren sind gleichartige Elemente mit gleichen Bezugszeichen beziffert. Die Figuren zeigen lediglich Beispiele und sind nicht beschränkend zu verstehen. Die in den Figuren dargestellten Ausführungsbeispiele und funktional zusammengehörige Merkmale bzw. Einzelmerkmale können miteinander zu neuen Ausführungsbeispielen zusammengesetzt und sinnvoll kombiniert werden.

Die Figuren stellen zu den vorgenannten Ausführungsbeispielen schematisch dargestellte Ausführungsformen dar.

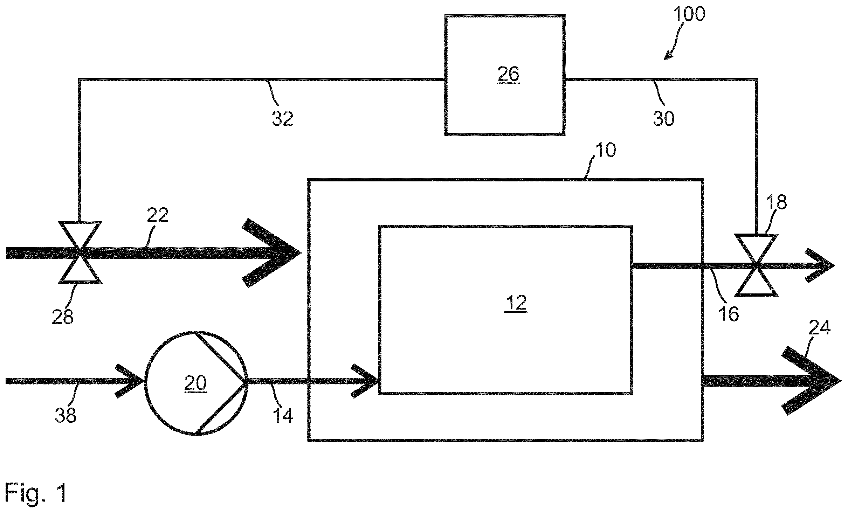

Die Fig. 1 zeigt ein erstes Ausführungsbeispiel eines Wärmemanagementsystems 100 für einen Verbrennungsmotor 10.der ein oder mehrere Zylinder umfassen kann. Der Verbrennungsmotor 10 kann als Benzin- oder als Dieselmotor, alternativ auch als Gasmotor ausgelegt sein. In der Regel bestehen Hauptbestandteile des Verbrennungsmotors wie Zylinderblock, Zylinderkopf, Kurbelwellengehäuse und andere mechanisch belastete Bauteile aus Metall, insbesondere Grauguss oder Aluminium, und weisen eine hohe thermische Leitfähigkeit auf. Zur Regelung der Motortemperatur sind eine oder mehrere Fluidkammern 12 im Verbrennungsmotor vorgesehen, durch die ein Kühlmittelfluid, insbesondere Kühlluft, Kühlwasser, Öl, Alkohollösung oder eine anderes Kühlmittelfluid geleitet wird. Hierzu kann das Kühlmittelfluid aus einem nicht dargestellten Kühlmittelreservoir durch eine Kühlmittelzuführung 38 an einer Eingangsseite einer Kühlmittelfördereinrichtung 20, insbesondere einer drehzahlregelbaren Kühlmittelpumpe, zugeführt werden. Diese fördert das Kühlmittelfluid durch eine Einlassleitung 14 in die Fluidkammer 12. Das Kühlmittelfluid hat eine niedrige Temperatur als die Temperatur der Fluidkammer 12, und wird in der Regel am Boden der Fluidkammer 12 in diese eingeleitet. Erwärmtes Kühlmittelfluid steigt in der Fluidkammer 12 auf und kann durch eine Auslassleitung 16 im oberen Bereich aus der Fluidkammer 12 abgeleitet werden. Hierzu ist ein erstes Ventil 18 an der Auslassleitung 16 vorgesehen, das die Ausströmung des Kühlmittelfluids aus der Kühlmittelfluidkammer 12 steuern kann. Das erste Ventil 18 wird von einer Motorlaststelleinheit 26 angesprochen, die des Weiteren eine Drosseleinrichtung 28 über eine Motorlaststeuerleitung 32 betätigen kann, durch die mittels einer Ansaugleitung Luft oder ein Lufttreibstoffgemisch in den Verbrennungsmotor 10 gelangen kann. Die Verbrennungsrückstände und Verbrennungsgase werden im Verbrennungsmotor 10 durch die Abgasleitung 24 nach außen transportiert. Bei einer steigenden Temperatur in der Fluidkammer 12 kann insbesondere in einer Aufwärmphase bei gleichbleibender oder sinkender Motordrehzahl der Volumenstrom des Kühlmittels durch eine Wärmesenke, zum Beispiel einen Kühler 60, zeitweise erhöht werden, und bei gleichbleibender oder steigender Motordrehzahl und bei Reduzierung der Motorlast um insbesondere zumindest 30% der Volumenstrom des Kühlmittels durch die Wärmesenke reduziert werden. Hierzu kann die Kühlmittelfördereinrichtung 20 als drehzahlgesteuerte Kühlmittelpumpe vorgesehen sein. Das erste Ventil 18 kann als Binärventil oder als Proportionalventil ausgelegt sein, um die Größe des Kühlmittelstroms steuern zu können. Somit kann erreicht werden, dass der Kühlmittelstrom durch die Fluidkammer 12 in Abhängigkeit verschiedener Betriebsparameter des Verbrennungsmotors 10, insbesondere der Motorlast und/oder der Temperatur innerhalb der Fluidkammer, in Abhängigkeit der Motordrehzahl, geregelt werden kann.

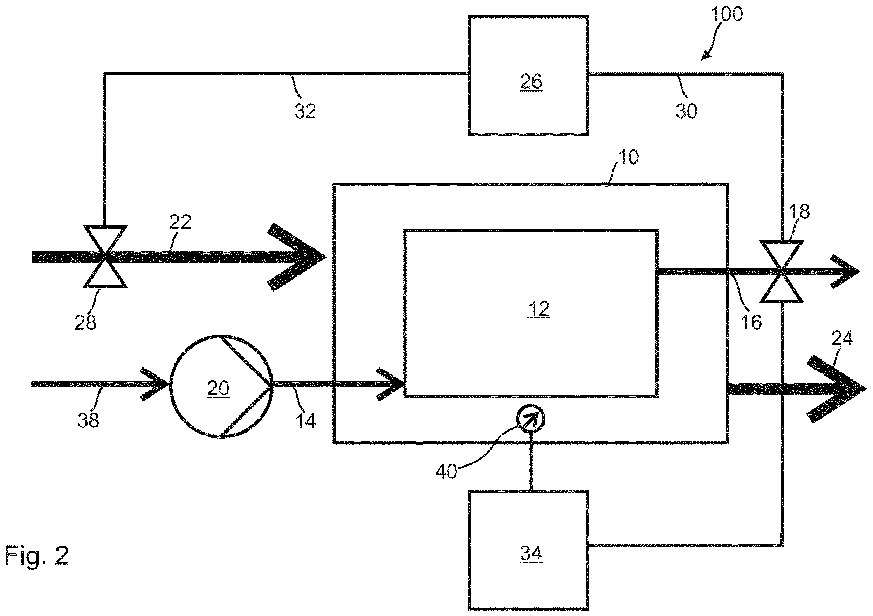

In der Fig. 2 ist eine Variante des in Fig. 1 dargestellten Ausführungsbeispiels eines Wärmemanagementsystems 100 gezeigt. Neben den grundsätzlichen Komponenten, die bereits im Wärmemanagementsystem 100 der Fig. 1 enthalten sind, ist des Weiteren eine Arbeitstakterfassungseinrichtung 34 vorgesehen, die den jeweiligen Zeitpunkt eines Arbeitsspiels eines Zylinders des Verbrennungsmotors 10 erfassen kann. Hierdurch kann die momentane Betriebssituation des Verbrennungsmotors 10 erfasst werden. Ein Arbeitstaktsensor 40 ist hierzu im Inneren des Verbrennungsmotors 10 vorgesehen, um beispielsweise die Drehlage der Nockenwelle zu erfassen. Hierzu kann ein Kurbelwellensensor zusammen mit einem Nockenwellensensor verwendet werden, wobei der Kurbelwellensensor den genauen Winkel liefert und der Nockenwellensensor anzeigt, ob man sich im ersten oder zweiten Teil eines Arbeitsspiels befindet. Durch Erfassen des Zeitpunkt eines Arbeitsspiels kann das erste Ventil 18 derart gesteuert werden, dass der Volumenstrom des Kühlmittels durch die Fluidkammer 12 während des Arbeitsspiels, insbesondere während eines Arbeitstakts eines Zylinders 70, erhöht und reduziert werden kann. Dabei kann beispielsweise die Fluidkammer 12 wechselhaft mit heißem und kaltem Kühlmittelfluid durchströmt werden, so dass eine hohe Temperaturvarianz innerhalb der Fluidkammer 12 erreicht werden kann. Beim Verbrennungsbeginn kann insbesondere kaltes Kühlmittel in die Fluidkammer 12 eingebracht werden und nach zumindest einem Kurbelwellenwinkel von 40° kann der Volumenstrom des Kühlmittels reduziert werden. Hierdurch kann selektiv die Fluidkammertemperatur in Abhängigkeit des Arbeitstaktes eingestellt werden, um kritische Temperaturbereiche, die für die Entstehung von Stickstoffabgasen verantwortlich sind, effektiv zu unterdrücken und ein dynamisches Wärmemanagement bereitzustellen.

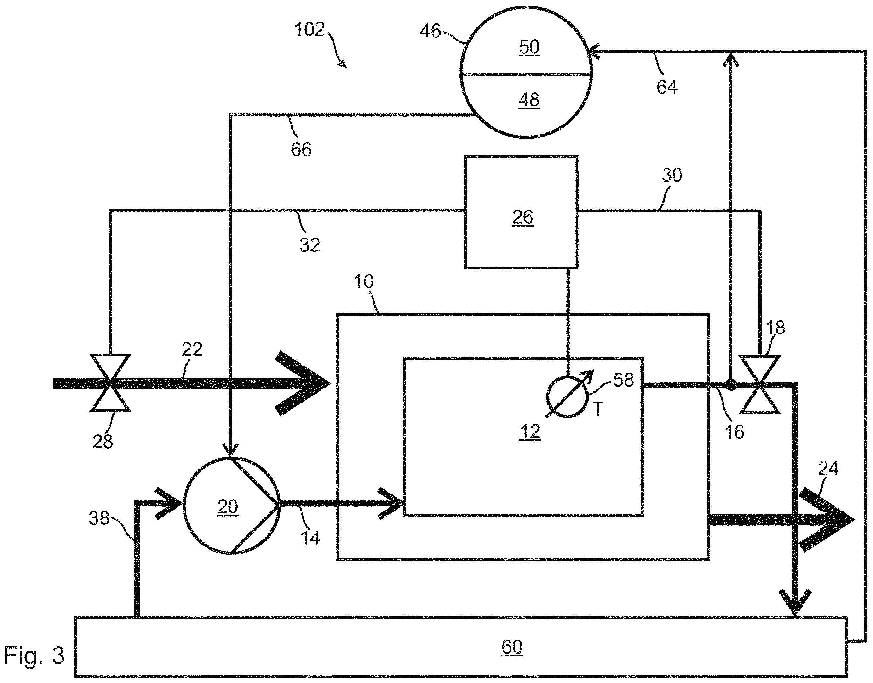

Fig. 3 zeigt ein weiteres Ausführungsbeispiel eines Wärmemanagementsystems 102 der Erfindung. Die grundsätzlichen, bereits in Fig. 1 dargestellten Komponenten des Wärmemanagementsystems 100 sind im Wärmemanagementsystem 102 enthalten. Des Weiteren ist ein Ausgleichsbehälter 46 des Kühlmittelfluids vorgesehen, der eine Flüssigkeitsseite 48 und eine Gasseite 50 aufweist. Ein erstes Kühlmittelfluid wird, geregelt durch das erste Ventil 18, in einen Kühler 60 abgegeben und durch die Kühlmittelzuführung 38 der Kühlmittelfördereinrichtung 20 zugeführt. Vom Kühler 60 kann über eine Entlüftungsleitung 64 Gas und gashaltiges Kühlmittel in die Gasseite 50 des Ausgleichsbehälters entlassen werden, insbesondere bei hohen Temperaturen und hohen Drücken des Kühlmittelfluids. Dies wirkt sich auf die Flüssigkeitsseite 48 des Ausgleichsbehälters aus, die über eine Abgabeleitung 66 zwischen Ausgleichsbehälter und Fluidfördereinrichtung mit der Fluidfördereinrichtung 20 verbunden ist, und das erste Kühlmittelfluid, in die Fluidkammer einführen kann. So kann bei sinkender Motorlast, insbesondere bei Unterschreiten einer bestimmten Motorlast das erste Kühlmittelfluid zumindest teilweise aus der Fluidkammer 12 in den Ausgleichsbehälter 46 verschoben werden und es kann beispielsweise das zweite Kühlmittelfluid aus dem Ausgleichsbehälter in die Fluidkammer verschoben werden. Das zweite Kühlmittelfluid kann einen Sauerstoffanteil von weniger als 20 % besitzen. In dem Wärmemanagementsystem nach Fig. 3 ist es dadurch möglich, zwei verschiedene Kühlmittelfluide einzusetzen, zum einen ein erste Kühlmittelfluid, das im Kreis zwischen Kühler 60, Fluidkammer 12 und geregelt über das erste Ventil 18 durch die Kühlmittelfördereinrichtung 20 zirkulieren kann und ein zweites Kühlmittelfluid, das zwischen Ausgleichsbehälter 46 und Fluidkammer 12 verschoben werden kann. Das zweite Kühlmittelfluid kann in der Gasseite 50 des Ausgleichsbehälters gespeichert sein, und kann bedarfsweise von der Kühlmittelfördereinrichtung 20 in die Fluidkammer 12 eingebracht werden. Hierdurch ist ein schneller Temperaturwechsel möglich und es können in schneller Folge verschiedene Temperaturbereiche durch das erste und zweite Kühlmittelfluid eingestellt werden. In der Fluidkammer 12 ist ein Fluidkammertemperatursensor 58 vorgesehen, der die aktuelle Temperatur der Fluidkammer 12 erfasst und diese an die Motorlaststelleinheit 26 weitergibt, so dass in Abhängigkeit der Fluidkammertemperatur das erste Ventil 18, die Kühlmittelfördereinrichtung 20 sowie die Drosseleinrichtung 28 gesteuert werden kann, um zwischen den verschiedenen Kühlmitteln umzuschalten und die Last zu regeln.

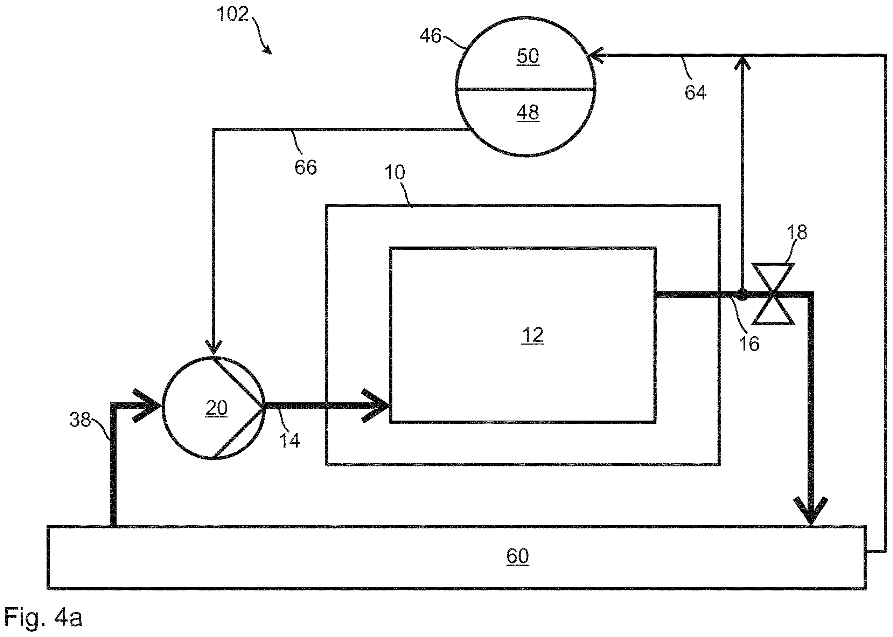

In den Figuren. 4a bis 4c sind verschiedene Betriebsphasen des Wärmemanagementsystems 102, das in Fig. 3 dargestellt ist, gezeigt. In der Fig. 4a ist der normale Betriebsablauf dargestellt, in dem das erste Kühlmittelfluid aus dem Kühler 60 und/oder der Flüssigkeitsseite des Ausgleichsbehälters entnommen wird, der Kühlmittelfördereinrichtung 20 zugeführt wird, und weiterhin über die Fluidkammer-Einlassleitung 14 in die Fluidkammer eingebracht wird, dies ist durch die erhöhte Strichstärke der Kühlmittelfluidleitungen dargestellt. Das erwärmte Kühlmittelfluid steigt im oberen Bereich der Fluidkammer 12 durch die Fluidkammer-Auslassleitung 16 bei geöffnetem erstem Ventil 18 aus und wird zurück in den Kühler 60 geführt. Somit ist der Standardkühlmittelkreislauf geschlossen, wobei in Abhängigkeit verschiedener Motorzustände die Kühlmittelförderleistung reduziert oder erhöht werden kann, zum einen durch das erste Ventil 18, zum anderen durch die Förderleistung der Kühlmittelfördereinrichtung 20.

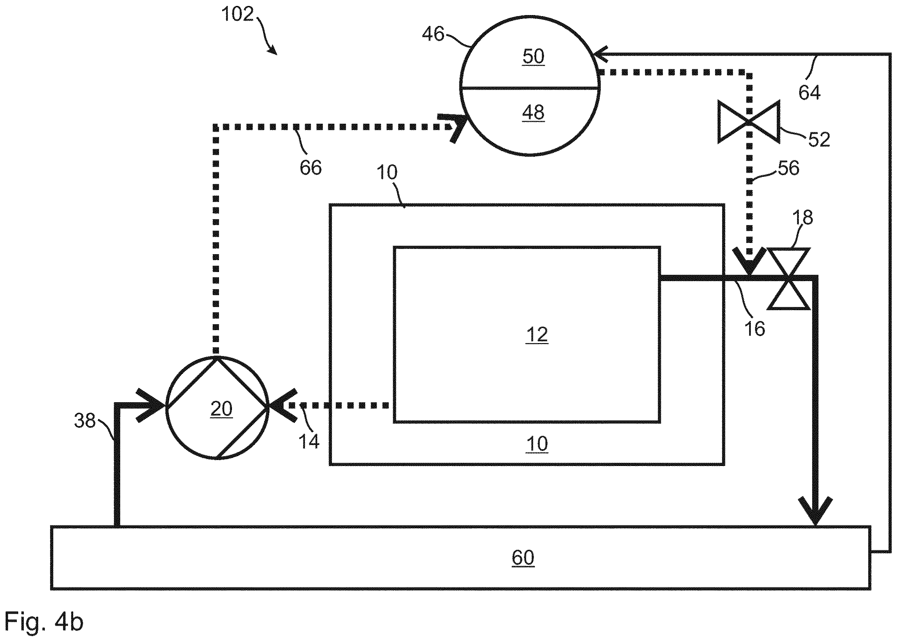

In der Fig. 4b wird die Extraktion des ersten Kühlmittelfluids aus der Fluidkammer dargestellt. Hierbei wird angenommen, dass die Fluidkammer 12 mit dem ersten Kühlmittelfluid befüllt ist, und beispielsweise durch Umschalten der Förderrichtung der Kühlmittelfördereinrichtung 20 kann das erste Kühlmittelfluid aus der Fluidkammer 12 über die Leitung 14 durch die Kühlmittelfördereinrichtung 20 und die Leitung 66 zurück in die Flüssigkeitsseite 48 des Ausgleichsbehälters geführt werden. Dabei ist das erste Ventil 18 geschlossen. Zum Druckausgleich ist die Ausgleichsleitung 56 mit dem dritten Ventil 52 geöffnet, damit das zweite Kühlmittel, ein Gas, aus der Gasseite 50 des Ausgleichsbehälters in die Fluidkammer 12 geführt wird.

Nach ausreichender Extraktion des ersten Kühlmittelfluids aus der Fluidkammer wird das dritte Ventil 52 geschlossen, um ein Befüllen der Fluidkammer mit dem ersten Kühlmittelfluids zu vermeiden.

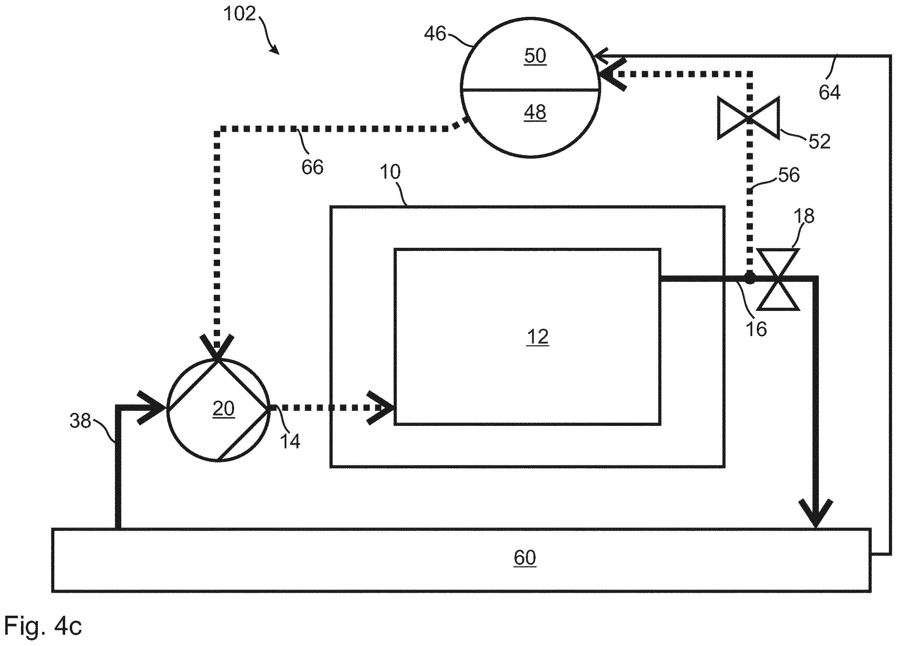

In der Fig. 4c ist dargestellt, wie das erste Fluid, das in der Flüssigkeitsseite 48 des Ausgleichsbehälters 46 gespeichert ist, in die Fluidkammer 12 eingeführt wird. Hierbei wird beispielsweise durch ein Ventil oder durch die Mechanik der Kühlmittelfördereinrichtung 20 gesteuert aus der Abgabeleitung 66 des Ausgleichsbehälters 46 das erste Kühlmittelfluid aus der Flüssigkeitsseite 48 entnommen und getrennt oder zusammen mit dem ersten Kühlmittelfluid aus der Kühlmittelzuführung 38 durch die Kühlmittelfördereinrichtung 20 in die Fluidkammer 12 eingebracht. Ist das erste Ventil 18 geschlossen, so kann das zweite Kühlmittelfluid zurück in die Gasseite 50 des Ausgleichsbehälter 46 geführt werden, wobei hierzu durch ein offenes drittes Ventil 52 ein Druckausgleich der Gasseite 50 des Ausgleichsbehälters 46 erfolgt. So kann die Fluidkammer 12 wahlweise durch das erste Kühlmittelfluid oder das zweite Kühlmittelfluid oder auch durch eine Vermischung von erstem und zweitem Kühlmittelfluid temperiert werden.

Somit kann das erste Kühlmittelfluid aus der Fluidkammer 12 auf demselben Wege extrahiert wie eingebracht werden, um einen schnellen Temperaturwechsel zu ermöglichen.

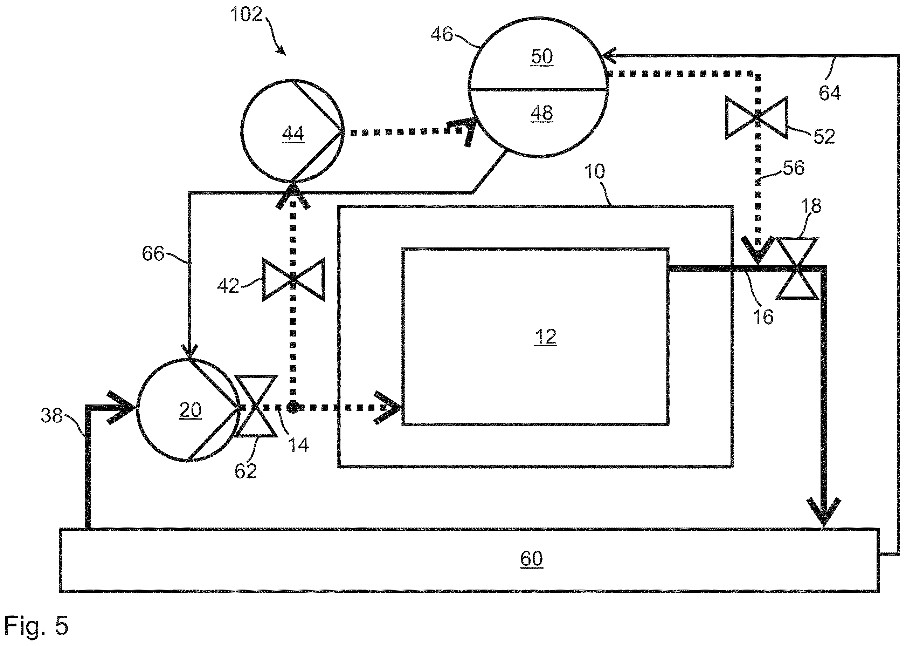

In der Fig. 5 ist eine weiterentwickelte Ausführungsform des in Fig. 3 dargestellten Wärmemanagementsystems 102 gezeigt. Zusätzlich zu den bereits in der Fig. 2 enthaltenen Komponenten umfasst das Wärmemanagementsystem 102 nach Fig. 5 ein Einlassleitungsventil 62 in der Fluidkammer-Einlassleitung 14 sowie eine zweite Fluidfördereinrichtung 44, deren Zu- bzw. Abflussleitung über ein zweites Ventil 42 gesteuert die Möglichkeit eröffnet, aktiv das zweite Kühlmittelfluid aus der Fluidkammer 12 in die Gasseite 50 des Ausgleichsbehälters 46 zurück- oder einzuführen. Die Gasseite 50 des Ausgleichsbehälters 46 kann hierzu wieder über das dritte Ventil 52 mit der Auslassseite 16 der Fluidkammer 12 zur Entlüftung verbunden werden. Das erste Einlassleitungsventil 62 und das zweite Ventil 42 können bevorzugt als ein baulich vereintes 3/2 Wegeventil ausgeführt sein, das wechselseitig eine Zuführung des ersten oder zweiten Kühlmittelfluids steuert. Die zweite Fluidfördereinrichtung 44 kann als bidirektionale Pumpe ausgeführt sein und kann insbesondere bei sinkender Motorlast das zweite Ventil 42 automatisch öffnen und das Einlassleitungsventil 62 schließen, so dass das zweite Kühlmittelfluid in die Fluidkammer aus dem Ausgleichsbehälter 46 eingeführt bzw. extrahiert werden kann, und dort die Fluidkammertemperatur in einen anderen Temperaturbereich überführt werden kann. Somit kann das erste und das zweite Kühlmittelfluid aktiv in den Ausgleichsbehälter überführt und zurückgepumpt werden, so dass die Dynamik des Temperaturwechsels der Fluidkammer weiterhin erhöht werden kann.

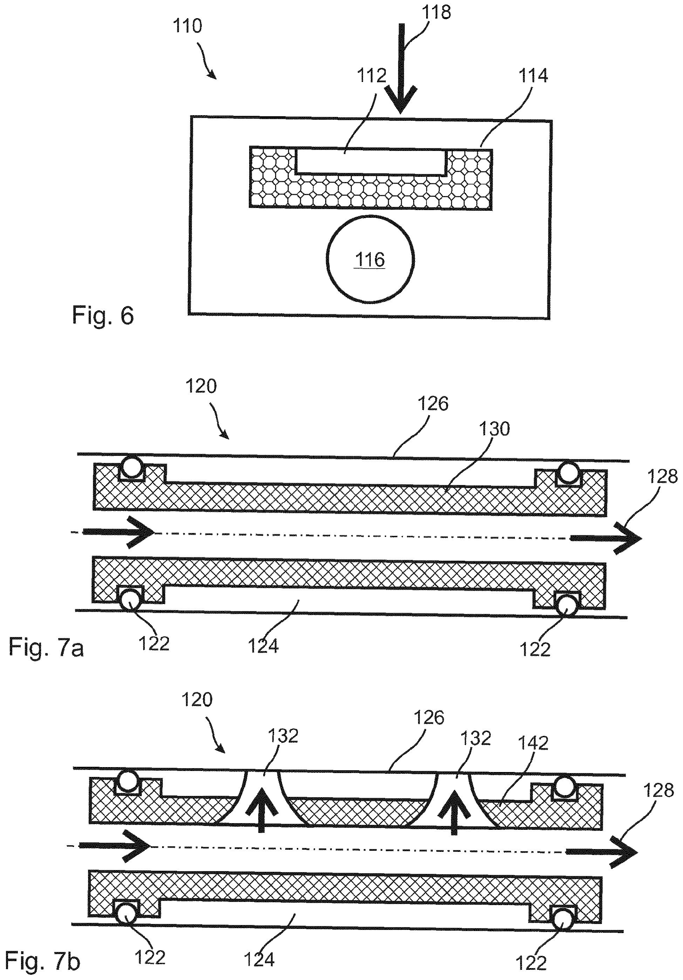

In der Fig. 6 ist ein Kolben 110 zum Einsatz in einem Ausführungsbeispiel eines Wärmemanagementsystems 100 dargestellt. Der Kolben 110 umfasst eine Kolbenkrone mit einer Pleuelachse 116, in der ein Pleuel zur Verbindung mit einer Kurbelwelle angeordnet sein kann. Im Kolben 110 ist eine Isolierungsschicht 114 sowie eine Phasenwechselmaterialschicht 112 eingebracht, wobei die Phasenwechselmaterialschicht 112 eine Schmelztemperatur aufweist, die im Bereich der Kolbentemperatur während des Verbrennungstakts liegt. Durch die Einwirkung einer thermischen Wärmezufuhr 118, wie sie bei dem Verbrennungsvorgang in einer Verbrennungskraftmaschine erfolgt, bewirkt die Isolierungsschicht 114 einer Isolierung des unteren Bereichs der Kolbenkrone und die Phasenwechselmaterialschicht 112 kann überschüssige Wärme durch einen Phasenwechsel speichern, so dass eine thermische Entkopplung des Kolbens erfolgt, und variierende Temperaturen im Brennraum geringe Auswirkungen auf den thermischen Zustand des Kolben und der Zylinderwände aufweisen. Hierdurch wird eine erhöhte Aufwärmung der Zylinderwände, insbesondere bei Hochlastphasen des Motors verringert und die Temperaturvariation gemildert, so dass Temperaturspitzen vermindert und die Bildung von Schadstoffen, die insbesondere bei höheren Temperaturen auftreten, dadurch begrenzt werden kann.

In den Fig. 7a und 7b sind Kühlmittelleitungen bzw. Ölleitungen 120 dargestellt. Die Kühlmittel- oder Ölleitung 120 umfasst eine Grenzoberfläche zu einer Strukturumgebung 126, zum Beispiel einer Kühlgaleriewandung und eine Innenisolierung 130, bevorzugt als Innenisolierungseinsatz, der durch Dichtungen 122 zur Strukturumgebung 126 abdichtend das Kühlmittelfluid oder Schmierfluid führen kann. Optional kann der Innenisolierungseinsatz 130 einen Gasraum 124 oder eine Luftisolierung definieren, da Luft ein sehr guter thermischer Isolator ist. Hierdurch wird es ermöglicht, den Fluidstrom 128 thermisch weitgehend isolierend von der Strukturumgebung zu führen, so dass kein unerwünschtes Aufwärmen oder Abkühlen des Kühlmittelfluids durch die Strukturumgebung eintritt und somit die Kühlmittelfluidtemperatur besser regelbar ist. In der Fig. 7b ist dargestellt, dass für einen Auslass von Schmierfluid oder auch Kühlmittelfluid, insbesondere von Öl als Schmierfluid am Kurbellager partielle Durchbrechungen als Kurbellager-Ölauslässe 132 durch den Innenisolierungseinsatz oder das innere Rohr 142 vorgesehen sind, durch die das Fluid herausströmen kann, um die zu schmierenden bzw. zu kühlenden Bereiche erreichen zu können. Somit wird ein unerwünschtes thermisches Kontaktieren der Strukturumgebung mit dem Fluidstrom vermieden, und dennoch können Schmiermittel beispielsweise zu den Kurbelwellenlagern geführt werden, um diese gezielt zu schmieren und das Öl als Schmiermittel in einem vorbestimmbaren Temperaturbereich zu halten. Hierzu ist eine effektive thermische Isolierung durch einen Luftspalt und/oder durch einen Isolierungseinsatz 130, 142 als Innenwandisolierung vorteilhaft möglich. Insbesondere ist dargestellt, dass durch einen Isolierungseinsatz 130 eine Abschrägung oder auch Abrundung des Abzweiges vom Fluidstrom 128 in die Kurbellager-Ölauslässe 132 ermöglicht, was bei gebohrten Kühlmittelleitungen bzw. Ölleitungen 120 nicht möglich wäre.

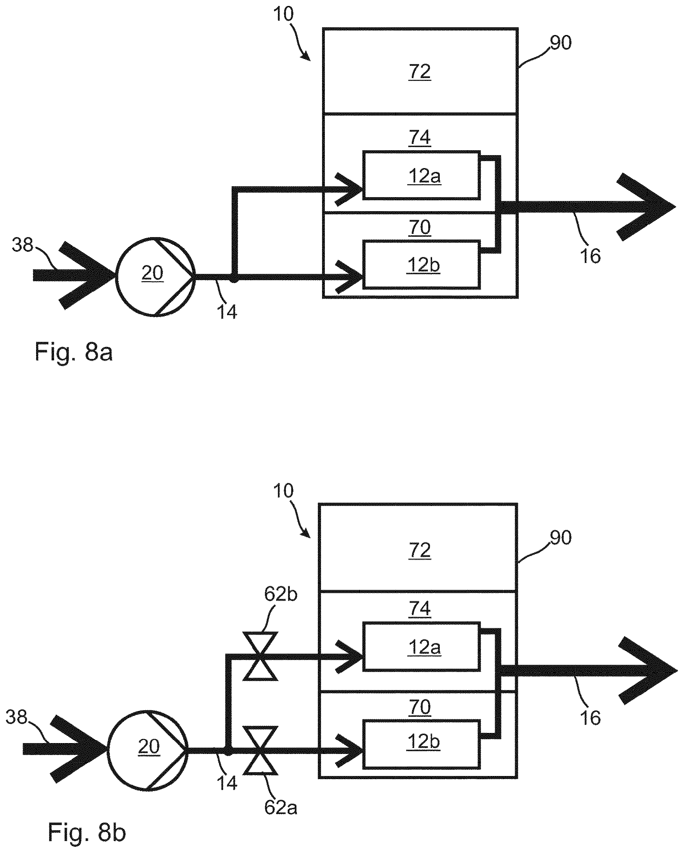

In den Fig. 8a bis 8e sind verschiedene Aufteilungsmöglichkeiten einer mehrteiligen Fluidkammer 12 dargestellt, insbesondere für den Anwendungsfall eines luftgekühlten Motors, die sich über Ventilhaube 72, Zylinderkopf 74 und Zylinderwandung des Zylinders 70 erstrecken kann. Ziel ist die unterschiedliche und variable Temperierung der Zylinderbereiche zur Vermeidung von Temperaturspitzen. Ein Kühlmittelfluid wird in einer Kühlmittelzuführung 38 über eine Kühlmittelfördereinrichtung 20 und eine Fluidkammer-Einlassleitung 14 an den Zylinder 70 und Zylinderkopf 74 des Verbrennungsmotors 10 herangeführt. In der Regel umfasst ein Verbrennungsmotor 10 ein oder mehrerer Zylinder 70, die jeweils zumindest eine Zylinderlaufbahn des Zylinders 70, einen Ventilhaube 72 und einen Zylinderkopf 74 aufweisen. In allen drei Bereichen des Verbrennungsmotors 10 kann eine in sich abgeschlossene oder miteinander verbundene Fluidkammern 12, 12a, 12b vorgesehen sein. Der oder die Fluidkammern 12, 12a oder 12b können baulich getrennt selektiv oder gemeinsam vom ersten Kühlmittelfluid durchströmt werden.

In der Fig. 8a ist dazu dargestellt, dass parallel ein oberer Fluidkammerbereich 12a und ein unterer Fluidkammerbereich 12b der Fluidkammer 12 in oder um die Zylinderwand des Zylinders 70 und im Zylinderkopf 74 vorgesehen sind, die mit Kühlmittefluid durchströmt werden, wobei das austretende Kühlmittelfluid über die Auslassleitung 16 abtransportiert wird.

In der Fig. 8b sind zur selektiven Temperierung in den beiden parallelen Abzweigen der Einlassleitung 14 ein erstes und ein zweites Einlassleitungsventil 62a, 62b vorgesehen, die selektiv die Kühlmittelzufuhr zur Zylinderlaufbahn des Zylinders 70 und Zylindertopf 74 entweder binär oder auch proportional steuern können.

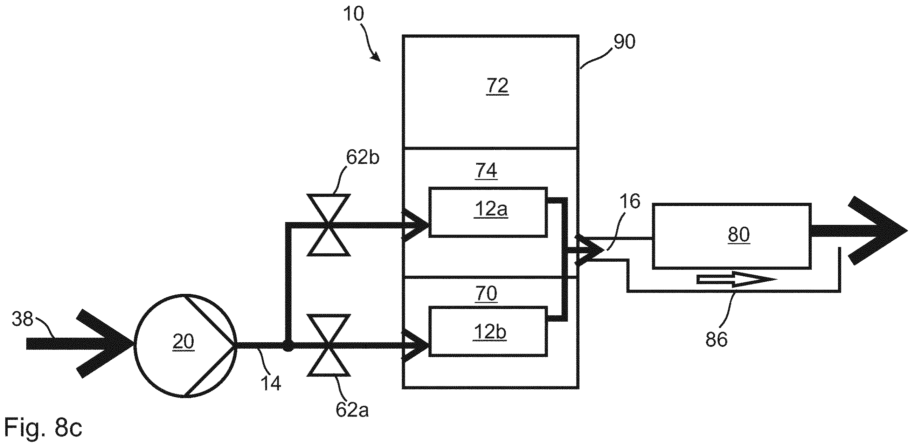

Die Fig. 8c stellt eine weitere Konfiguration der Fluidkammeraufteilung dar, die auf der Variation der Fig. 8b beruht. Die getrennt steuerbaren Kühlmittelzuführleitungen zu Zylinderwand des Zylinders 70 und Zylinderkopf 74 entlassen das Kühlmittefluid in eine gemeinsame Fluidkammer-Auslassleitung 16, die in einem Getriebe 80, insbesondere bodenseitig an einem Ölsumpf des Getriebes, durch eine Getriebeabdeckung 86, die am Getriebe 80 angeordnet ist, beispielsweise angeklebt ist, geführt werden kann. Die Getriebeabdeckung 86 kann beispielsweise als Getriebeölwärmetauscher ausgeführt sein und günstiger Weise zumindest für die nicht mit dem Getriebe in Kontakt stehenden Flächen aus Kunststoff bestehen und an dem Getriebegehäuse von außen angeklebt sein. Hierdurch kann thermische Energie in das Getriebe 80 zugeführt werden bzw. die Temperatur des Kühlmittelfluids durch das Getriebe weiterhin beeinflusst werden.

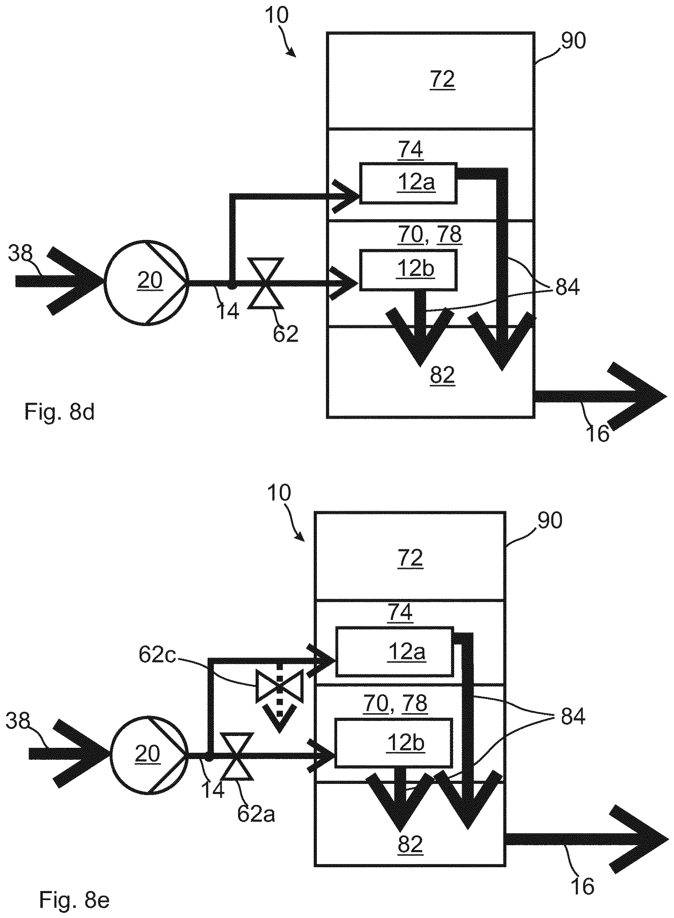

Die Fig. 8d zeigt eine weitere Variante miteinander verbundener Fluidkammern 12a, 12b, allerdings für den Fall einer Ölschmierung und -Kühlung, wobei die Fluidkammer 12a des Zylinderkopfs 74 mit der Fluidkammer 12b der Zylinderwand des Zylinders 70 und des Weiteren mit einer weiteren Fluidkammer, die im Kurbelwellenbereich 82 angeordnet ist, verbunden sind. So kann beispielsweise Kühlmittelfluid aus dem Zylinderkopf 74 in Fluidkammerbereiche der Kurbelwelle 82 hinab strömen und ebenfalls Kühlmittel aus einer Fluidkammer am Zylinder 70, insbesondere im Kolbenlaufbereich 78 ebenfalls in den Kurbelwellenbereich 82 geführt werden. Hierzu sind Kühlmittelrückführungen 84 vorgesehen, um das Kühlmittel der einzelnen Fluidkammerbereiche 12a, 12b miteinander zu verbinden.

In den nachfolgenden Figs. 8d und 8e wird als Kühlmittelfluid Öl eingesetzt, dass sich zum Abfluss im Kurbelwellenbereich 82 sammelt. In der Fig. 8d ist die Zufuhr des ersten Kühlmittelfluids in die Zylinderwandungen der Fluidkammer 12b durch ein Einlassleitungsventil 62 steuerbar welches insbesondere ein Überdruckventil insbesondere einer Kolbenspritzdüsenkühlung ist. Die Fluidkammer des Zylinderkopfes 74 wird kontinuierlich mit Kühlmittel durchströmt und gekühlt.

In Fig. 8e, die wiederum auf der Struktur der Fig. 8d aufsetzt ist eine Bypassleitung der Zuführleitungen der oberen und unteren Fluidkammer 12a, 12 mit einem weiteren drittes Einlassleitungsventil 62c vorgesehen, in dem Kühlmittelfluid direkt vom Zylinderkopf 74 in die Zylinderlaufbahn Fluidkammer des Zylinders 70 überführt werden kann. Vorzugsweise sind dabei das drittes Einlassleitungsventil 62c und das erste Einlassleitungsventil 62a als 3/2 Wegeventil ausgeführt.

### Kühlmittelführung:

Fig. 8a zeigt eine normale Kühlmittelführung insbesondere für einen Gebläse gekühlten Verbrennungsmotor 10. Die von dem Gebläse 20 über eine Kühlmittelzuführung 38 geförderte kalte Luft wird über eine Fluidkammer-Einlassleitung 14 gleichzeitig um einen Zylinderkopf 74 und einen Zylinder 70 geführt um diese zu kühlen. In bestimmten Betriebsbedingungen, wie z.B. während dem Aufwärmen oder bei niedrigen Motorlasten, resultiert diese Kühlmittelführung in Temperaturen, die niedriger sind als für einen optimalen Betrieb erforderlich, insbesondere für den Zylinder 70 wodurch eine höhere Kolbenreibung und ein höherer Wandwärmeverlust die Folge sind.

Fig. 8b zeigt wie dies verbessert werden kann z.B. mit zwei einfachen Schmetterlingsventilen in den Fluidkammer-Einlassleitungen 14, ein zweites Einlassleitungsventil 62b um den Kühlmittelvolumenstrom durch den Zylinderkopf 74 zu regeln und ein weiteres Einlassleitungsventil 62a um den Kühlmittelvolumenstrom durch den Zylinder 70 zu regeln. Während einem Kaltstart sind beide Ventile geschlossen. Das Öffnen kann z.B. durch eine Verbindung mit dem Gaszug gesteuert werden. Wenn eine gewisse Gaspedalstellung überschritten ist, wird der Kühlmittelstrom um den Zylinderkopf 74 freigegeben durch Öffnen des zweiten Einlassleitungsventils 62b. Wenn das Gaspedal oder der Gasgriff weiter geöffnet wird, wird der Kühlmittelstrom um den Zylinder 70 freigegeben durch Öffnen des Einlassleitungsventils 62a. Während kalten Temperaturen können die beiden Ventile 62 auch zusätzlich durch ein Thermostat geschlossen gehalten werden. Das kann z.B. ein Wachsthermostat sein, welches mit dem Zylinder verbunden ist. Die beste Öffnungsstrategie für die Ventile 62 kann durch Motorkennfeldmessungen ermittelt werden, bei denen die Ventile manuell betätigt werden.

Vorteile sind:
- Reduzierte Wandwärmeverluste in Zylinder und Zylinderkopf
- Reduzierte Kolbenreibung im Zylinder
- Reduzierte Pumpverluste des Gebläses 20

Getriebe: Während eines üblichen Abgastestes steigt die Getriebetemperatur eines manuellen Getriebes nur um ca. 10 Grad C. Durch Aufwärmen des Öls bis auf 90 Grad C kann der Verbrauch um bis zu 2% reduziert werden. In Fig.8c wird gezeigt, wie die vom Motor erwärmte Kühlluft über die Fluidkammer-Auslassleitung 16 mittels einer Getriebeabdeckung 86 über ein Getriebe 80 geleitet wird.

Eine einfachere Ausführungsform wird in Fig. 8d gezeigt. Hierbei wird nur das Einlassleitungsventils 62a zur Steuerung des Kühlmittelvolumenstroms durch den Zylinder verwendet, der Zylinderkopf wird permanent durch Kühlmittel umströmt und z.B. durch eine Kühlmittelrückführung durch den Zylinder zurückgeführt.

Kolbenspritzdüsenkühlung: Normalerweise sind die Kolbenspritzdüsen meistens geöffnet wobei der Kolben meist zu stark gekühlt wird. Fig. 8d zeigt auch eine Ausführungsform für eine Schmierölkühlung. Dabei wird das Schmieröl von einer Ölpumpe 20 in eine Kühlspritzdüse 62 gepumpt, von wo es wieder in den Motor zurück läuft. Fig. 8e zeigt eine Ausführungsform, bei der bei kaltem Kolben das Öl zuerst über den Zylinderkopf erwärmt wird und danach über ein drittes Einlassleitungsventil 62c in den Zylinder geleitet wird und von dort über die Kühlspritzdüse an den Kolben gespritzt wird. Sobald der Kolben warm genug ist, oder weiter gekühlt werden muss, wird das erste Einlassleitungsventil 62a geöffnet und das dritte Einlassleitungsventil 62c geschlossen. Dabei können die Einlassleitungsventile 62a und 62c auch als ein 3/2 Wegeventil ausgeführt werden. Auch ist wie in Fig. 8e eine Version mit nur einem Einlassleitungsventil 62a denkbar.

Schubabschaltung: Fig. 9 zeigt eine einfache Lösung zur Schubabschaltung bei einem Vergaser. Dabei wird im Leerlauf ein Treibstoffstrom 150 durch eine Leerlaufdüse 154 mit einem Luftstrom 152 vermischt. Dabei wird die Kraftstoffzufuhr durch das Leerlaufventils mittels eines Vakuumventils 148 unterbrochen, sobald der Unterdruck in dem Luftansaugrohr 144 unterhalb eines Grenzwertes fällt, der deutlich niedriger ist als der Ansaugrohrdruck im Leerlauf. Somit kommt ein Treibstoffvergaser 140 zum Einsatz, der geeignet für eine Ausführungsform eines Wärmemanagementsystems 100,102, 104 ist. Der Vergaser 140 umfasst ein Luftansaugrohr 144 und eine Drosseleinrichtung 28, durch das ein Treibstoff-Luftgemisch 152 angesaugt werden kann. Ein Treibstofffluss 150 wird über eine Leerlaufdüse 154 zugeführt, die aus einer Schwimmerkammer 146 herausragt, wobei ein Vakuumventil 148 vorgesehen ist.

Ein Großteil eines Abgastest für PKW oder Zweiräder besteht aus Bremsvorgängen. So sind zum Beispiel über 30% der gesamten Zykluszeit eines IDC-Fahrzyklus Verzögerungsbewegungen. Bei einer Verzögerung spart eine komplette Abschaltung der Treibstoffversorgung eine hohe Menge Treibstoff ein. Während der Verzögerung ist der Ansaugdruck wesentlich geringer als sogar Leerlauf da die Motordrehzahl beim Schub höher ist als im Leerlauf. Die Treibstoffzuführung während der Verzögerung wird durch eine Leerlaufdüse 154 kontrolliert. Durch ein einfaches Vakuumventil 148 kann die Leerlaufdüse 154 verschlossen werden, wenn der Eingangsdruck über einen bestimmten Grenzwert fällt. Dieser könnte bei ungefähr 300 mbar liegen.

AGR Regelung durch Gasschieber: Fig. 10 zeigt einen Vergaser z.B. eines Rollers, dabei strömt ein Abgasstrom 162 über eine Abgasrückführungsleitung 168 in einen Abgasrückführungsvergaser 160, wobei der Abgasrückführungsvolumenstrom durch die Oberkante des Gasschiebers 164 gesteuert wird, wobei die Öffnung der Abgasrückführungsleitung bei niedrigen Lasten am größten sein kann und dadurch der Abgasvolumenstrom und die Abgasrückführungsrate sehr groß sein kann und bei Öffnung des Gasschiebers die Abgasrückführungsrate reduziert wird. Dabei kann die Abgasrückführungsrate (AGR-Rate) als Funktion der Gasschieberstellung angepasst werden durch die Größe, Höhe und Form des Öffnungsfensters der vom Gasschieber freigegeben wird. Dadurch steuert der Gasschieber nicht nur die Motorlast sondern auch gleichzeitig die AGR-Rate.

Im Vergaser 140 kann, wie in Fig. 10 dargestellt ist, durch eine Modifizierung hin zu einem Abgasrückführungsvergasers 160 weiterhin Treibstoff eingespart werden durch Reduzierung der Drosselverluste. Der Abgasrückführungsvergaser 160 umfasst eine Luftkammer 166, aus der eine Luftströmung 152, gesteuert über ein Abgasventil 164 zugeführt werden kann. Treibstoff 150 wird aus einer Schwimmerkammer 146 und einem Vakuumventil 148 durch eine Leerlaufdüse 154 eingebracht. Durch Rückführung eines Abgasstroms 162 in einer Abgasrückführungsleitung 168 kann ein Abgasstrom im Abgas-Gas-Mischraum 170 eingemischt werden, wobei durch eine Verstellung des Abgasventils 164, das gleichzeitig als Drosseleinrichtung 28 wirkt, die Menge des Abgases und die Menge der Luft bzw. des Treibstoffs proportional verändert werden kann. Das Abgasventil 164/ Drosselventil 28 ist als Schiebeventil ausgeführt. Das Abgas wird durch den Schiebekanal geführt, wobei dieser bei geschlossenem Gasschieber völlig offen ist. Die Größe des Abgasdurchführungsfensters durch das Abgasventil 164 bestimmt die Wirksamkeit des Abgasrückführungsvergasers 160. Ist das Schiebeventil 164 in der unteren Position, so befindet sich der Motor im Leerlauf, befindet sich das Schiebeventil in der oberen Position, befindet er sich in der Volllast.

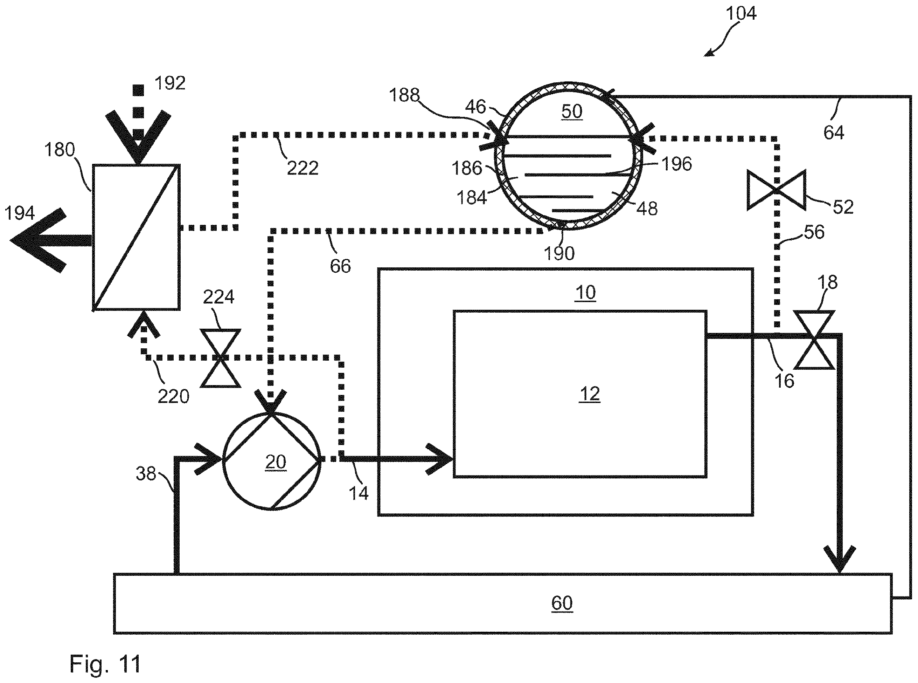

In der Fig. 11 ist eine weitere Ausführungsform 104 eines Wärmemanagementsystems 104 dargestellt. Grundsätzlich entspricht das Wärmemanagementsystem der Fig. 11 dem der Fig. 3, zusätzlich ist am Ausgleichsbehälter 46 über eine Ölwärmetauscher-Abflussleitung 222 ein Ölwärmetauscher 180 angeordnet. Der Ölwärmetauscher 180 weist einen Ölzulauf 192 und einen Ölablauf 194 auf, durch den Wärme zwischen dem Schmierölkreislauf und dem Kühlmittelfluidkreislauf getauscht werden kann. In der Fluidkammer-Einlassleitung 14 zweigt eine Ölwärmetauscher-Zuführungsleitung 220 ab, die zum Ölwärmetauscher 180 führt. Der Fluidstrom kann über ein Ölwärmetauscher-Ventil 224 geregelt werden. Das abgezweigte Kühlmittelfluid endet dann in dem Ausgleichsbehälter 46. Der Ausgleichsbehälter 46 ist hochisolierend ausgeführt und weist eine Wärmeisolierung 184 auf. Dabei kann ein labyrinthartiger Fluidkanal 186 in der Flüssigkeitsseite 48 des Ausgleichsbehälters 46 vorgesehen sein, um eine lange Durchlaufzeit des ersten Kühlmittelfluids zu gewährleisten. Der labyrinthartige Fluidkanal 186 in der Flüssigkeitsseite 48 des Ausgleichsbehälters 46 wird durch Trennwände 196 realisiert, so dass ein möglichst langer Kanal innerhalb des Ausgleichsbehälters gebildet wird, um die Temperaturverteilung im Ausgleichsbehälter 46 besser steuern zu können. Somit ist es möglich, mit dem ersten Fluid, das sich im Ausgleichsbehälter befindet, den Ölwärmetauscher zu erwärmen oder abzukühlen, so dass eine weitere Variabilität der Wärmebeeinflussung gegeben ist. Gezeigt ist hier der Fall eines Warmlaufs, wo die Ventile 18 und 52 geschlossen sind und das Ventil 224 geöffnet ist. Dabei fließt im Ausgleichsbehälter 46 gespeichertes erstes Kühlmittel über eine Ausgleichsbehälter-Fluidfördereinrichtung-Abgabeleitung 66 in die Kühlmittelfördereinrichtung 20 und über die Fluidkammer-Einlassleitung 14 in die Ölwärmetauscher-Zuführleitung 220 und in den Ölwärmetauscher 180 und von dort über die Ölwärmetauscher-Abflussleitung wieder in den Ausgleichsbehälter 46, womit der Kreislauf geschlossen ist.

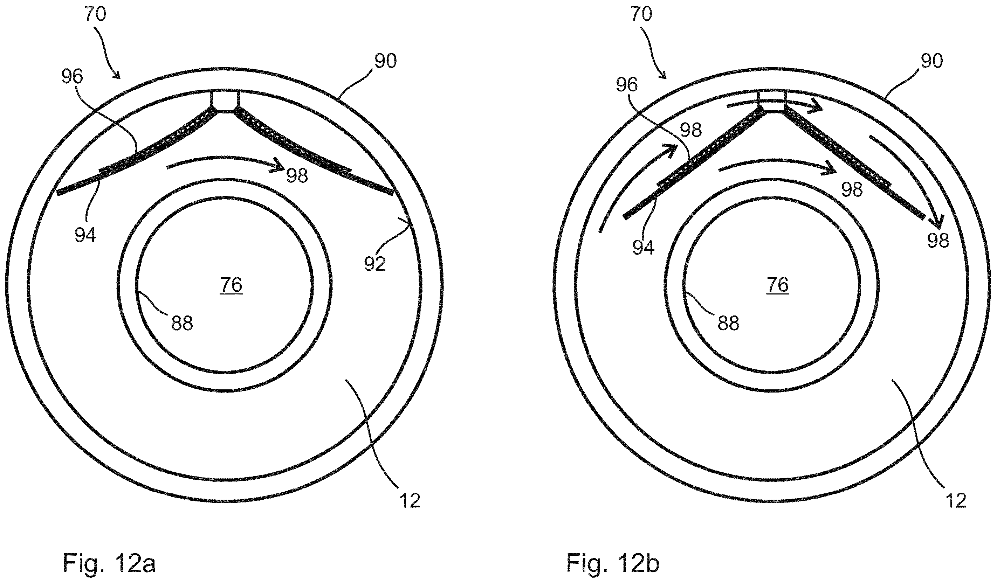

In den Figs. 12a, 12b ist ein Querschnitt durch einen Zylinder 70 dargestellt, der eine selektive Wärmeisolierschicht 94 zwischen Zylinderblock 90 und Zylinderlaufbuchse 88 aufweist. Der Zylinder 70 ist mehrwandig ausgelegt, und weist eine äußere Zylinderwand 92 auf, die den Zylinder gegenüber dem Zylinderblock 90 abgrenzt. Im Inneren ist eine Zylinderlaufbuchse 88 angeordnet, wobei zwischen Zylinderlaufbuchse 88 und Zylinderwand 92 zumindest abschnittsweise eine Fluidkammer 12 angeordnet ist, durch die ein Kühlmittelstrom 98 durchtreten kann, um die Zylinderlaufbuchse 88 zu kühlen. Innerhalb der Zylinderlaufbuchse 88 ist der Brennraum 76 angeordnet. An der Außenwandung 92 des Zylinders 70 sind Isolierschichten 94 auf Bimetallträgern 96 angeordnet, die je nach Temperatur die Isolierschichten näher an die Zylinderaußenwandung 92 heranführen oder in Richtung Zylinderlaufbuchse 88 führen, so dass der Kühlmittelstrom 98 entweder wie in Fig. 12a bei einem Kaltstart von der Außenwandung 92 abgeschirmt wird und eine schnellere Erwärmung erfolgt oder an dieser, wie in Fig. 12b für hohe Temperaturen dargestellt, zwecks besserer Kühlung unmittelbar vorbeiströmt. Hierdurch kann eine temperaturgeführte selektive Regelung der Temperatur in der Zylinderlaufbuchse 88 erreicht werden. Somit kann je nach Temperaturverhältnis durch die unterschiedliche Krümmung der Bimetallträger 96 die Isolierschicht 94 positionsveränderlich in der Fluidkammer 12 angeordnet sein, und somit eine automatische Steuerung des Kühlmittelstroms 98 bewirken.

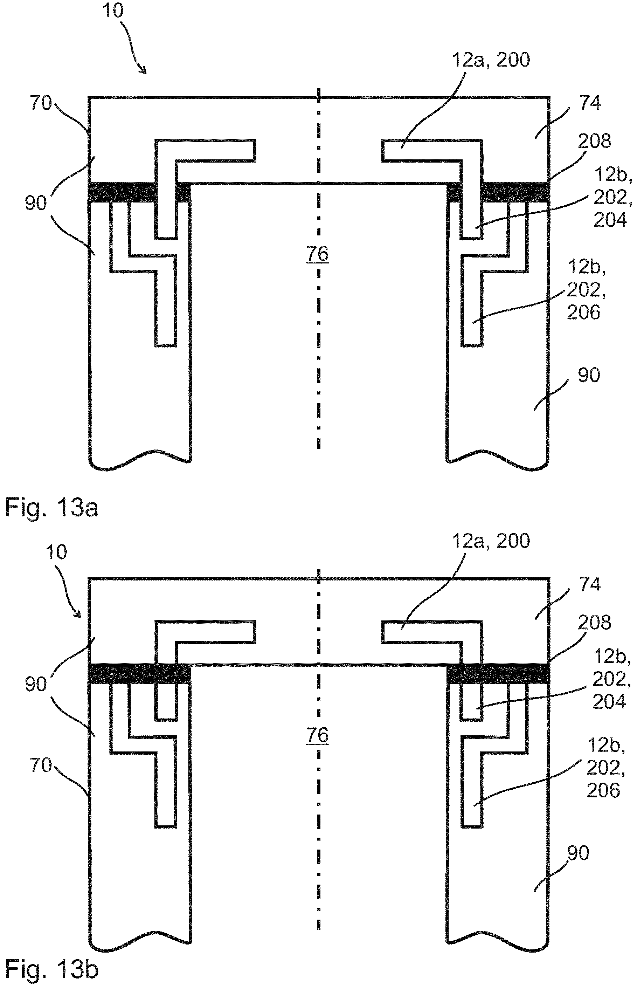

Die Figs. 13a, 13b zeigen eine mehrteilige Fluidkammer 12, die in einem Zylinder 70 eines Verbrennungsmotors 10 angeordnet ist. Der Zylinder 70 umfasst einen Zylinderkopf 74 und einen Zylinderblock 90 die einen Brennraum 76 umschließen, wobei eine Fluidkammer 12 aus Unterkammern 12a und 12b besteht. Die Fluidkammer 12a ist im Zylinderkopf 74 untergebracht und der Fluidkammerbereich 12b im Zylinderblock 90. Die obere Zylinderkammer 12a wird auch als Zylinderkopf-Fluidkammer 200 bezeichnet und die untere Fluidkammerbereiche 12b als Zylinderblock-Fluidkammer 202. Die Fluidkammer 12b wird als Zylinderblock Fluidkammer 202 bezeichnet und ist wiederum unterteilt in einen oberen Zylinderblock-Fluidkammerbereich 204 und einen unteren Zylinderblock-Fluidkammerbereich 206. In Fig. 13a steht die obere Fluidkammer 204 des Zylinders 70 in fluidaustauschbarem Kontakt mit der oberen Fluidkammer 200, in Fig. 13b sind auch diese beiden Fluidkammerbereiche getrennt um eine weitere Variabilität zu ermöglichen und die Temperaturen der Fluidkammern 200 und 204 unabhängig voneinander einstellen zu können. Somit kann eine Kühlleistung im Zylinderkopf 74 in den oberen Bereich des Zylinders 70 hinein wirken, wobei weitere, untere Zylinderbereiche des Zylinderblocks 90, insbesondere entlang der Kolbenlaufbahn durch die Fluidkammer 206 unabhängig temperiert werden können. Dadurch sind im kritischen Bereich des Zylinderkopfs und Zylinderblocks unterschiedliche Temperaturverhältnisse und Kühlfluidströmungen einstellbar, so dass insbesondere in Abhängigkeit eines Kurbelwellenwinkels selektive Kühlleistungen eingebracht werden können. So ist beispielsweise denkbar, dass die Zylinderkopf-Fluidkammer 200 einen separaten Zu- und Ablauf aufweist und die Zylinderblock-Fluidkammer 202 zeitweise mit Gas befüllt werden kann. Es können verschiedene Kühlmittelfluide in den verschiedenen Fluidkammern 12a, 12b, 200, 202, 204, 206 eingesetzt werden, und die Temperaturniveaus der einzelnen Kühlmittelfluide in den Fluidkammern können unterschiedlich ausgeführt sein. Insbesondere können die zwei getrennten Fluidkammerbereiche 204 und 206 des Zylinderblocks derart unterteilt sein, dass die untere Fluidkammerbereiche 206 entlang des Zylinderhubs geführt ist, um diesen selektiv kühlen zu können, und der obere Bereich 204 der Fluidkammer 202 mit der Zylinderkopffluidkammer 200 verbunden ist. Die unteren Zylinderblock Fluidkammerbereiche 206 können wie gezeigt im oberen Bereich radial um die oberen Zylinderblock Fluidkammerbereiche 204 herum angeordnet sein. Es ist aber auch denkbar, dass diese nur unterhalb der oberen Zylinderblock Fluidkammerbereichen 204 angeordnet sind und nicht radial um die oberen Zylinderblock Fluidkammerbereiche 204 herum angeordnet sind.

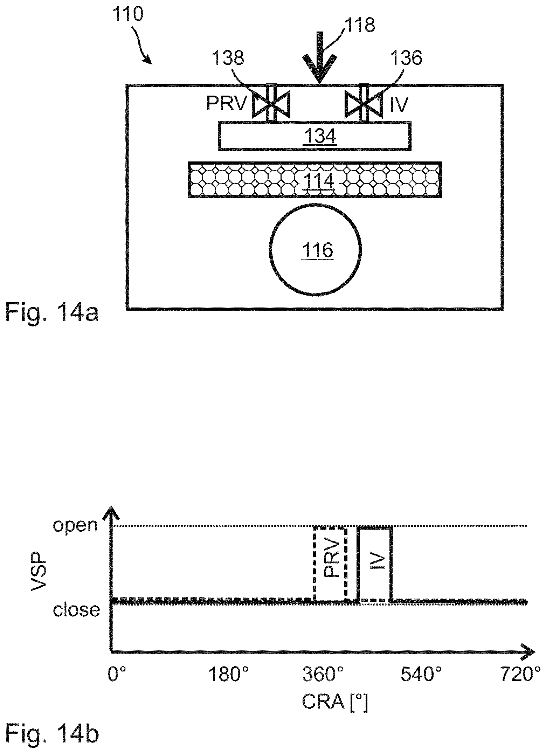

In den Figs. 14a und 14b ist eine Ausführungsform eines Kolbens 110 dargestellt, der vorteilhaft in einer Ausführungsform des Wärmemanagementsystems 100 eingesetzt werden kann. Der Kolben 110 umfasst eine Kolbenkrone mit einer Pleuelachse 116 sowie einer Isolierungsschicht 114. Oberhalb der Isolierungsschicht ist eine Expansionskammer 134 angeordnet, die mit einem Massenträgheits-Expansionskammerventil 136 und einem Druckausgleichsventil 138 mit der Oberfläche des Kolbens 110 verbunden sind. Durch Zufuhr von Wärme wird eine thermische Belastung 118 der Oberfläche des Kolbens 110 generiert. Durch das Druckausgleichsventil 138kann bei einer Erhöhung des Brennraumdrucks Gas aus dem Brennraum in die Expansionskammer 134 entweichen, welches bei einer Reduzierung des Brennraumdrucks eingeschlossen wird, nachdem sich das Druckausgleichsventil 138 wieder geschlossen hat, wobei das Expansionskammerventil 138 durch Massenträgheit geöffnet und geschlossen werden kann, insbesondere nach zum 90° Kurbelwinkel nach dem oberen Totpunkt geöffnet werden kann, so dass heißes Gas wieder aus der Expansionskammer 134 in den Brennraum zurück strömen kann. Die Expansionskammer 134 wird durch die thermische Isolierung 114 auf der Unterseite des Kolbens von untenliegenden Bereichen des Kolbens und der Pleulstange isoliert um den Wandwärmeverlust zu minimieren.

Im Diagramm Fig. 14b wird das Öffnen und Schließen des Massenträgheits-Expansionskammerventils 136 (IV) und des Druckausgleichsventils 138 (PRV) in Abhängigkeit des Kurbelwellenwinkels CRA (Crankshaft Rotation Angle) dargestellt. Zuerst öffnet nach dem oberen Totpunkt das Druckausgleichsventil 138 und etwa 90° später das Massenträgheits-Expansionskammerventil 136, um dynamisch eine Kühlung des Brennraums derart vorzunehmen, dass erhöhte Temperaturen vermieden werden und die NOx-Bildung reduziert wird.

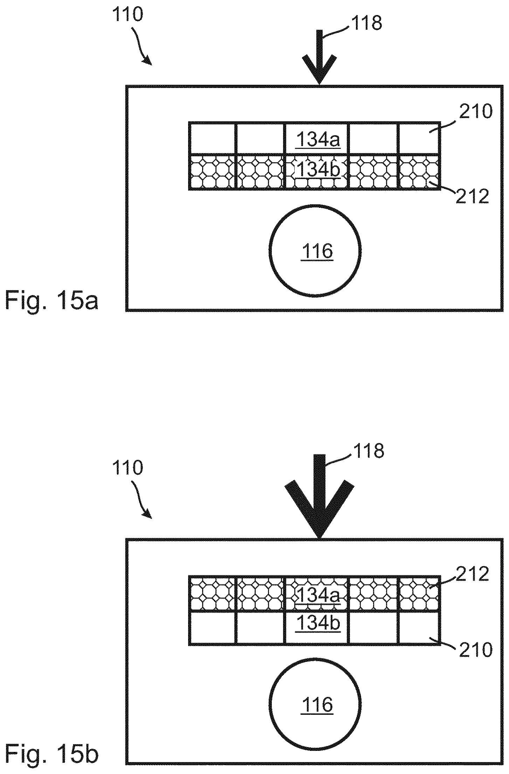

In den Fig. 15a und 15b sind schematisch weitere Möglichkeiten zur Temperatursteuerung eines Kolbens 110 zum Einsatz in einem Ausführungsbeispiel eines Wärmemanagementsystems dargestellt. Der in den Fig. 15 dargestellte Kolben 110 umfasst eine Kolbenkrone mit einer Pleuelachse 116. Im oberen Bereich der Kolbenkrone ist eine Expansionskammer 134 angeordnet. In der Expansionskammer 134 ist in einem Unterbereich 134a eine Gasisolierungsschicht 210 und in einem weiteren Unterbereich 134b eine Kühlmediumschicht 212 vorgesehen.

Fig. 15a zeigt die Situation während der Expansion nach Ende der Verbrennung. Die thermische Belastung 118 sinkt und durch die auf den Kolben wirkenden Massenkräfte bewegt sich die Kühlmediumschicht 212 zumindest nach 90° Kurbelwinkel nach dem oberen Totpunkt nach unten und tauscht sich mit der Gasisolierungsschicht 210 aus, die nach oben verdrängt wird. Dadurch wird ein momentaner Wandwärmeverlust reduziert und die in der Kühlmediumschicht 212 aufgenommene Wärme wird an den Kolbenboden abgegeben. Während der Verbrennungsphase, die in Fig. 15b gezeigt ist, ist die thermische Belastung 118 hoch. Durch die Massenträgheit liegt die Kühlmediumschicht 212 an der Kolbenkrone an und nimmt Wärme auf um die maximale Temperatur der Kolbenkrone zu reduzieren. Durch die Kombination von Wärmeleitung, Konvektion und Austausch des Kühlmediums wird eine verbesserte Wärmeabfuhr erreicht. Hierdurch erfolgt ebenfalls eine thermische Trennung und Temperaturnivellierung im Arbeitstakt, so dass die Zylinderlaufbahn und der Kolben selektiv temperierbar sind, um Temperaturspitzen zu verringern.

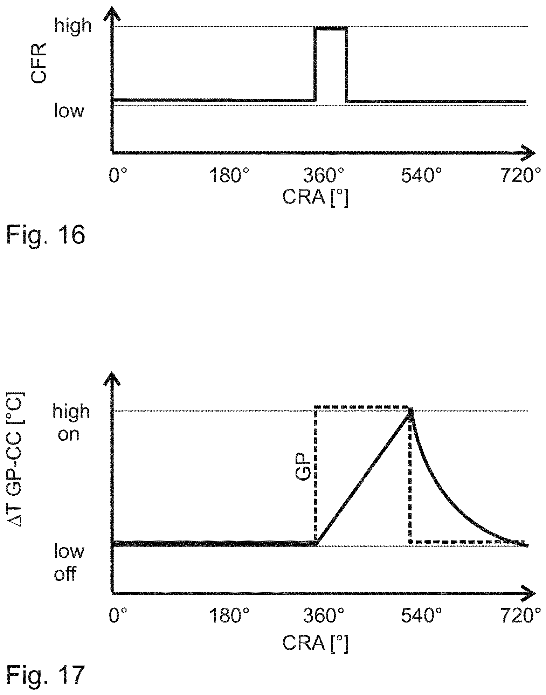

Im Diagramm der Fig. 16 ist eine variable Einstellung einer Kühlmittelflussrate CFR zwischen einer niedrigeren Kühlmittelflussrate CFR und einer höheren Kühlmittelflussrate in Abhängigkeit des Kurbelwinkels CRA dargestellt. Entsprechend des Diagramms kann die Förderleistung der Kühlmittelfördereinrichtung 20 oder des ersten Ventils 18 oder des Austausches von erstem und zweitem Kühlmittelfluid eingestellt werden. Ab dem oberen Totpunkt (hier bei 360° Kurbelwinkel gezeigt) wird für die ersten 90° eine hohe Kühlmittelflussrate vorgesehen, die im übrigen Verlauf herabgesetzt wird. So wird beim Entstehen der hohen thermischen Belastung eine höhere Kühlleistung angefordert, die dann anschließend wieder reduziert werden kann. Auch hier lassen sich thermische Spitzen besser absorbieren, wobei ein schnelles Ansprechen des Wärmemanagementsystems erforderlich ist.

Im Brennraum kann insbesondere eine Glühkerze vorgesehen sein, um nach Ende der Verbrennungsphase die Temperatur im Brennraum zu erhöhen. Dabei ist es, wie im Diagramm der Fig. 17 dargestellt, durchaus denkbar, dass die Glühkerze in Abhängigkeit des Kurbelwellenwinkels CRA, insbesondere im Bereich zwischen 360° und 540° bzw. im Arbeitsbereich eingeschaltet wird (Schaltkurve GP) und in den übrigen Bereichen wieder ausgeschaltet wird, so dass die Temperaturdifferenz zwischen der Glühkerze und der Brennkammer ΔT_{GB-CC} während dieses Zeitraums ansteigt und hernach wieder abfällt. Hierdurch können eine optimierte Verbrennung erreicht werden, und so die Schadstoffemissionen, insbesondere Partikel, HC und CO, aber durch Anpassung des Brennverlaus auch NOx herabgesetzt werden.

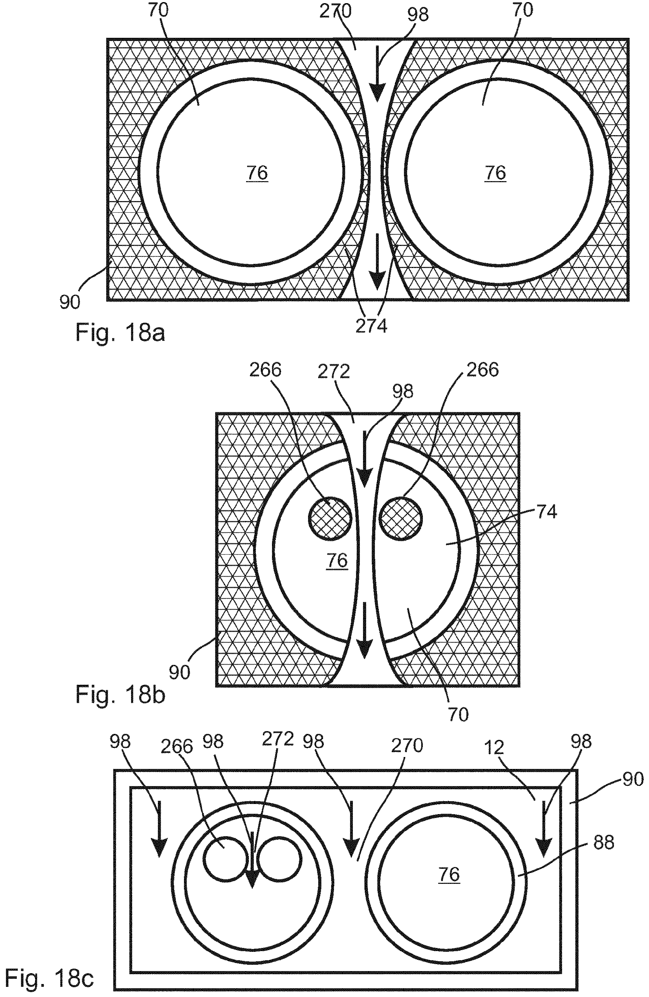

In den Figs. 18a, 18b und 18c sind mögliche Anordnungen von Kühlmittel-Durchtrittskanälen zwischen benachbarten Zylindern 70 bzw. durch einen Zylinderkopf 74 dargestellt.

In der Fig. 18a sind zwei Zylinder 70 unmittelbar benachbart angeordnet und weisen Brennräume 76 auf. Im Zylinderblock 90 zwischen den beiden Zylindern 70 ist eine erste Kühlmittel-Durchtrittsöffnung 270 vorgesehen zwischen Stegen 274 benachbarter Zylinder, durch die ein Kühlmittelstrom 98 verlaufen kann, um die Zylinderwände besser kühlen zu können und eine Überschreitung der maximal zulässigen Materialtemperatur zu vermeiden.

In der Fig. 18b ist ein Zylinderkopf 74 mit zwei Abgas-Auslassventilen 266 dargestellt. Auch hier kann eine Kühlmittel-Durchtrittsöffnung 272 zwischen den beiden Auslassventilen 266 des Zylinderkopfs 74 angeordnet sein, um den Kühlmittelstrom zwischen den beiden Ventilen 266 hindurchzuleiten. Hierdurch kann effektiv der Zylindermantel bzw. der Zylinderkopf 74 im Motorblock gekühlt werden, wobei mögliche Kühlmittelströme in den Fig. 8 dargestellt sind.

Die Fig. 18c stellt eine Zusammenschau von Kühlmittelströmen 98 zwischen zwei Zylindern 70 und durch einen Zylinderkopf 74 dar, die einzeln in den Figs. 18a und 18b dargestellt sind. Der Stegbereich 274 befindet sich um die DurchtrittsÖffnung 270 herum. Im Querschnitt ist der Wassermantel, der durch die Fluidkammer 12 um die Zylinder 70 ausgebildet ist, deutlich erkennbar. Zwischen den Stegen 274 der Brennräume 76 benachbarter Zylinder 70 sind mehrere erste Kühlmittel-Durchtrittsöffnungen 270 zum Kühlmittelaustausch zwischen der jeweils der Druck- und Gegendruckseite des Kolbens 110 zugewandten Seite im Zylinderblock 90 und Zylinderkopf 74 angeordnet. Im Zylinderkopf 74 eines, in der Regel aller Zylinder 70, ist in der Mitte zwischen zwei benachbarten Auslassventilen 266 in der Ebene durch die Mittellinien der beiden Auslassventile 266 eine zweite Kühlmittel-Durchtrittsöffnung 272 angeordnet. Eine Strömungsgeschwindigkeit in zumindest einer der Kühlmittel-Durchtrittsöffnungen 270, 272 kann durch Reduzierung zumindest eines Strömungsquerschnittes der Zylinderkopf-Fluidkammer 12a oder der Zylinderblock-Fluidkammer 12b in Richtung parallel zur Kühlmittel-Durchtrittsöffnung 270, 272 erhöht werden. Dabei beträgt der Querschnitt der Kühlmittel-Durchtrittsöffnungen 272 mindestens 10% des minimalen Gesamtquerschnittes der Zylinderkopf-Fluidkammer 12a in der Ebene durch die Mittellinien der beiden Auslassventile 266.

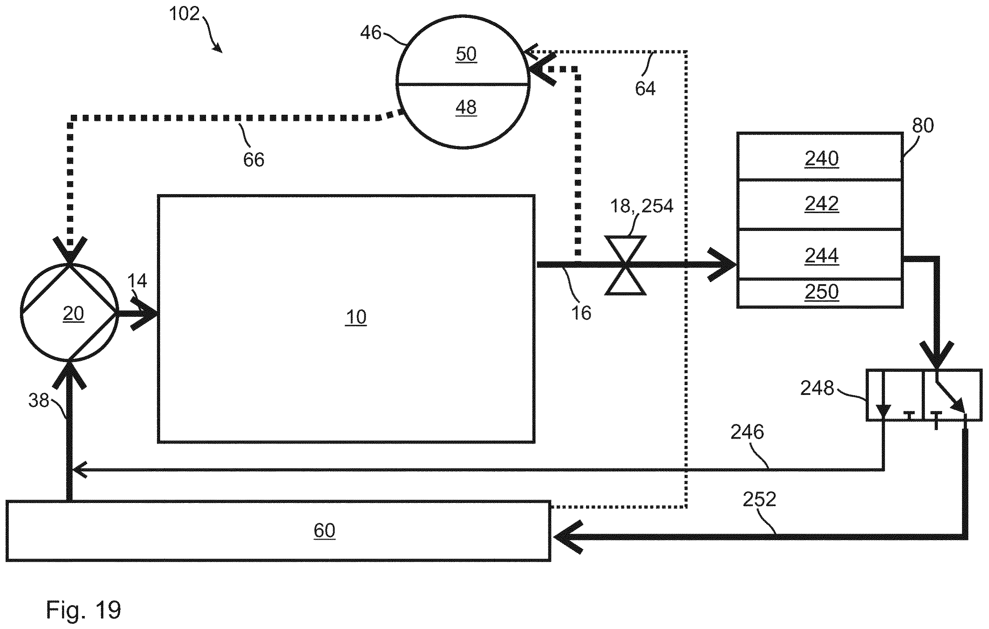

In der Fig. 19 ist ein weiteres Ausführungsbeispiel eines Wärmemanagementsystems 102 dargestellt, das im Wesentlichen zurückgeht auf das in Fig. 3 dargestellte Wärmemanagementsystem 102 in Kombination mit dem in Fig. 8c dargestellten Getriebeölwärmetauscher 86 des Getriebes 80. Ausgehend vom Verbrennungsmotor 10 ist die Fluidkammer-Auslassleitung 16 durch ein Getriebe 80 geführt, wobei das Getriebe 80 eine Getriebemechanik 240, ein Getriebeölsumpf 242 und ein Getriebeölwärmetauscher 244 und eine Außenisolierung 250 umfasst. Der Kühlmittelfluidstrom durchläuft den Getriebeölwärmetauscher 244 und kann über ein schaltbares Kühlerbypassventil 248 entweder zurück in den Kühler 60 durch eine Kühlerrückleitung 252 oder direkt in die Kühlmittelzuführung 38 der Kühlmittelfördereinrichtung 20 durch die Kühlerbypassleitung 246 rückgeführt werden. Durch den Getriebeölwärmetauscher 244 kann thermische Energie in das Getriebe eingeführt bzw. aus diesem entnommen werden, und so eine höhere Temperaturvariabilität im Wärmemanagementsystem erreicht werden.

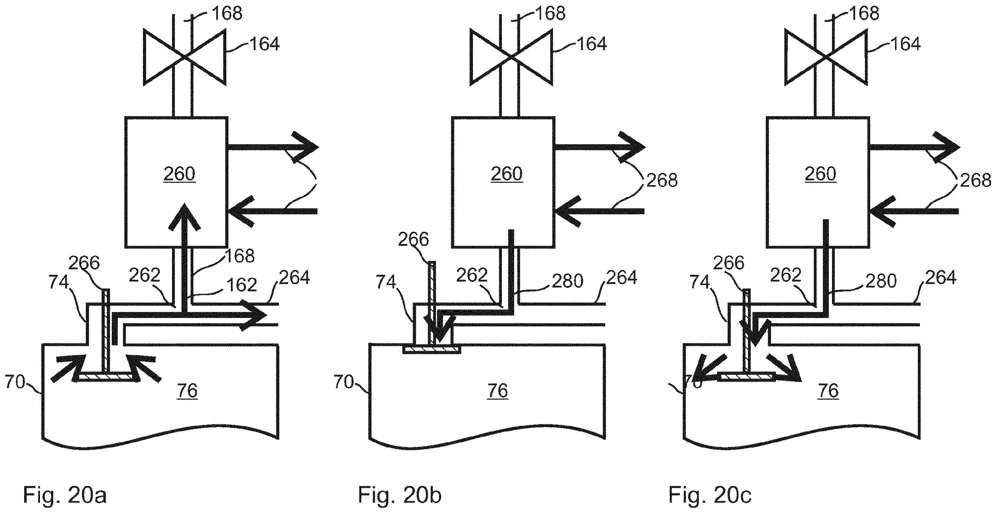

In den Fig. 20a bis 20c ist ein Ausführungsbeispiel eines Wärmemanagementsystems 100, 102 oder 104 nach der Erfindung dargestellt. dabei befindet sich im Oberbereich des Zylinderkopfs 74 des Zylinders 70 ein Abgasrückführungskühler 260. Der Abgasrückführungskühler 260 wird durch eine Kühlmittelleitung 168 mit einem Kühlfluid durchströmt. Abgas tritt, wie in Fig. 20a dargestellt, aus dem Brennraum 76 durch ein Auslassventil 266 aus und wird entlang eines Abgaskanals 264 geführt, wobei in einer Abgaskanal-Entnahmestelle 262 ein Abzweig des Abgaskanals 264 in Richtung Abgasrückführungskühler 260 erfolgt. Das durch den Abgasrückführungskühler 260 durchtretende Abgas kann dabei gekühlt werden, wobei der Volumenstrom durch ein Abgasrückführungsventil 164 in der Abgasleitung 168 geregelt werden kann. Durch die Kühlwirkung im Abgasrückführungskühler 260 scheidet sich Kondensat des Abgases ab, das durch Schwerkraft nach unten fließt und bei geschlossenem Auslassventil 266 sich oberhalb des Ventils sammelt, siehe Fig. 20b. Öffnet sich das Ventil 266, wie in Fig. 20c dargestellt, so strömt das Abgaskondensat wieder in den Brennraum 76, wo es wieder verdampft und somit den Brennraum und die angesaugte Luft kühlt.

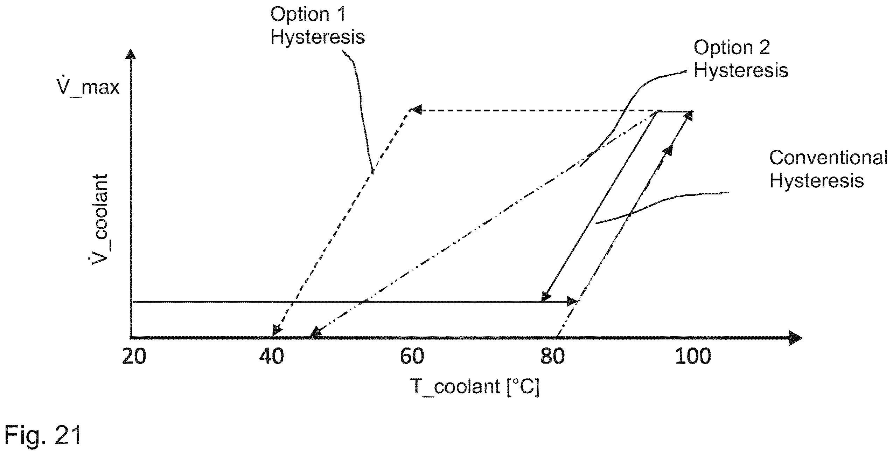

In der Fig. 21 ist eine Schalthysterese eines Kühlmittelthermostats mit der Kühlmitteltemperatur T_{coolant} auf der X-Achse und dem Kühlmittelvolumenstrom V_{coo-lant}, der in etwa dem Öffnungsquerschnitt des Kühlmittelthermostats bzw. des ersten Ventils 18 entspricht, auf der Y-Achse dargestellt, wobei der Kühlmittelstrom in Abhängigkeit der Temperatur gesteuert wird. Zum einen ist mit einer durchgezogenen Linie eine konventionelle Hysterese (Conventional Hysteresis) dargestellt, die im Bereich zwischen 75 °C und 100 °C den Kühlmittelstrom bis auf einen geringen Leckage Strom zwischen 0 und einem maximalen Kühlmittelstrom in einem engen Hysteresefenster von ca. 3°C steuert. In einer ersten verbesserten Ausführungsform die in einer gestrichelten Linie dargestellt ist (Option 1 Hysteresis) wird diese Hysterese deutlich erweitert, so dass die Hysterese einen Bereich zwischen 40 °C und 100 °C der Kühltemperatur überstreicht, dass in weiteren Kühlmitteltemperaturbereichen die Temperatur variieren kann, ohne dass der Kühlmittelvolumenstrom abgeschaltet wird. Alternativ kann auch eine zweite Hysteresekennlinie, die in einer Strich/Punkt Linie gezeigt ist (Option 2 Hysteresis), angedacht sein, indem der Volumenstrom proportional zu einer abfallenden Temperatur abnimmt, wobei der Thermostatöffnungshub nun eben proportional zum Volumenstrom ist, der durch den Kühler 60 fließt, wobei eine Proportionalwirkung des Ventils 18 bzw. des Kühlmittelthermostats vorausgesetzt ist. Hierdurch kann eine verbesserte Steuerung der Kühlmittelleistung erreicht werden.

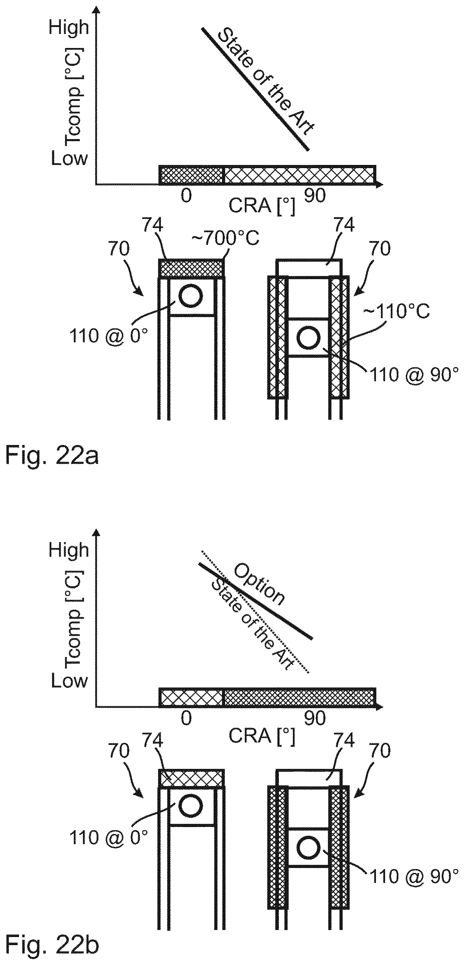

In den Figs. 22a und 22b ist die Temperaturverteilung am Zylinderkopf 74 und in der Zylinderwandung eines Zylinders 70 dargestellt. Die Fig. 22a zeigt den Stand der Technik, bei dem im Zylinderkopf Bauteil Spitzentemperaturen bis zu 700 °C an den Auslassventilen auftreten können (enge Schraffierung). Während der Kolben kurz nach etwa 0° des Kurbelwellenwinkels CRA befindet ist die Temperatur im Brennraum selbst am höchsten. Befindet sind der Kolben bei etwa 90° CRA, so sinken die Brennraumtemperaturen deutlich. Die Temperaturen der Zylinderwandung können in Teillast etwa 110 °C betragen (weite Schraffierung). Hiermit ergibt sich ein Temperaturgradient der den im Diagramm dargestellten Wert aufweist.

In der Fig. 22b ist dargestellt, dass der Temperaturgradient durch Einsatz eines vorgeschlagenen Ausführungsbeispiels deutlich abgeflacht ist, so dass gerade im Zylinderkopf und gegebenenfalls auch im Brennraum eine geringere Spitzentemperatur herrscht und an der Zylinderwandung eine höhere Temperatur herrscht, wobei die Gesamtmenge an thermischer Energie gleichmäßiger verteilt ist und die Entstehung von Abgasen, die von der Temperatur abhängt, dadurch deutlich reduziert werden kann. Der Temperaturgradient im Zylinder ist deutlich abgeflacht über dem Arbeitstakt. Ein derartiger flacher Verlauf der Temperaturverteilung in Zylinderkopf und Zylinderwandung wird durch die vorgeschlagenen Maßnahmen eines Wärmemanagementsystems nach der Erfindung erreicht.

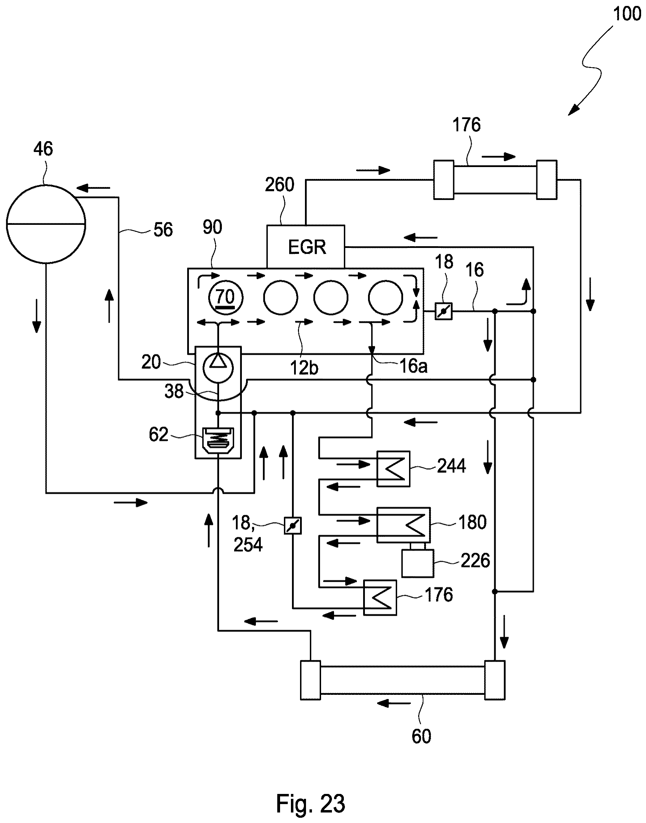

Die Fig. 23 zeigt ein weiteres Ausführungsbeispiel eines Verbrennungsmotors 10 mit einem Wärmemanagementsystem 100. Das Wärmemanagementsystem 100 umfasst eine Fluidkammer 12, von der lediglich ein oberer Fluidkammerbereich 12a im Bereich der Zylinderköpfe sowie ein unterer Fluidkammerbereich 12b im Bereich der Zylinderwandungen zu erkennen sind. Kühlmittelfluid wird durch eine Kühlmittelfördereinrichtung 20 in den oberen und unteren Fluidkammerbereich 12a und 12b des Motorblocks gepumpt und tritt in der Auslassleitung 16 aus, wo es zurück zum Kühler 60 geführt wird. In der Auslassleitung 16 ist das erste Ventil zur Lastabhängigen Steuerung des Kühlmittelfluids angeordnet. Im Bereich der Auslassleitung 16 endet eine Druckausgleichsleitung 56 der Gasseite des Ausgleichsbehälters 46. Die Flüssigkeitsseite des Druckausgleichsbehälters 46 ist an die Kühlmittelzuführung 38 der Kühlmittelfördereinrichtung 20 geführt. Ein zweiter Auslassbereich 16a führt Kühlmittelfluid über einen Getriebeölwärmetauscher 244, einen Ölwärmetauscher 180, einen Ölfilter und Ölkühler 226 und einen zusätzlichen Heizungswärmetauscher 176 ebenfalls zurück zur Fluidfördereinrichtung 20, wobei in diesem Strang das erste Ventil 18 vorgesehen ist, das den Kühlmittelfluss durch den Getriebeölwärmetauscher 244 und den elektrischen Zusatzheizer 178 steuern kann. Am Auslassbereich 16 erfolgt eine weitere Abzweigung, wobei Abgas durch einen Abgasrückführungskühler 260 und einen Heizungswärmetauscher 176 ebenfalls zurück zur Fluidfördereinrichtung 20 geführt werden kann. Somit existieren drei unabhängige Rückläufe, wobei in jedem Rücklauf eine Kühl- bzw. Heizvorrichtungen vorgesehen sind, um zusätzlich das Kühlmittelfluid zu erwärmen bzw. abzukühlen. Durch geeignete Schaltmittel (nicht alle dargestellt) wie ein erstes Ventil 18 und ein Einlassleitungsventil 62 können die einzelnen Rückführungsleitungen geöffnet oder geschlossen werden, so dass das Kühlmittelfluid in einer vorbestimmbaren Temperatur gehalten werden kann.

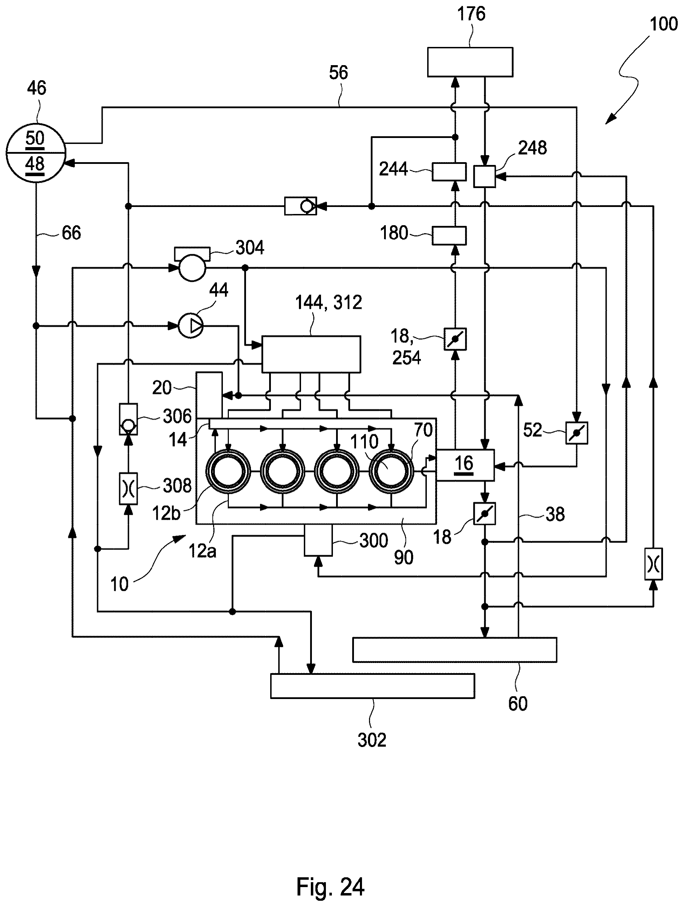

Schließlich zeigt die Fig. 24 ein weiteres Ausführungsbeispiel eines Wärmemanagementsystems 100 für einen Verbrennungsmotor 10. Der Verbrennungsmotor 10 umfasst einen Zylinderblock 90 mit vier Zylinder 70, in denen Kolben 110 des Verbrennungsmotors 10 laufen. Über ein Luftansaugrohr 144 wird Verbrennungsluft in die Zylinder 70 eingebracht. Um die Zylinder 70 sind untere Fluidkammerbereiche 12b und im nicht dargestellten Zylinderkopf 74 sind obere Fluidkammerbereiche 12a angeordnet. Die Fluidkammern 12a und 12b werden über eine Fluidkammer-Einlassleitung 14 durch eine Kühlmittelfördereinrichtung 20 mit Kühlmittel versorgt. Das Kühlmittel wird von einem Kühler 60 über eine Kühlmittelzuführung 38 der Fluidfördereinrichtung 20 zugeführt. Das in der Fluidkammer 12 im Motorblock befindliche Kühlmittel tritt im Zylinderblock 90 aus einer Fluidkammer-Auslassleitung 16 aus. Die Auslassleitung 16 spaltet sich auf, wobei ein erstes Ventil 18 eine Rückführung des Kühlmittels über einen Kühler 60 steuert und ein Ölwärmetauscher-Thermostat 254 eine Rückführung des Kühlmittels über einen Ölwärmetauscher 180 und einen Getriebeöl-Wärmetauscher 244, der mit einem Heizungswärmetauscher 176 verbunden ist, ermöglicht. Ein Kühlerbypassventil 248 ermöglicht eine die Rückführung des Kühlmittels unter Umgehung des Kühlers 60. Durch die verschiedenen Wärmetauscher kann ein selektives Erwärmen oder Kühlung des Kühlmittels gewährleistet werden.

Ein Ausgleichsbehälter 46 mit einer Gasseite 50 und einer Flüssigkeitsseite 48 kann Kühlmittel, das über eine zweite Fluidfördereinrichtung 44 aus dem Kühlmittelkreislauf entnommen oder rückgeführt werden kann, speichern und wieder abgeben. Der Ausgleichsbehälter 46 ist mit seiner Gasseite durch eine Auslassseite-Ausgleichsleitung 56 mit der Kühlmittel-Auslassleitung 16 verbunden. In der Verbindungsleitung 56 zwischen der Gasseite 50 und der Auslassleitung 16 der Fluidkammer 12 ist ein drittes Ventil 52 angeordnet. Das dritte Ventil 52 kann den Fluidstrom des im Ausgleichsbehälter 50 gespeicherten Kühlmittels beim Abpumpen oder Zuführen steuern. So kann das dritte Ventil 52 nach Befüllen der Fluidkammer 12 mit Gas beispielsweise nach einer zeitlichen Verzögerung geschlossen werden, um Gas in der Fluidkammer 12 zu speichern und Kühlmittel im Ausgleichsbehälter 50 zu speichern. Eine Ausgleichsbehälter-Fluidfördereinrichtung-Abgabeleitung 66 verbindet die Flüssigkeitsseite 48 über die zweite Fluidfördereinrichtung 44 mit der Fluidfördereinrichtung 20 zur Rückförderung von Kühlmittelfluid.

Über die Fluidfördereinrichtung-Abgabeleitung 66 ist des Weiteren ein Niedertemperatur-Kühlkreislauf eines Ladeluftkühlers 312 und eines Turboladers 300 mit dem Ausgleisbehälter 46 verbunden. Dieser Niedertemperatur-Kühlkreislauf umfasst eine Niedertemperatur-Kühlmittelpumpe 304 sowie einen Luftladekühler 312 zur Abkühlung der durch den Turbolader 300 komprimierten Luft. Ein Kühler 302 dient zur Kühlung des Kühlmittelfluids im Niedertemperatur-Kühlkreislauf, wobei zur Entlüftung durch Rückführung von Kühlmittel in den Ausgleichsbehälter 46 ein Drosselelement 308 und ein Rückschlagventil 306 im Niedertemperatur-Kühlmittelkreislauf des Ladeluftkühlers 312 und des Turboladers 300 vorgesehen sind. Somit kann Kühlmittelfluid zwischen der Zylinderblockkühlung und der Ladeluftkühlung ausgetauscht und zur Temperaturregelung durch das erfindungsgemäße Wärmemanagementsystem genutzt werden. Dabei kann ein gemeinsamer Ausgleichsbehälter für beide Kühlkreisläufe genutzt werden, wodurch Bauteile und Platzbedarf eingespart werden können.

Das dargestellte Wärmemanagementsystem ermöglicht eine dynamische und ultraschnelle Einstellung der Kühlung und Erwärmung verschiedener Motorbereiche zur Reduzierung von schädlichen Emissionen, sowie Kraftstoffverbrauch und zur Senkung von thermischen Belastungen.

Weiterhin sind folgende Aspekte umfasst:
1. Wärmemanagementverfahren zum Betrieb eines Wärmemanagementsystems (100, 102, 104) eines Verbrennungsmotors (10) umfassend zumindest eine zumindest teilweise in oder um einen Zylinderkopf (74), oder unterhalb eines Zylinderkolbens (110) eines Zylinders (70) des Verbrennungsmotors (10) angeordnete Fluidkammer (12) mit zumindest einer Einlassleitung (14) und zumindest einer Auslassleitung (16), wobei die Fluidkammer (12) mit zumindest einer Kühlmittelfördereinrichtung (20) zur Förderung eines Kühlmittels und mit zumindest einer Wärmesenke verbunden ist, wobei die Wärmesenke insbesondere Umgebungsluft oder ein Kühler ist, wobei bei steigender Temperatur der Fluidkammer (12), insbesondere nach einer Aufwärmphase bei gleichbleibender oder sinkender Motordrehzahl, der Volumenstrom des Kühlmittels durch die Wärmesenke zumindest zeitweise erhöht wird, und bei gleichbleibender oder um maximal 100 Umdrehungen pro Minute steigender Motordrehzahl und bei Reduzierung der Motorlast, um insbesondere zumindest 30%, der Volumenstrom des Kühlmittels durch die Wärmesenke nicht reduziert wird, insbesondere nach zumindest einer Minute nach der Laständerung nicht reduziert wird, und insbesondere innerhalb eines Temperaturbereichs der Fluidkammer (12) von 60°C bis 100°C nicht reduziert wird.
2. Wärmemanagementverfahren nach Aspekt 1, wobei bei steigender Motorlast der Volumenstrom des Kühlmittels durch einen zweiten zumindest teilweise in oder um zumindest einen Zylinder angeordneter unterer Fluidkammerbereich (12b) erhöht wird, und bei abfallender Motorlast der Volumenstrom des Kühlmittels durch den unteren Fluidkammerbereich (12b) reduziert wird, wobei insbesondere die Temperatur im unteren Fluidkammerbereich (12b) zumindest 30°C höher ist als die Temperatur in der Fluidkammer (12) des Zylinderkopf (74).
3. Wärmemanagementverfahren nach einem der vorhergehenden Aspekte, wobei der Volumenstrom des Kühlmittels durch die Fluidkammer (12), insbesondere durch einen unteren Fluidkammerbereich (12b) im Zylinderblock (90), während eines Arbeitsspiels, bevorzugt während des Arbeitstaktes des Zylinders (70) erhöht und reduziert wird, insbesondere durch wechselhaftes Durchströmen der Fluidkammer (12, 12b) mit heißem Abgas und kälterem flüssigen Kühlmittel erhöht und reduziert wird, wobei bevorzugt der Volumenstrom des kälteren flüssigen Kühlmittels beim Verbrennungsbeginn erhöht wird, und nach zumindest 40° Kurbelwinkel nach dem Verbrennungsbeginn reduziert wird.
4. Wärmemanagementverfahren nach einem der vorhergehenden Aspekte, wobei zum Aufwärmen ein erstes Ventil (18) zur Steuerung des Volumenstroms des Kühlmittels durch zumindest eine der Fluidkammern (12, 12b) durch zumindest teilweises Öffnen das Kühlmittel in zumindest eine der Fluidkammern (12, 12b) einführt, sobald eine Motorlast sinkt, insbesondere eine betriebspunktabhängige Motorlast, unterschritten wird und die Temperatur des einströmenden Kühlmittels höher als eine der Fluidkammertemperaturen ist, und/oder dass das erste Ventil (18) zumindest teilweise geschlossen wird, sobald die Temperatur des einströmenden Kühlmittels niedriger als eine der Fluidkammertemperaturen ist, und dass zum Kühlen das erste Ventil (18) zumindest teilweise geöffnet wird, sobald eine Motorlast, steigt, insbesondere oberhalb einer betriebspunktabhängigen Motorlast, und die Temperatur des einströmenden Kühlmittels niedriger ist als eine der Fluidkammertemperaturen und/oder dass das erste Ventil (18) zumindest teilweise geschlossen wird, sobald die Temperatur des einströmenden Kühlmittels höher als die Fluidkammertemperatur ist.
5. Wärmemanagementverfahren nach einem der vorhergehenden Aspekte wobei zumindest ein Abgasventil (164) zur Rückführung von Abgas in den Brennraum (76) bei Erhöhung oder Verringerung einer Motorlast um einen vorbestimmbaren Differenzbetrag weiter als in einem stationären Betriebspunkt, bei dem die Motorlast der jeweiligen momentanen Motorlast während der Motorlaständerung entspricht, geöffnet bzw. geschlossen wird, wobei bevorzugt sich der Differenzbetrag proportional mit der Geschwindigkeit oder Beschleunigung der Motorlaständerung und/oder mit der Öltemperatur und/oder mit der Kühlmitteltemperatur und/oder mit der Abgastemperatur verändert, und dass bevorzugt eine Wärmeabgabe eines Abgasrückführungskühlers (260) vom Abgas an das Kühlmittel erhöht wird.
6. Wärmemanagementverfahren nach einem der vorhergehenden Aspekte, wobei bei einer Strömung von Abgas durch zumindest ein regelbares Abgasventil (164) des Verbrennungsmotors (10), welcher bevorzugt ein Fahrzeug antreibt, insbesondere einen PKW, in Richtung des Brennraums (76) des Zylinders (70) bei gleichbleibender Stellung der Laststelleinheit (26) und bei einer Drehzahl von 50% der Nenndrehzahl der maximale Öffnungsquerschnitt des Abgasventils (164) innerhalb einer Toleranz von maximal 20% des maximalen Öffnungsquerschnittes während eines jeweiligen Arbeitsspiels beträgt, und bei steigender Drehzahl oberhalb einer Motordrehzahl von zumindest 0,5 mal der Nenndrehzahl beibehalten wird und insbesondere einem maximal möglichen Öffnungsquerschnitt des Abgasventils (164) entspricht und/oder bei gleichbleibender Drehzahl und steigender Motorlast innerhalb eines Lastbereichs von insbesondere zwischen 50% bis 75% der maximalen Motorlast der jeweiligen Drehzahl innerhalb einer Toleranz von maximal 20% des maximalen Öffnungsquerschnittes beibehalten wird, und insbesondere dem maximal möglichen Öffnungsquerschnitt des Abgasventils (164) entspricht.
7. Wärmemanagementverfahren nach einem der vorhergehenden Aspekte, wobei die Eigenschaften des Kühlmittels diagnostiziert werden, insbesondere die Dissipationskonstante diagnostiziert wird, und dass eine Motordiagnoseanzeige aktiviert wird, sobald die gemessene Eigenschaft des Kühlmittels um einen Mindestbetrag von einem vorgegebenen Sollwert abweicht, wobei der Sollwert in Abhängigkeit von der Kühlmitteltemperatur variiert, und dass bevorzugt geringfügige Veränderungen der gemessenen Eigenschaften gespeichert werden und der Sollwert an die Veränderungen adaptiert wird, und dass insbesondere der Sollwert nicht adaptiert wird, wenn die Änderung der gemessenen Eigenschaft zwischen Abschalten und Starten des Motors erfolgt, insbesondere wenn die Zeit zwischen Abschalten und Starten des Motors länger als 30 Sekunden beträgt.
8. Wärmemanagementverfahren nach einem der vorhergehenden Aspekte, wobei bei einer positiven Änderung der Motorlast die Leistung zumindest eines Kühlerlüfters und/oder die elektrische Motorlast eines Stromgenerators, insbesondere der Lichtmaschine zumindest für eine befristete Zeit reduziert wird und insbesondere abgeschaltet wird.
9. Wärmemanagementsystem (100, 102, 104) eines Verbrennungsmotors (10) zur Durchführung eines der vorgenannten Wärmemanagementverfahren, umfassend zumindest eine zumindest teilweise um einen Zylinder (70) des Verbrennungsmotors (10) angeordnete Fluidkammer (12), aufweisend zumindest eine Einlassleitung (14) und zumindest eine Auslassleitung (16), wobei die Fluidkammer (12) mit zumindest einer Kühlmittelfördereinrichtung (20) zur Förderung eines Kühlmittels und mit zumindest einer Wärmesenke verbunden ist, wobei die Wärmesenke insbesondere Umgebungsluft oder ein luftdurchströmter Kühler ist, wobei der durch die Kühlmittelfördereinrichtung (20) geförderte Kühlmittelvolumenstrom durch eine Drosseleinrichtung veränderbar ist, insbesondere unabhängig von der Motordrehzahl, wobei die Drosseleinrichtung insbesondere aus zumindest einem ersten Ventil (18) besteht, wobei das erste Ventil (18) mit einer Laststelleinheit (26) zur Einstellung der Motorlast gekoppelt ist wobei das erste Ventil (18) durch die Laststelleinheit (26) derart steuerbar ist, dass ein Volumenstrom des Fluids durch die Fluidkammer (12) erhöht wird, wenn die Motorlast erhöht wird und reduziert wird, wenn die Motorlast reduziert wird, wobei insbesondere ein Zylinderkopftemperatursensor, und/oder ein Fluidkammertemperatursensor (58) umfasst ist, wobei ein Volumenstrom der Kühlmittelfördereinrichtung (20) in Abhängigkeit einer Motordrehzahl, und/oder einer Fluidkammertemperatur und/oder einer Motorlast, insbesondere durch Betätigung zumindest des ersten Ventils (18) zur Steuerung des Volumenstroms des Kühlmittels durch zumindest eine der Fluidkammern (12, 12b), steuerbar ist.
10. Wärmemanagementsystem (100, 102, 104) nach Aspekt 9, wobei eine Motorlaststelleinheit (26), insbesondere ein Gaspedal oder Gasgriff, zur Steuerung einer Kraftstoffzufuhr des Verbrennungsmotors (10) eingerichtet und mechanisch ausgebildet ist, insbesondere ohne ein elektrisch gesteuertes Einspritzventil ausgebildet ist, und eingerichtet ist, eine Kraftstoffzufuhr automatisch abzuschalten, wenn die Motorlaststelleinheit (26) eine minimale Motorlaststellung aufweist, insbesondere wenn sie geschlossen ist, und das Fahrzeug während eines Schubbetriebs verzögert wird, wobei ein Unterdruck in einem Ansaugkanal (144) im Schubbetrieb größer als ein Unterdruck in einem schubfreien Leerlauf ist, oder eine Druckdifferenz zwischen einem Luftansaugrohr (144) und einem Referenzdruck, insbesondere einem Umgebungsdruck, größer als im schubfreien Leerlauf ist.
11. Wärmemanagementsystem (100, 102, 104) nach Aspekt 10, wobei die Motorlaststelleinheit (26) im mechanischen Wirkeingriff mit einer Drosseleinrichtung (28) steht, insbesondere mit einer Drosselklappe oder einem Gasschieber verbunden ist, und die Drosseleinrichtung (28) im Wirkeingriff mit einem Abgasventil (164) steht, wobei das Abgasventil (164) beim Öffnen der Drosseleinrichtung (28) zumindest teilweise geschlossen wird, und eine erste Seite des Abgasventils (164) mit einer Abgasrückführungsleitung (168) des Verbrennungsmotors (10) verbunden ist und Abgas leitet, und eine zweite Seite des Abgasventils (164) über eine Leitung oder Öffnung mit einem Ansaugkanal (144) des Verbrennungsmotors (10) nach und/oder vor der Drosseleinrichtung (28) verbunden ist, und dass im Falle eines Gasschiebers oberhalb vom Abgasventil (164) zumindest eine mit der Abgasrückführungsleitung (168) des Verbrennungsmotors (10) verbundene Abgasöffnung vorhanden ist, die beim Öffnen des Abgasventils (164) zumindest teilweise geschlossen wird und Abgas in einem Raum oberhalb des Abgasventils (164) leitet, und dass vorzugsweise eine mit dem Ansaugkanal (144) des Verbrennungsmotors (10) verbundene Verbindungsleitung stromabwärts und/oder stromaufwärts des Gasschiebers und/oder des Abgasventils (164) vorhanden ist.
12. Wärmemanagementsystem (100, 102, 104) nach einem der vorhergehenden Aspekte 9 bis 11, wobei die Fluidkammer (12) in einen oberen Fluidkammerbereich (12a) und einen unteren Fluidkammerbereich (12b) aufgeteilt ist, wobei bevorzugt der obere Fluidkammerbereich (12a) als Zylinderkopf-Fluidkammer (200) ausgebildet ist, die von dem unteren Fluidkammerbereich (12b), die insbesondere als Zylinderblock-Fluidkammer (202) ausgebildet ist, fluidtechnisch getrennt ist, insbesondere durch eine Zylinderkopfdichtung (208) fluidtechnisch getrennt ist, so dass der Volumenstrom des Kühlmittels durch eine der beiden Fluidkammern (12a, 12b), insbesondere der Zylinderblock-Fluidkammer (202) unabhängig vom Volumenstrom der anderen Fluidkammer, insbesondere der Zylinderkopf-Fluidkammer (200), einstellbar ist, und bevorzugt zumindest einen separaten Zulauf und/oder Ablauf aufweist, wobei die Zylinderblock-Fluidkammer (202) zeitweise mit Gas befüllbar ist, insbesondere durch Abpumpen eines Kühlmittels mit Gas befüllbar ist, und wobei bevorzugt Kühlkreise von Zylinderblock-Fluidkammer (202) und Zylinderblock-Fluidkammer (200) baulich getrennt geführt sind und jeweils mit unterschiedlichen Kühlmittel gefüllt sind, wobei bevorzugt das Kühlmittel in der Zylinderblock-Fluidkammer (202) eine höhere Siedetemperatur als in der Zylinderkopf-Fluidkammer (200) aufweist, und wobei weiterhin bevorzugt die Zylinderblock-Fluidkammer (202) zumindest zwei Fluidkammerbereiche (204, 206) umfasst, mit einer oberen Zylinderblock-Fluidkammer (204), dessen Höhe nur ein Teil eines Zylinderhubes beträgt, insbesondere weniger als 50% eines Zylinderhubes beträgt, und bevorzugt mit der Zylinderkopf-Fluidkammer (200) verbunden ist, und einer unteren Zylinderblock-Fluidkammer (206), in der zumindest ein Teil der unteren Zylinderblock-Fluidkammer (206) in Richtung eines Kolbenhubes unterhalb der oberen Zylinderblock-Fluidkammer (204) angeordnet ist, und dass insbesondere die Temperatur der unteren Fluidkammer (12b) zumindest 40°C höher ist als die Temperatur der Fluidkammer (12)
13. Wärmemanagementsystem (100, 102, 104) nach einem der vorhergehenden Aspekte 9 bis 12, wobei das Kühlmittel in der Fluidkammer (12), insbesondere des unteren Fluidkammerbereichs (12b), bei Umgebungsdruck von einem Bar eine Siedetemperatur von über 130°C und eine Gefriertemperatur von -30°C oder niedriger aufweist, und bevorzugt eine spezifische Wärmekapazität von größer 2,4 kJ / (kg·K) besitzt, wobei bevorzugt das Kühlmittel zumindest weniger als 30% Wasser enthält und insbesondere 94% Propylenglylol umfasst, oder zu insbesondere mindestens 80% aus Ethylenglykol, Propylenglykol, Glycerin oder aus einer beliebigen Mischung dieser Stoffe besteht oder Öl oder Luft ist, und wobei insbesondere zumindest ein Fluidkammertemperatursensor (58) zur Erfassung einer Kühlmitteltemperatur in der Fluidkammer (12), insbesondere in dem unteren Fluidkammerbereich (12b), umfasst ist, und bevorzugt das erste Ventil (18) eingerichtet ist, einen Volumenstrom des Kühlmittels durch zumindest eine der Fluidkammern (12, 12b) zu reduzieren, wenn die Fluidkammertemperatur nach Überschreiten einer Grenztemperatur 120°C diese Grenztemperatur wieder unterschreitet.
14. Wärmemanagementsystem (100, 102, 104) nach einem der vorhergehenden Aspekte 9 bis 13, wobei die Fluidkammer (12), insbesondere der untere Fluidkammerbereich (12b), mit einem Ausgleichsbehälter (46) verbunden ist, dessen Flüssigkeitsseite (48) zumindest teilweise mit einem ersten flüssigen Fluid und dessen Gasseite (50) mit einem zweiten gasförmigen Fluid gefüllt ist, wobei die Gasseite (50) des Ausgleichsbehälter (46) und die Flüssigkeitsseite (48) des Ausgleichsbehälters (46) jeweils über eine Verbindungsleitung (56, 66) mit der Fluidkammer (12, 12b) verbunden sind, wobei bei sinkender Motorlast, insbesondere bei Unterschreiten einer vorbestimmten Motorlast, insbesondere einer betriebspunktabhängigen Motorlast und/oder bei Unterschreiten einer Motortemperatur, das erste Fluid zumindest teilweise aus der Fluidkammer (12, 12b) in den Ausgleichsbehälter (46) verschoben wird, so dass das zweite Fluid aus dem Ausgleichsbehälter (46) zumindest teilweise in die Fluidkammer (12, 12b) verschoben wird und wobei bevorzugt das zweite Fluid einen Sauerstoffanteil von weniger als 20% besitzt.
15. Wärmemanagementsystem (100, 102, 104) nach Aspekt 14, wobei die Flüssigkeitsseite (48) des Ausgleichsbehälters (46) insbesondere durch ein zweites Ventil (42), und durch eine zweite Fluidfördereinrichtung (44) und bevorzugt mit einem Einlassleitungsventil (62), mit der Einlassleitung (14) der Fluidkammer (12), insbesondere des unteren Fluidkammerbereichs (12b), verbunden ist, wobei bevorzugt das Einlassleitungsventil und das zweite Ventil (62, 42) als ein einzelnes 3/2 Wegeventil ausgeführt sind, und wobei weiterhin bevorzugt zumindest die Kühlmittelfördereinrichtung (20) und/oder die zweite Fluidfördereinrichtung (44) eine bidirektionale Pumpe, insbesondere eine elektrische Pumpe ist, wobei bei sinkender Motorlast, insbesondere bei Unterschreiten einer vorbestimmten betriebspunktabhängigen Motorlast und/oder bei Unterschreiten einer Motortemperatur, das zweite Ventil (42) zumindest teilweise geöffnet wird, und ein Einlassleitungsventil (62) zur Steuerung des Volumenstroms des Kühlmittels durch die Fluidkammer (12, 12b) zumindest teilweise geschlossen wird, und das erste Fluid aus der Fluidkammer (12, 12b) in den Ausgleichsbehälter (46) gepumpt wird, bis die Fluidkammer (12, 12b) zumindest teilweise mit dem zweiten Fluid gefüllt ist, und dass beim Steigen der Motorlast, insbesondere beim Überschreiten einer vorbestimmten betriebspunktabhängigen Motorlast, das zweite Ventil (42) zumindest teilweise geschlossen und das Einlassleitungsventil (62) zumindest teilweise geöffnet wird.
16. Wärmemanagementsystem (100, 102, 104) nach Aspekt 14 oder 15, wobei in der Verbindungsleitung (56) zwischen der Gasseite (50) und einer Auslassleitung (16) der Fluidkammer (12), insbesondere des unteren Fluidkammerbereichs (12b), ein drittes Ventil (52) angeordnet ist, durch das ein Fluidstrom des zweiten Fluids beim Abpumpen des ersten Fluids aus der Fluidkammer (12, 12b) in den Ausgleichsbehälter (46) und/oder beim Befüllen der Fluidkammer (12, 12b) mit dem ersten Fluides geöffnet wird und/oder dass das dritte Ventil (52) nach Befüllen der Fluidkammer (12, 12b) mit dem ersten Fluid zumindest teilweise geschlossen wird, insbesondere nach einer zeitlichen Verzögerung geschlossen wird.
17. Wärmemanagementsystem (100, 102, 104) nach einem der vorhergehenden Aspekte 9 bis 16, wobei zumindest Teilbereiche der vom Kühlmittel zu einer Zylinderwand (92) eines Zylinders (70) abgegrenzten und nach außen gerichteten Fläche der Fluidkammer (12), insbesondere des unteren Fluidkammerbereichs (12b), mit einer innen liegenden Isolierschicht (94) versehen ist, wobei die Isolierschicht (94) zumindest abschnittsweise an einer nach außen gerichteten Fläche der Fluidkammer (12, 12b) anliegt, und bevorzugt mehrteilig ausgeführt ist, wobei bevorzugt die Isolierschicht (94) zur nach außen gerichteten Fläche der Fluidkammer (12, 12b) vorgespannt ist, so dass die Isolierschicht (94) zur Mittellinie des Zylinders (70) einen größeren Radius als die nach außen gerichtete Fläche der Fluidkammer (12, 12b) aufweist, oder dass die Isolierschicht (94) nach innen durch punktartige Abstandshalter zur Zylinderwand (92) beabstandet ist, und dass die Isolierschicht (94) bevorzugt zwei Materialien mit unterschiedlichen Wärmeausdehnungskoeffizienten, insbesondere einen Bimetallträger (96), umfasst, wobei ein Wärmeausdehnungskoeffizient des außen angeordneten Materials größer ist als ein Wärmeausdehnungskoeffizient des innen liegenden Materials, so dass sich die Isolierschicht (94) zumindest an Endbereichen bei Erwärmung inwärts krümmt und eine Kontaktfläche mit der nach außen gerichteten Fläche der Fluidkammer (12, 12b) verringert, so dass der Wärmeübergangskoeffizient nach außen erhöht ist, und dass insbesondere benachbarte Isolierschichten (94) an Endbereichen überlappen.
18. Wärmemanagementsystem (100, 102, 104) nach einem der vorhergehenden Aspekte 9 bis 17, wobei mindestens ein Kühlmittelwärmespeicher, bevorzugt ein Ausgleichsbehälter (46), umfasst ist, der mit der Fluidkammer (12), insbesondere mit dem unteren Fluidkammerbereich (12b), und mit einem Ölwärmetauscher (180) verbunden ist, wobei bei einem Kaltstart heißes Kühlmittel aus dem Kühlmittelwärmespeicher durch den Ölwärmetauscher (180) förderbar ist, insbesondere wenn die Fluidkammer (12, 12b) nicht vom Kühlmittel durchströmt wird, und dass insbesondere in einem warmen Betriebszustand heißes Kühlmittel von der Fluidkammer (12, 12b) in den Kühlmittelwärmespeicher förderbar ist.
19. Wärmemanagementsystem (100, 102, 104) nach einem der vorhergehenden Aspekte 9 bis 18, wobei in einem Steg (274) zwischen Brennräumen (76) benachbarter Zylinder (70) zumindest eine erste Kühlmittel-Durchtrittsöffnung (270) zum Kühlmittelaustausch zwischen der jeweils der Druck- und Gegendruckseite des Kolbens (110) zugewandten Seite im Zylinderblock (90) und/oder Zylinderkopf (74) angeordnet ist, und/oder in der Mitte zwischen zwei benachbarten Auslassventilen (266) eines Zylinders (70) in der Ebene durch die Mittellinien der beiden Auslassventile (266) eine zweite Kühlmittel-Durchtrittsöffnung (272) angeordnet ist, wobei eine Strömungsgeschwindigkeit in zumindest einer der Kühlmittel-Durchtrittsöffnungen (270, 272) durch Reduzierung zumindest eines Strömungsquerschnittes der Zylinderkopf-Fluidkammer (12, 12a, 200) und/oder der Zylinderblock-Fluidkammer (12, 12b, 202, 204) in Richtung parallel zur Kühlmittel-Durchtrittsöffnung (270, 272) erhöht wird, wobei bevorzugt die Kühlmittel-Durchtrittsöffnung (270, 272) mindestens 10% des minimalen Gesamtquerschnittes der Zylinderkopf-Fluidkammer (12, 12a, 200) in der Ebene durch die Mittellinien der beiden Auslassventile (266) beträgt.
20. Wärmemanagementsystem (100, 102, 104) nach einem der vorhergehenden Aspekte 9 bis 19, wobei am Getriebeölsumpf (242) eines mit dem Verbrennungsmotor (10) verbunden Getriebemechanik (240) eines Getriebes (80) und/oder am Hinterachsdifferential ein externer, im Kühlkreislauf des Verbrennungsmotors (10) eingebundener Getriebeölwärmetauscher (244) im Ölkreislauf angeordnet ist, der vorzugsweise im Kühlkreislauf zwischen Verbrennungsmotor (10) und Kühler (60) angeordnet ist, wobei stromabwärts vom Getriebeölwärmetauscher (244) im Kühlmittelkreislauf eine Kühlerbypassleitung (246) mit einem Kühlerbypassventil (248) zur Umgehung des Kühlers (60) angeordnet ist, so dass der Getriebeölwärmetauscher (244) zumindest teilweise ohne Kühlerdurchströmung betreibbar ist, wobei die Getriebemechanik (240) vorzugsweise als ölpumpenloses Schaltgetriebe ausgebildet ist und bevorzugt der Getriebeölwärmetauscher (244) eine Außenisolierung (250) aufweist, und wobei bevorzugt ein Außengehäuse des Getriebeölwärmetauscher (244) aus Kunststoff ausgeführt ist und wobei weiterhin bevorzugt der Getriebeölwärmetauscher (244) an der Getriebemechanik (240) angeklebt ist.
21. Wärmemanagementsystem (100, 102, 104) nach einem der vorhergehenden Aspekte 9 bis 20, wobei ein Ausgleichsbehälter (46) des Kühlsystems als hochisolierter Wärmespeicher ausgeführt und mit Kühlmittel und mit Gas gefüllt ist, wobei ein Ablauf (190) des Ausgleichsbehälters (46) unten angeordnet ist und ein Zulauf (188) insbesondere in eine Verschlusskappe des Ausgleichsbehälters (46) integriert ist, und insbesondere im Innenvolumen des Ausgleichsbehälters (46) unterhalb des Sollfüllstands horizontal angeordnete Trennwände (196) angeordnet sind, die wechselseitig an einer Seite von unten nach oben eine Strömungsöffnung freigeben, so dass eine labyrinthartiger Strömungskanal (186) des Kühlmittels von der Oberfläche nach unten definiert ist.
22. Wärmemanagementsystem (100, 102, 104) nach einem der vorhergehenden Aspekte 9 bis 21, wobei der Brennraum (76) des Zylinders (70) eine vom Brennraum (76) getrennte Expansionskammer (134) aufweist, die zumindest durch ein Expansionskammerventil (136), insbesondere ein Überdruckventil, mit dem Brennraum (76) verbunden ist, wobei das Expansionskammerventil (136) bei einer Erhöhung des Brennraumdruckes geöffnet wird und bei einer Reduzierung des Brennraumdruckes geschlossen wird, und wobei bevorzugt die Expansionskammer (134) in einem Kolben (110) angeordnet ist und weiterhin bevorzugt die Expansionskammer ein zweites Expansionskammerventil (138) aufweist, wobei das zweite Expansionskammerventil (138) durch Massenträgheit geöffnet werden kann, insbesondere nach zumindest 90° Kurbeiwinkel nach dem oberen Totpunkt geöffnet werden kann, wobei weiterhin bevorzugt im Kolben (110) unterhalb der Expansionskammer (134) eine Isolierschicht (114) angeordnet ist.
23. Wärmemanagementsystem (100, 102, 104) nach einem der vorhergehenden Aspekte 9 bis 22, wobei zumindest eine in dem Brennraum (76) angeordneten Wärmequelle, insbesondere eine Glühkerze umfasst ist, und dass die Wärmequelle bei einem Kaltstart insbesondere bei einer Motortemperatur unterhalb 30°C eingeschaltet wird und zumindest zeitweise länger als zumindest 5 Minuten eingeschaltet bleibt und insbesondere bei einer Kühlmitteltemperatur von über 80° eingeschaltet bleibt und dass weiterhin die Wärmequelle insbesondere bei einem Warmstart bei einer Kühlmitteltemperatur von über 80°C eingeschaltet wird, wobei bevorzugt die Wärmequelle innerhalb eines Verbrennungszyklus jeweils zumindest einmal eingeschaltet und ausgeschaltet wird, wobei insbesondere die Wärmequelle insbesondere im Arbeitstakt eingeschaltet wird und nach dem Arbeitstakt abgeschaltet wird.
24. Wärmemanagementsystem (100, 102, 104) nach einem der vorhergehenden Aspekte 9 bis 23, wobei zumindest abschnittsweise eine Außenwand eines hochisolierten Ölwärmespeichers durch einen Teil einer Ölwanne ausgebildet ist, insbesondere die Ölwanne selbst ist, und zumindest abschnittsweise die Außenwand des hochisolierten Ölwärmespeichers aus Kunststoff ausgeführt ist.
25. Wärmemanagementsystem (100, 102, 104) nach einem der vorhergehenden Aspekte 9 bis 24, wobei die Fluidkammer (12) als eine von einem Kolben (110) zum Brennraum (76) eines Zylinders (70) abgetrennter Kurbelgehäuseraum ausgebildet ist, und bevorzugt das Kühlmittel Motoröl ist, und weiterhin bevorzugt ein erstes Ventil (18) zur Steuerung eines Kühlmittelstroms durch die Fluidkammer (12) ein Überdruckventil ist, wobei ein Öffnen und Schließen des Überdruckventils durch eine Öldrucksteuerung bewirkt wird, insbesondere durch eine Steuerung einer Ölpumpe bewirkt wird.
26. Wärmemanagementsystem (100, 102, 104) nach einem der vorhergehenden Aspekte 9 bis 25, wobei ein Abgasrückführungskühler (260) und eine Entnahmestelle (262) der Abgasrückführung im Abgaskanal (264) des Zylinderkopfes (74) oberhalb der Unterkante zumindest eines Abgas-Auslassventils (266) eines Brennraums (76) des Zylinders (70) angeordnet sind, wobei zumindest ein Teil der Abgasleitungen (24) des Abgasrückführungskühlers (262) sowie die Abgasrückführungsleitung (168) zwischen der Entnahmestelle (262) im Abgaskanal (264) des Zylinderkopfes (74) und des Abgasrückführungskühlers (260) ein Gefälle in Richtung des Abgas-Auslassventils (266) aufweisen, so dass Kühlmittelkondensat (280) aus dem Abgasrückführungskühler (260) auf das Abgas-Auslassventil (266) zurücklaufen kann, und dass bevorzugt durch Kühlmittelleitungen (268) der Abgasrückführungskühler (260) mit einem Kühlmittel mit einer Temperatur von zumindest zeitweise unterhalb 70°C betrieben wird, um eine Bildung des Kühlmittelkondensats (280) in dem Abgasrückführungskühler (260) zu begünstigen, und dass insbesondere durch Regelung der Temperatur des durch die Kühlmittelleitungen (268) den Abgasrückführungskühler (260) durchströmenden Kühlmittels die dem Brennraum (76) während der Ventilüberschneidungsphase zugeführte Kühlmittelkondensatmenge einstellbar ist.
27. Wärmemanagementsystem nach einem der vorhergehenden Aspekte 9 bis 26, wobei der Verbrennungsmotor (10) zumindest eine regelbare Abgasdrosselklappe (290) umfasst, und dass der Öffnungsquerschnitt der Abgasdrosselklappe (290) bei gleichbleibender Stellung der Laststelleinheit (26) bei einer Drehzahl von 50% der Nenndrehzahl der minimale Öffnungsquerschnitt der Abgasdrosselklappe (290) innerhalb einer Toleranz von maximal 20% des minimalen Öffnungsquerschnittes bei steigender Drehzahl oberhalb einer Motordrehzahl von zumindest 50% der Nenndrehzahl beibehalten wird und/oder bei gleichbleibender Drehzahl und steigender Motorlast innerhalb eines Lastbereichs zwischen 50% bis 75% der maximalen Motorlast der jeweiligen Drehzahl innerhalb einer Toleranz von maximal 20% des minimalen Öffnungsquerschnittes beibehalten wird.

### Bezugszeichenliste

- 10: Verbrennungsmotor
- 12: Fluidkammer
- 12a: Oberer Fluidkammerbereich
- 12b: Unterer Fluidkammerbereich
- 14: Fluidkammer-Einlassleitung
- 16: Fluidkammer-Auslassleitung
- 18: Erstes Ventil
- 20: Kühlmittelfördereinrichtung
- 22: Ansaugleitung
- 24: Abgasleitung
- 26: Motorlaststelleinheit
- 28: Drosseleinrichtung
- 30: Motorlast-Ventilsteuerleitung
- 32: Motorlaststeuerleitung
- 34: Arbeitstakt-Erfassungseinrichtung
- 36: Arbeitstakt-Ventilsteuerleitung
- 38: Kühlmittelzuführung
- 40: Arbeitstaktsensor
- 42: Zweites Ventil
- 44: Zweite Fluidfördereinrichtung
- 46: Ausgleichsbehälter
- 48: Flüssigkeitsseite des Ausgleichsbehälters
- 50: Gasseite des Ausgleichsbehälters
- 52: Drittes Ventil
- 54: Kühlmittel-Rückschlagventil
- 56: Auslassseite-Ausgleichsleitung
- 58: Fluidkammertemperatursensor
- 60: Kühler
- 62: Einlassleitungsventil
- 62a: Erstes Einlassleitungsventil
- 62b: Zweites Einlassleitungsventil
- 62c: Drittes Einlassleitungsventil
- 64: Entlüftungsleitung zum Kühler
- 66: Ausgleichsbehälter-Fluidfördereinrichtung-Abgabeleitung

- 70: Zylinder
- 72: Ventilhaube
- 74: Zylinderkopf
- 76: Brennraum
- 78: Kolbenbereich
- 80: Getriebe
- 82: Kurbelwellenbereich
- 84: Kühlmittelrückführung
- 86: Getriebeabdeckung
- 88: Zylinderlaufbuchse
- 90: Zylinderblock
- 92: Zylinderwand
- 94: Isolierschicht
- 96: Bimetallträger
- 98: Kühlmittelstrom
- 100: Wärmemanagementsystem
- 102: Wärmemanagementsystem
- 104: Wärmemanagementsystem
- 110: Kolben
- 112: Phasenwechselmaterialschicht
- 114: Isolierungsschicht
- 116: Pleuelachse
- 118: Thermische Belastung
- 120: Kühlmittelleitung
- 122: Dichtung
- 124: Gasraum / Luftisolierung
- 126: Strukturumgebung - Ölgalleriewandung
- 128: Kühlmittelstromrichtung / Ölstromrichtung
- 130: Innenisolierungseinsatz
- 132: Kurbellager-Ölauslass
- 134: Expansionskammer
- 136: Massenträgheits-Expansionskammerventil
- 138: Druckausgleichsventil
- 140: Vergaser
- 142: Inneres Rohr
- 144: Luftansaugrohr
- 146: Schwimmerkammer
- 148: Vakuumventil
- 150: Treibstoffstrom
- 152: Treibstoff-Luftstrom
- 154: Leerlaufdüse

- 160: Abgasrückführungsvergaser
- 162: Abgasstrom
- 164: Abgasventil
- 166: Luftkammer
- 168: Abgasrückführungsleitung
- 170: Abgas-Gas-Mischraum

- 176: Heizungswärmetauscher
- 178: elektrischen Zusatzheizer
- 180: Ölwärmetauscher

- 184: Hochisolierende Wärmeisolierung des Ausdehungsgefäßes
- 186: Labyrinthartiger Fluidkanal
- 188: Zulauf des Ausgleichsbehälters
- 190: Ablauf des Ausgleichsbehälters
- 192: Ölzulauf
- 194: Ölablauf
- 196: Trennwände

- 200: Zylinderkopf-Fluidkammer
- 202: Zylinderblock-Fluidkammer
- 204: Oberer Zylinderblock Fluidkammerbereiche
- 206: Unterer Zylinderblock Fluidkammerbereiche
- 208: Zylinderkopfdichtung
- 210: Gasisolierungsschicht
- 212: Kühlmediumschicht

- 220: Ölwärmetauscher-Zuführleitung
- 222: Ölwärmetauscher-Abflussleitung
- 224: Ölwärmetauscher-Ventil
- 226: Ölfilter & Ölkühler
- 230: Wärmemanagementsystem
- 240: Getriebemechanik
- 242: Getriebeölsumpf
- 244: Getriebeölwärmetauscher
- 246: Kühlerbypassleitung
- 248: Kühlerbypassventil
- 250: Außenisolierung
- 252: Getriebewärmetauscher-Kühlerrückleitung
- 254: Getriebewärmetauscher-Thermostat

- 260: Abgasrückführungskühlers
- 262: Abgaskanal-Entnahmestelle
- 264: Abgaskanal
- 266: Abgas-Auslassventil des Zylinders
- 268: Abgasrückführungskühler-Kühlmittelleitung
- 270: erste Kühlmittel-Durchtrittsöffnung
- 272: zweite Kühlmittel-Durchtrittsöffnung
- 274: Steg

- 280: Kühlmittelkondensat

- 300: Turbolader
- 302: Kühler für Turbolader
- 304: Niedertemperatur-Kühlmittelpumpe
- 306: Rückschlagventil für Niedertemperatur-Kühlkreislauf
- 308: Drosselelement für Niedertemperatur-Kühlkreislauf
- 312: Ladeluftkühler

## Patentansprüche

1. Wärmemanagementverfahren zum Betrieb eines Wärmemanagementsystems (100, 102, 104) eines Verbrennungsmotors (10) umfassend zumindest eine zumindest teilweise in einem Zylinderblock (90) und zumindest teilweise in einem Zylinderkopf (74) des Verbrennungsmotors (10) angeordnete Fluidkammer (12) mit zumindest einer Einlassleitung (14) und zumindest einer Auslassleitung (16), wobei die Fluidkammer (12) mit zumindest einer Kühlmittelfördereinrichtung (20) zur Förderung eines flüssigen Kühlmittels und mit zumindest einer Wärmesenke verbunden ist, wobei ein durch die Fluidkammer (12) und durch die Wärmesenke geförderte Kühlmittelvolumenstrom unabhängig von einer Motordrehzahl durch eine Drosseleinrichtung veränderbar ist, wobei die Drosseleinrichtung aus zumindest einem ersten Ventil (18) besteht, wobei das erste Ventil (18) mit einer Laststelleinheit (26) zur Einstellung der Motorlast angesprochen wird, wobei ein Fluidkammertemperatursensor (58) umfasst ist, wobei der Kühlmittelvolumenstrom durch die Fluidkammer (12) und durch die Wärmesenke in Abhängigkeit der Motordrehzahl, einer Fluidkammertemperatur und einer Motorlast durch Betätigung zumindest des ersten Ventils (18) zur Steuerung des Kühlmittelvolumenstroms durch die Fluidkammer (12) und durch die Wärmesenke, steuerbar ist, wobei bei steigender Temperatur der Fluidkammer (12), insbesondere nach einer Aufwärmphase bei gleichbleibender oder sinkender Motordrehzahl, der Kühlmittelvolumenstrom durch die Fluidkammer (12) und durch die Wärmesenke zumindest zeitweise erhöht wird,
**dadurch gekennzeichnet, dass**
bei gleichbleibender oder um maximal 100 Umdrehungen pro Minute steigender Motordrehzahl und bei Reduzierung der Motorlast, der Kühlmittelvolumenstrom durch die Fluidkammer (12) und durch die Wärmesenke im Zylinderbereich innerhalb einer Minute zumindest gleich hoch wie eine Minute zuvor, bevor die Last reduziert wurde, und insbesondere innerhalb eines Temperaturbereichs der Fluidkammer (12) von 60°C bis 100°C, bleibt, wobei die Fluidkammer (12) in einen oberen Fluidkammerbereich (12a) und einen unteren Fluidkammerbereich (12b) aufgeteilt ist, wobei die Fluidkammerbereiche baulich getrennt selektiv oder gemeinsam von dem Kühlmittel durchströmt werden können.

2. Wärmemanagementverfahren nach Anspruch 1, **dadurch gekennzeichnet, dass** die Reduzierung der Motorlast 30 % beträgt.

3. Wärmemanagementverfahren nach einem der vorhergehenden Ansprüche, **dadurch gekennzeichnet, dass** die Eigenschaften des Kühlmittels diagnostiziert werden, insbesondere die Dissipationskonstante diagnostiziert wird, und dass eine Motordiagnoseanzeige aktiviert wird, sobald die gemessene Eigenschaft des Kühlmittels um einen Mindestbetrag von einem vorgegebenen Sollwert abweicht, wobei der Sollwert in Abhängigkeit von der Kühlmitteltemperatur variiert, und dass bevorzugt geringfügige Veränderungen der gemessenen Eigenschaften gespeichert werden und der Sollwert an die Veränderungen adaptiert wird, und dass insbesondere der Sollwert nicht adaptiert wird, wenn die Änderung der gemessenen Eigenschaft zwischen Abschalten und Starten des Motors erfolgt, insbesondere wenn die Zeit zwischen Abschalten und Starten des Motors länger als 30 Sekunden beträgt.

4. Wärmemanagementverfahren nach einem der vorhergehenden Ansprüche, **dadurch gekennzeichnet, dass** bei einer positiven Änderung der Motorlast die Leistung zumindest eines Kühlerlüfters und/oder die elektrische Motorlast eines Stromgenerators, insbesondere der Lichtmaschine zumindest für eine befristete Zeit reduziert wird und insbesondere abgeschaltet wird.

5. Verbrennungsmotor (10) mit einem Wärmemanagementsystem (100, 102, 104) zur Durchführung eines Wärmemanagementverfahrens gemäß einem der Ansprüche 1 bis 4, umfassend zumindest eine zumindest teilweise in einem Zylinderblock (90) und zumindest teilweise in einem Zylinderkopf (74) des Verbrennungsmotors (10) angeordnete Fluidkammer (12), aufweisend zumindest eine Einlassleitung (14) und zumindest eine Auslassleitung (16), wobei die Fluidkammer (12) mit zumindest einer Kühlmittelfördereinrichtung (20) zur Förderung eines flüssigen Kühlmittels und mit zumindest einer Wärmesenke verbunden ist, wobei ein durch die Fluidkammer (12) und durch die Wärmesenke geförderter Kühlmittelvolumenstrom unabhängig von einer Motodrehzahl durch eine Drosseleinrichtung veränderbar ist, wobei die Drosseleinrichtung aus zumindest einem ersten Ventil (18) besteht, wobei das erste Ventil (18) mit einer Laststelleinheit (26) zur Einstellung der Motorlast angesprochen wird, wobei ein Fluidkammertemperatursensor (58) umfasst ist, wobei der Kühlmittelvolumenstrom durch die Fluidkammer (12) und durch die Wärmesenke in Abhängigkeit der Motordrehzahl, und einer Fluidkammertemperatur und einer Motorlast durch Betätigung zumindest des ersten Ventils (18) zur Steuerung des Kühlmittelvolumenstroms durch die Fluidkammer (12) und durch die Wärmesenke, steuerbar ist, wobei bei steigender Temperatur der Fluidkammer (12), insbesondere nach einer Aufwärmphase bei gleichbleibender oder sinkender Motordrehzahl, der Kühlmittelvolumenstrom durch die Fluidkammer (12) und durch die Wärmesenke zumindest zeitweise erhöht wird, **dadurch gekennzeichnet, dass** bei gleichbleibender oder um maximal 100 Umdrehungen pro Minute steigender Motordrehzahl und bei Reduzierung der Motorlast, der Kühlmittelvolumenstrom durch die Fluidkammer (12) und durch die Wärmesenke im Zylinderbereich innerhalb einer Minute zumindest gleich hoch wie 1 Minute zuvor, bevor die Last reduziert wurde, und insbesondere innerhalb eines Temperaturbereichs der Fluidkammer (12) von 60°C bis 100°C, bleibt, wobei die Fluidkammer (12) in einen oberen Fluidkammerbereich (12a) und einen unteren Fluidkammerbereich (12b) aufgeteilt ist, wobei die Fluidkammer (12) in einen oberen Fluidkammerbereich (12a) und einen unteren Fluidkammerbereich (12b) aufgeteilt ist, wobei die Fluidkammerbereiche baulich getrennt selektiv oder gemeinsam von dem Kühlmittel durchströmt werden können.

6. Verbrennungsmotor (10) nach Anspruch 5, **dadurch gekennzeichnet, dass** das Kühlmittel in der Fluidkammer (12), bei Umgebungsdruck von einem Bar eine Siedetemperatur von über 130°C und eine Gefriertemperatur von -30°C oder niedriger aufweist, und bevorzugt eine spezifische Wärmekapazität von größer 2,4 kJ / (kg·K) besitzt, wobei bevorzugt das Kühlmittel zumindest weniger als 30% Wasser enthält und insbesondere 94% Propylenglylol umfasst, oder zu insbesondere mindestens 80% aus Ethylenglykol, Propylenglykol, Glycerin oder aus einer beliebigen Mischung dieser Stoffe besteht ist, und bevorzugt das erste Ventil (18) eingerichtet ist, den Kühlmittelvolumenstrom durch die Fluidkammer (12) und durch die Wärmesenke zu reduzieren, wenn die Fluidkammertemperatur nach Überschreiten einer Grenztemperatur ≥ 120°C diese Grenztemperatur wieder unterschreitet.

7. Verbrennungsmotor (10) nach einem der vorhergehenden Ansprüche 5 oder 6, **dadurch gekennzeichnet, dass** zumindest Teilbereiche der vom Kühlmittel zu einer Zylinderwand (92) eines Zylinders (70) abgegrenzten und nach außen gerichteten Fläche der Fluidkammer (12), mit einer innen liegenden Isolierschicht (94) versehen ist, wobei die Isolierschicht (94) zumindest abschnittsweise an einer nach außen gerichteten Fläche der Fluidkammer (12) anliegt, und bevorzugt mehrteilig ausgeführt ist, wobei bevorzugt die Isolierschicht (94) zur nach außen gerichteten Fläche der Fluidkammer (12) vorgespannt ist, so dass die Isolierschicht (94) zur Mittellinie des Zylinders (70) einen größeren Radius als die nach außen gerichtete Fläche der Fluidkammer (12) aufweist, oder dass die Isolierschicht (94) nach innen durch punktartige Abstandshalter zur Zylinderwand (92) beabstandet ist, und dass die Isolierschicht (94) bevorzugt zwei Materialien mit unterschiedlichen Wärmeausdehnungskoeffizienten, insbesondere einen Bimetallträger (96), umfasst, wobei ein Wärmeausdehnungskoeffizient des außen angeordneten Materials größer ist als ein Wärmeausdehnungskoeffizient des innen liegenden Materials, so dass sich die Isolierschicht (94) zumindest an Endbereichen bei Erwärmung inwärts krümmt und eine Kontaktfläche mit der nach außen gerichteten Fläche der Fluidkammer (12) verringert, so dass der Wärmeübergangskoeffizient nach außen erhöht ist, und dass insbesondere benachbarte Isolierschichten (94) an Endbereichen überlappen.

8. Verbrennungsmotor (10) nach einem der vorhergehenden Ansprüche 5 bis 7, **dadurch gekennzeichnet, dass** mindestens ein Kühlmittelwärmespeicher, bevorzugt ein Ausgleichsbehälter (46), umfasst ist, der mit der Fluidkammer (12), und mit einem Ölwärmetauscher (180) verbunden ist, wobei bei einem Kaltstart heißes Kühlmittel aus dem Kühlmittelwärmespeicher durch den Ölwärmetauscher (180) förderbar ist, insbesondere wenn die Fluidkammer (12) nicht vom Kühlmittel durchströmt wird, und dass insbesondere in einem warmen Betriebszustand heißes Kühlmittel von der Fluidkammer (12) in den Kühlmittelwärmespeicher förderbar ist.

9. Verbrennungsmotor (10) nach einem der vorhergehenden Ansprüche 5 bis 8, **dadurch gekennzeichnet, dass** in einem Steg (274) zwischen Brennräumen (76) benachbarter Zylinder (70) zumindest eine erste Kühlmittel-Durchtrittsöffnung (270) zum Kühlmittelaustausch zwischen der jeweils der Druck- und Gegendruckseite des Kolbens (110) zugewandten Seite im Zylinderblock (90) und/oder Zylinderkopf (74) angeordnet ist, und/oder in der Mitte zwischen zwei benachbarten Auslassventilen (266) eines Zylinders (70) in der Ebene durch die Mittellinien der beiden Auslassventile (266) eine zweite Kühlmittel-Durchtrittsöffnung (272) angeordnet ist, wobei eine Strömungsgeschwindigkeit in zumindest einer der Kühlmittel-Durchtrittsöffnungen (270, 272) durch Reduzierung zumindest eines Strömungsquerschnittes der Zylinderkopf-Fluidkammer (12, 12a, 200) und/oder der Zylinderblock-Fluidkammer (12, 12b, 202, 204) in Richtung parallel zur Kühlmittel-Durchtrittsöffnung (270, 272) erhöht wird, wobei bevorzugt die Kühlmittel-Durchtrittsöffnung (270, 272) mindestens 10% des minimalen Gesamtquerschnittes der Zylinderkopf-Fluidkammer (12, 12a, 200) in der Ebene durch die Mittellinien der beiden Auslassventile (266) beträgt.

10. Verbrennungsmotor (10) nach einem der vorhergehenden Ansprüche 5 bis 9, **dadurch gekennzeichnet, dass** am Getriebeölsumpf (242) eines mit dem Verbrennungsmotor (10) verbunden Getriebemechanik (240) eines Getriebes (80) und/oder am Hinterachsdifferential ein externer, im Kühlkreislauf des Verbrennungsmotors (10) eingebundener Getriebeölwärmetauscher (244) im Ölkreislauf angeordnet ist, der vorzugsweise im Kühlkreislauf zwischen Verbrennungsmotor (10) und Kühler (60) angeordnet ist, wobei stromabwärts vom Getriebeölwärmetauscher (244) im Kühlmittelkreislauf eine Kühlerbypassleitung (246) mit einem Kühlerbypassventil (248) zur Umgehung des Kühlers (60) angeordnet ist, so dass der Getriebeölwärmetauscher (244) zumindest teilweise ohne Kühlerdurchströmung betreibbar ist, wobei die Getriebemechanik (240) vorzugsweise als ölpumpenloses Schaltgetriebe ausgebildet ist und bevorzugt der Getriebeölwärmetauscher (244) eine Außenisolierung (250) aufweist, und wobei bevorzugt ein Außengehäuse des Getriebeölwärmetauscher (244) aus Kunststoff ausgeführt ist und wobei weiterhin bevorzugt der Getriebeölwärmetauscher (244) an der Getriebemechanik (240) angeklebt ist.

11. Verbrennungsmotor (10) nach einem der vorhergehenden Ansprüche 5 bis 10, **dadurch gekennzeichnet, dass** ein Ausgleichsbehälter (46) des Kühlsystems als hochisolierter Wärmespeicher ausgeführt und mit Kühlmittel und mit Gas gefüllt ist, wobei ein Ablauf (190) des Ausgleichsbehälters (46) unten angeordnet ist und ein Zulauf (188) insbesondere in eine Verschlusskappe des Ausgleichsbehälters (46) integriert ist, und insbesondere im Innenvolumen des Ausgleichsbehälters (46) unterhalb des Sollfüllstands horizontal angeordnete Trennwände (196) angeordnet sind, die wechselseitig an einer Seite von unten nach oben eine Strömungsöffnung freigeben, so dass eine labyrinthartiger Strömungskanal (186) des Kühlmittels von der Oberfläche nach unten definiert ist.
